# EUROPEAN PATENT SPECIFICATION

(11) **EP 4 221 170 B1**
(45) Date of publication and mention of the grant of the patent: **04.12.2024**
(21) Application number: 22204422.4
(22) Date of filing: 28.10.2022
(51) Int. Cl.: H04M 3/42, H04M 7/00

(54) **SYSTEM AND METHOD FOR RELIABLY CONVEYING TRANSCRIBED TEXT AND PHYSIOLOGICAL DATA OF A REMOTE VIDEOCONFERENCE PARTY SEPARATELY FROM VIDEO AND AUDIO DATA**
SYSTEM UND VERFAHREN ZUR ZUVERLÄSSIGEN ÜBERTRAGUNG VON TRANSKRIBIERTEN TEXTEN UND PHYSIOLOGISCHEN DATEN EINES VIDEOKONFERENZTEILNEHMERS GETRENNT VON VIDEO- UND AUDIODATEN
SYSTÈME ET PROCÉDÉ POUR TRANSPORTER DE MANIÈRE FIABLE DES DONNÉES TEXTUELLES ET PHYSIOLOGIQUES TRANSCRITS D'UNE PARTIE DE VIDÉOCONFÉRENCE DISTANTE SÉPARÉMENT DE DONNÉES VIDÉO ET AUDIO

(30) Priority: 31.01.2022 EP 22154300; 27.07.2022 US 202217875308; 27.09.2022 US 202217954258
(43) Date of publication of application: 02.08.2023
(73) Proprietor: Koa Health Digital Solutions S.L.U., 08018 Barcelona (ES)
(72) Inventor: Garcia i Tormo, Albert, 08018 Barcelona (ES); Matic, Aleksandar, 08018 Barcelona (ES); Hemmings, Nicola, Bristol, BS4 3AS (GB); Lantz, Johan, 08019 Barcelona (ES)
(74) Representative: Herrmann, Uwe

(56) References cited:
- JP-A- 2010 256 391

## Description

### System and Method for reliably conveying transcribed text and physiological data of a remote videoconference party separately from video and audio data

The present invention relates to a system and method for monitoring the quality of video conferences and more particularly to reliably conveying, separately from video data, transcribed text along with concurrent physiological data relating to the remote video conference participant.

In recent years, remote communication technologies have increasingly gained popularity, a process especially fuelled by the recent COVID-19 pandemic and the associated restrictions, such as the requirement to work remotely. Videoconferencing technologies, however, have been hampered by connectivity problems and the loss of transmitted information. This has resulted in sub-optimal call quality, especially in the professional environment, which has often rendered participants of video conferences unable to determine whether the other participants have satisfactorily understood the speaker.

In the context of telehealth, mental health therapy sessions can now be performed through video conferences between health professionals and their patients. However, conventional videoconferencing technologies provide no feedback to the health professionals regarding whether their speech is being properly reproduced to the patient at the remote end. From the prior art, a system according to JP2010256391A is known.

A system is sought that enables the health professional to monitor the intelligibility of the content that is reproduced at the receiver side for the patient. Based on this information, the health professional can better anticipate comprehension deficiencies by the patient and might even decide to repeat portions of the therapy content that were not understood. However, in order to administer an effective mental health therapy, the psychiatrist must perceive more than just whether the patient has acoustically understood the psychiatrist's words. The psychiatrist or mental health professional must also be able to evaluate changes in the patient's mental and emotional state in response to the stimulus of the therapy, often by observing the patient's physiological condition. Observing and evaluating the patient's subjective emotional and physiological state is difficult in a remote therapy session, especially if the quality of the audio and video channels degrades.

Against this background, it is an object of the present invention to ameliorate or even completely abolish the problems of the prior art. In particular, it is an object of the present invention to assist participants in remote communication in better comprehend or perceive the subjective state of other participants of the remote communication.

This object is achieved by a method with the features of claim 1 and a system with the features of claim 13. Advantageous embodiments of the invention are the subject-matter of the dependent claims.

An aspect of the invention relates to a method for telecommunication between a local device and a remote device, comprising the steps
acquiring via a remote device data relating to a user of the remote device and / or relating to the surroundings of the user of the remote device, wherein the data preferably comprises video and / or audio data,
generating from speech captured from the user of the remote device at least one entity of text, preferably by means of a conversion unit,
extracting, by means of an extraction unit, at least one feature value from the acquired data, wherein the at least one feature value preferably pertains to a physiological state of the user or to the surroundings of the user;
synchronizing and / or co-registering, by means of a synchronisation unit preferably of a local device, the at least one entity of text with the at least one feature value, such that the at least one entity of text is temporally linked to the at least one feature value, and
displaying by means of an output unit of the local device the at least one entity of text and the at least one feature value, wherein the at least one entity of text and the at least one feature value are preferably displayed aligned in time, and / or
storing, preferably in a memory of the local device, the synchronized and / or co-registered at least one entity of text and the at least one feature value and / or the acquired data.

Thus, according to the present invention, for example, a transcript of the speech captured from the user of the remote device alongside with a feature value, for example the heart rate of the user of the remote device while uttering the speech, is displayed to the user of the local device or stored for purposes of documentation. In this way, the user of the local device can preferably be informed not only of the speech uttered by the user of the remote device ("what is actually said") but also how it is said (e.g. via prosodic information) and / or how the user of the remote device feels during speaking (captured e.g. by extracting features form physiological data acquired from the user of the remote device, e.g. heart rate) and / or which environment the user of the remote device is experiencing (captured e.g. acquiring data relating to the surroundings of the user, e.g. background noise, light level, temperature etc.).

In the step of generating at least one entity of text, the entity of text preferably refers to a sound, a pause, a period of silence, at least one piece of prosodic information, such as pitch or inflection, a word, a syllable or any other element of speech captured from a user that can be transmitted or encoded in computer-readable form.

For example, periods of silence or pauses are important factors for the intelligibility of speech allowing for discrete words instead of a continuum of sounds. If speech captured from a user is to be transmitted or encoded in computer-readable form, the speech (including silences, syllables, words and sounds, and if desired also prosodic information) can be converted into a text transcript. In this case, the silences, syllables, words and sounds, as well as pieces of prosodic information can each be regarded as an "entity of text". As one example of the present invention refers to speech-to-text conversion, the term "entity of text" is used to describe information pertaining to speech captured from the user of the remote device. The term "entity of speech" can preferably be understood as synonymous to "entity of text". In the broadest sense, the term "entity of text" can relate to any information relevant to speech captured from a user, e.g. to a word, a silence, a syllable, a sentence, a sound (such as sighs or exclamations) or a piece of prosodic information. An entity of text can thus be or comprise any element important to text e.g. a word, a sentence, a sound, prosodic information, but also a silence or period of silence. An "entity of text" can hence for example consist of or comprise at least one of the following elements: word, a sentence, a part of a sentence, a sound, a piece of prosodic information, a silence or period of silence.

Preferably, the data relating to the user of the remote device correspond to at least one physiological parameter or multiple physiological parameters of the user, such as heart rate, blood pressure, muscle tone, pupil dilation, cardiac sinusoidal arrhythmia, an activity score or step count, sleeping pattern or any other physiological parameter of the user that can be linked to the emotional state of the user. For example, a high heart rate can indicate that the user is agitated.

From the acquired data, combination features can be generated, for example heart rate x blood pressure indicating e.g. that the user is angry or heart rate x background noise indicating that the user is stressed due to the noise or heart rate x step count / activity score indicating that the user is not necessarily agitated but that the high heart rate value can stem from previous activity.

Combination features can be generated by a combination of features extracted from data relating to a user of the remote device (e.g. "user"x"user", such as heart rate x blood pressure) and / by a combination of features extracted from the surroundings of the user of the remote device (e.g. "surroundings"x"surroundings", such as an ambient temperature of 35 °C x background noise of 100 dB) or from a combination of the two (e.g. "user"x"surroundings", such as heart rate x ambient noise). Of course, combination features may be further combined with each other.

The data analysis can be used to capture the emotional state of the user while the user talks in a remote conference.

The acquired data preferably pertaining to a physiological state of the user can be acquired e.g. via at least one accessory device, e.g. by use of a pressure cuff the user wears the blood pressure can be detected or via a smartwatch or fitness tracker or other wearable the heart rate and / or activity score or step count of the user can be assessed.

Other data relating to the user, such as age, weight, sex, ethnicity, habits (e.g. smoker, regular drinker, athlete etc.) can also be acquired e.g. from a database if available.

According to an embodiment of the invention, each entity of text generated from the speech is synchronized and / or co-registered with the at least one feature value, such that the at least one entity of text is temporally linked to the at least one feature value.

The term "temporally linked" is preferably not to be understood as transiently linked or linked only for a limited amount of time but instead is preferably to be understood to mean "linked in time" or "chronologically linked".

This has the advantage that e.g. for each word the user says, there is a corresponding heart rate value reflecting the emotional state of the user at the time point of uttering the word.

For example, the user may say "Hello, .... I did not complete the questionnaire" and from this the following entities of text are extracted "Hello" (word), "...." (period of silence), "I did" (part of a sentence), "not" (word, prosodic information: less loud than previous entity), "complete the questionnaire" (part of a sentence).

During the user utters the sentence, heart rate recordings are performed and each entity of text is allocated a heart rate recording. The allocated heart rate recording can be a recording performed at the same time as the entity of text was uttered or the closest available recording to the time point at that the entity of text was uttered.

For example, following heart rate readings can be temporally linked or synchronized to the generated entities of text: "Hello" (word) (heart rate of 65 bpm), "...." (period of silence) (heart rate of 65 bpm), "I did" (part of a sentence) (heart rate of 68 bpm), "not" (word, prosodic information: less loud than previous entity) (heart rate of 80 bpm), "complete the questionnaire" (part of a sentence) (heart rate of 78 bpm).

Preferably, this information is displayed to the user of the local device. The user of the local device can thus receive an indication that the user of the remote device is feeling nervous about admitting that they did not complete the questionnaire, as indicated by the increase in heart rate. The user of the local device can thus respond more empathically, e.g. by comforting the user of the remote device.

Preferably, the entities of text and extracted features are displayed aligned in time, e.g. in the form of rows. For example, one row can display the entities of text and next to that, in a second row the corresponding features values are displayed. However, any other desired form of display may be chosen. Preferably, the display is performed in such a way to allow a user to perceive at a single glimpse the entities of text, the feature values and preferably their temporal link (e.g. captured / generated simultaneously or closest possible reading (e.g. heart rate).

Each entity of text can be synchronized or co-registered with multiple feature values of the same type (e.g. a sentence may be linked to two or more heart rate readings) or different types (e.g. a sentence may be linked to a heart rate reading, a blood pressure value and a background noise level).

Additionally or alternatively, multiple entities of text of the same type or of different types (e.g. multiple periods of silence or a period of silence and a word) can be synchronized or co-registered with a single feature value, for example a single heart rate reading or a level of background noise.

Each entity of text can relate to a single time-frame and / or to a period of time comprising at least two time-frames.

The method can comprise a step of preferably automatically identifying in speech or sound captured from a user at least one entity of text, such as a word, a silence, a sound or another entity of text. A device according to the present invention can comprise an identification unit configured for this purpose.

According to an embodiment of the invention, whenever an entity of text has been identified that corresponds to a time-frame or time period, for this time-frame or time period data pertaining to the user and / or their surroundings is acquired.

For example, if in an audio stream acquired from a user at a time point of t= 3:00 pm the word "Hi" has been identified, the method can then comprise a step of acquiring data pertaining to the user and / or their surroundings at the same time point, e.g. at 3:00 pm, the user's heart rate was 65 bpm and the ambient noise level of 100 dB.

In other words, a step of acquiring data pertaining to the user, in particular physiological data, and / or the use's surroundings can be triggered based on the identification of entities of text ( that can be regarded as relevant content to the remote conference) in an audio signal, e.g. a stream, acquired from the user. This can have the advantage that e.g. recording reflecting physiological data, e.g. heart rate, breathing rate etc., more accurately capture the emotional state of the user while the user utters e.g. a given word.

Of course, the acquisition of data pertaining to the user and / or their surroundings can also be performed at pre-set or constant time intervals (e.g. every 10 seconds, the heart rate is recorded) set e.g. by a human being (e.g. a participant in a remote conference performed via a device according to the present invention) or by a device, e.g. a device according to the present invention. Alternatively, the acquisition of data pertaining to the user and / or their surroundings can be performed at random points in time or at irregular time intervals.

Preferably, the at least one feature value is extracted from the acquired data by an extraction unit of the remote device. This reduces errors due to data transmission between the local and remote devices. However, feature values can also be extracted by the local device or by another device, e.g. a cloud server.

According to an embodiment of the present invention, by means of an output unit of the local device the at least one entity of text and the at least one feature value are displayed, wherein the at least one entity of text and the at least one feature value are preferably displayed aligned in time. In one example, the at least one entity of text pertains to speech uttered by the user of the remote device and the at least one feature value has been extracted from data relating to the user of the remote device and / or their surrounds. In other words, in this exemplary embodiment, the invention serves the advantage of giving the user of the local device a more complete picture of what the user of the remote device said and how their emotional or physiological state and / or surroundings were at the time.

It is also possible that similarly data pertaining to the user of the local device and / or their surroundings are acquired and at least one feature value is extracted therefrom and at least one entity of text is generated based on speech captured by the local device.

This data pertaining to the user of the local device (e.g. a transcript of what the user said linked in time to a string of heart rate recordings) can be displayed and / or stored via the local device and / or the remote device.

For example, in case of the invention being used for a psychotherapist (user of local device) speaking to a patient (user of remote device) it may be desirable if the psychotherapist sees data pertaining to the physiological or emotional state of the patient (e.g. heart rate recordings) but not vice versa (the patient should not see if the psychotherapist is stressed).

Similarly, it might be desirable, if the psychotherapist may store the data (e.g. a transcript of what the user said linked in time to a string of heart rate recordings) on a device, e.g. the local device or another memory device, such as a cloud, for purposes of documentation, e.g. as an electronic health record, but not the patient.

In other words, the communication between two or more participants with a method or device according to the present invention may be symmetric or asymmetric, in particular in terms of data acquisition and / or processing (extracting feature values, generating entities of text) as well as storage and / or display of data.

In one embodiment, the method can comprise a step of prompting the user of the local device to select whether the steps of acquiring data relating to a user and / or their surroundings, generating from speech captured form the user at least one entity of text, extracting at least one feature value from the acquired data and synchronizing and / or co-registering the at least one entity of text as well as the steps of displaying and / or storing should be applied to the user of the remote device, the user of the local device or both.

In other words, although the method is described in some instances focussing on the user of the remote device whose speech is captured, at least one entity of text is generated therefrom and at least one feature value is extracted based on acquired data followed by synchronization or co-registration, according to a method of the present invention, at least one of these steps or all of these steps can also be applied to the user of the local device.

For example, a transcript can be generated reflecting not only what is said by the user of the remote device but also what is said by the user of the local device. In this way the conversation of both users is captured more completely. Similarly, extracted feature values pertaining to the user of the remote device and / or the user of the local device can be included in the transcript.

Thus, a method according to the invention can be described as comprising one or multiple of the following steps:
acquiring via a remote device and / or a local device data relating to a user of the remote device and / or a user of the local device and / or relating to the surroundings of the user of the remote device and / or the user of the local device, wherein the data preferably comprises video and / or audio data,
generating from speech captured from the user of the remote device at least one entity of text, and / or generating from speech captured from the user of the local device at least one entity of text preferably by means of a conversion unit,
extracting, by means of an extraction unit, at least one feature value from the acquired data, wherein the at least one feature value preferably pertains to a physiological state of the user of the remote device and / or pertains to a physiological state of the user of the local device and / or pertains to the surroundings of the user of the remote device and / or pertains to the surroundings of the user of the local device;
synchronizing and / or co-registering, by means of a synchronisation unit preferably of a local device, the at least one entity of text generated from speech captured from the user of the remote device with the at least one feature value preferably pertaining to a physiological state of the user of the remote device or to the surroundings of the user of the remote device, such that the at least one entity of text is chronologically linked or linked in time to the at least one feature value,
optionally synchronizing and / or co-registering, by means of the synchronisation unit preferably of the local device, the at least one entity of text generated from speech captured from the user of the local device with the at least one feature value preferably pertaining to a physiological state of the user of the local device or to the surroundings of the user of the local device, such that the at least one entity of text is chronologically linked or linked in time to the at least one feature value, and
displaying by means of an output unit of the local device at least one entity of text generated from speech captured from the user of the remote device with the at least one feature value preferably pertaining to a physiological state of the user of the remote device or to the surroundings of the user of the remote device, wherein the at least one entity of text and the at least one feature value are preferably displayed aligned in time or chronologically aligned, and
displaying by means of an output unit of the local device at least one entity of text generated from speech captured from the user of the local device, and / or
storing, preferably in a memory of the local device, the synchronized and / or co-registered at least one entity of text generated from speech captured from the user of the remote device with the at least one feature value preferably pertaining to a physiological state of the user of the remote device or to the surroundings of the user of the remote device and / or the at least one entity of text generated from speech captured from the user of the local device and / or the acquired data. The at least one entity of text generated from speech captured from the user of the local device can be synchronized and / or co-registered with the at least one feature value preferably pertaining to a physiological state of the user of the local device or to the surroundings of the user of the local device and the at least one feature value preferably pertaining to a physiological state of the user of the local device or to the surroundings of the user of the local device can also be displayed.

For example, a transcript, e.g. an enriched transcript, can be generated comprising at least one entity of text generated from the speech captured from the user of the remote device and at least one entity of text generated from the speech captured from the user of the local device and extracted feature values (e.g. heart rate values) pertaining to the user of the remote device and / or the user of the local device.

The method can comprise a step of generating an enriched transcript by fusing a first file corresponding to the speech captured from the user of the remote device in a time interval comprising at least one time-frame and comprising at least one entity of text (e.g. the user saying "Hi") with a second file corresponding to a set of feature values extracted from data acquired in the time interval comprising at least one time-frame and comprising at least one feature value (e.g. a heart rate value of 65 bpm) and a third file corresponding to the speech captured from the user of the local device in a time interval comprising at least one time-frame and comprising at least one entity of text (e.g. the other user responding "Hello" to the user saying "Hi").

For example, the user of the local device can select that data pertaining to their surroundings are acquired (e.g. the background noise) and a feature value be extracted therefrom (e.g. a background noise level of 50dB). The user of the local device can also select that this information is displayed only to themselves. In this case, for example, the user of the local device receives feedback regarding their own surroundings and can take measures, e.g. in order to reduce background noise.

If more than two participants are present in a remote videoconference, one user can be regarded as the user of the local device (e.g. the moderator of the conference) and multiple participants can be regarded as users of remote devices.

In this case, for example the moderator can be displayed e.g. the transcripts (capturing the speech of each remote user) and / or extracted feature value(s) (e.g. the heart rate readings for each user capturing the emotional / physiological state of each user) for each remote user or a subset of remote users.

Alternatively, with more than two participants, the user of the local device and the user of the remote device can be understood as any two participants of the videoconference.

The method according to the present invention can also comprise a step of assessing how accurately speech captured from the user of the local device was actually reproduced at the remote device. In this case, for example, the psychotherapist can receive an indication of what was heard by the patient from what the psychotherapist said.

For example, a method according to the invention can comprise steps of generating from speech captured from the user of the local device at least one entity of text (e.g. the user say "Hi") and generating from corresponding speech reproduced by the remote device at least one entity of text (the speaker reproduces the sound "why" instead of "Hi"). The term speech hereby is used only as an example, instead, any audio signal can be used, e.g. to verify whether a noise was accurately reproduced at the remote device.

The at least one entity of text generated from the corresponding speech reproduced by the remote device can then be displayed e.g. to the user of the local device. The psychotherapist thus knows that the patient heard the word "why" instead of "Hi".

Additionally, it is to be noted that the present invention relates to a method or system that is to be used additionally to or concurrently with a known teleconference and / or videoconference system.

Another aspect of the present invention thus pertains to a use of a method or system according to the present invention to retro-fit an existing remote conference system, e.g. a videoconference system.

By this retro-fitting, the existing conference system is enabled to provide users with improved information regarding the physiological or emotional state of participants in the conference.

In other words, a system according to the present invention can comprise additionally to the elements unique to the invention, the infrastructure of known remote (videoconferencing systems. For example, a system according to the invention can comprise channels for transmitting video and / or audio data between the participants and local and remote devices.

These channels can employ User Datagram Protocol (UDP) for data transmission. Additionally, a system according to the present invention can comprise a separate data transmission channel for transmitting generated entities of text and / or extracted feature values between the participants and local and remote devices.

This separate transmission channel preferably offers higher security against unauthorized third parties capturing or accessing transmitted data and / or better transmission fidelity (e.g. less transmission errors). For example, the separate transmission channel may use Transmission Control protocol (TCP).

According to an embodiment of the invention the step of extracting at least one feature value is performed by an extraction unit of the remote device and / or the step of generating from speech captured from the user of the remote device at least one entity of text is performed by means of a conversion unit of the remote device. If these steps are to be applied to the user of the local device, preferably these steps are performed by the local device.

This has the advantage that data is processed at the site of its acquisition (e.g. speech captured by a microphone of the remote device is analysed by the remote device) and thus accuracy can be improved due to the reduction of transmission errors.

Thus, according to an embodiment of the invention, at least a subset of the acquired data, preferably comprising at least a subset of the acquired video and / or audio data, is transmitted via a first communication channel between the remote device and the local device and the at least one entity of text and the at least one feature value are transmitted via a separate, second communication channel between the remote device and the local device.

The synchronization and / or co-registration step can include synchronising and / or co-registering at least two continuous or intermittent data streams, preferably a first data stream corresponding to the speech captured from a user, e.g. of the remote device and comprising the at least one entity of text and a second data stream comprising the at least one feature value extracted from the acquired data on a time-frame-by-time-frame-basis, such that for each time-frame the speech captured from the user of the remote device in this time-frame and the feature value extracted from data acquired in this time-frame are associated with each other and / or linked in time to each other.

For example, for the time-frame corresponding to time t=0:00, the sound "a" and a heart rate value of 65 bpm are liked to each other and for a time-frame of t=0.10, the word "dog" and a heart rate value of 68 bpm are liked to each other.

In another example, there may be a long silence spanning several time-frames (that can be regarded as a time period). During the long silence the physiological state of a user may change, e.g. a user can get nervous reflected by an increasing heart rate. In this case, the long silence can be divided into separate periods of silence each of that is temporally linked to a heart rate reading. Within the long period of silence each heart rate reading can be allocated to a time-frame comprised in the time period of silence.

A method according to the present invention can comprise a step of generating an enriched transcript of the speech captured from the user of the remote device by fusing a first file corresponding to the speech captured from the user of the remote device in a time interval comprising at least one time-frame and comprising at least one entity of text with a second file corresponding to a set of feature values extracted from data acquired in the time interval comprising at least one time-frame and comprising at least one feature value and / or with data relating to the user of the remote device and / or relating to the surroundings of the user of the remote device acquired in the time interval.

The term fusing in this context preferably means that the first file and the second file are integrated into a single data object. Additionally, the single data object can comprise the audio and video stream data of the videoconference system corresponding in time to the first and second files.

An example for fusing files that can be data files is described below:
The enriched transcript (that can also be referred to as an enhanced summary) can be thought of as a container including multiple files inside. Each datafile belonging to the summary includes a synchronisation means, wherein the synchronisation means allows establishing a chronological order between the contents of that datafile and those of the other datafiles.

The synchronisation means can be e.g. a text file with absolute timestamps. This is similar to a video stream and a text file including the frame number of each frame in the video and a timestamp for each of the frames and corresponding entities of text in the text file. The synchronisation means can also be a timestamp or a file of timestamps. Using absolute timestamps is preferable because it allows directly fusing data from any of the participants.

A datafile can preferably be any file containing data related to a user or their surroundings. Data can refer to the text transcription, prosodic information, heart rate values, background noise, etc. but also to the audio stream or the video stream themselves.

For this example, the synchronisation means for all datafiles are timestamps. For this example three datafiles are taken into account: video stream, heart rate values, and text transcription (entities of text).

The video stream in this example is an mp4 file, consisting of 1000 frames. The synchronisation means is a CSV file with two columns: frameNumber,acquisitionTimestamp. The acquisition timestamp is an absolute timestamp (elapsed seconds since epoch):

| Frame number | acquisitionTimestamp |
|---|---|
| 0 | 12345.40 |
| 1 | 12345.42 |
| 2 | 12345.44 |
| 3 | 12347.50 |
| 4 | 12347.52 |

In this example, the timestamps are not at constant rate or linearly increasing in number because some frames were not received. The frameNumber is only a counter of the received frames.

The heart rate recordings in this example are stored as a CSV file of the form Hrvalue, timestamp. The timestamp is also an absolute timestamp and it refers to the time instant wherein the patient (in this case) had this heart rate value (not to the moment when this value was obtained, because there is a delay).

| Heart rate value | Timestamp |
|---|---|
| 60 | 12345.20 |
| 65 | 12346.10 |
| 64 | 12347.50 |

The text transcription in this example is stored as a CSV file as well with four columns: speakerld, word, startTimestamp, endTimestamp

In this example, the entity of text is a word. The speakerID field identifies the user in the conversation who said that word. The word is a single word, the startTimestamp is an absolute timestamp indicating when did the user started articulating that word and the endTimestamp is an absolute timestamp indicating when did the user finish articulating that word.

| speakerID | word | startTimestamp | endTimestamp |
|---|---|---|---|
| 0 | Hi | 12345.43 | 12345.98 |
| 0 | I | 12347.3 | 12347.5 |
| 0 | am | 12347.5 | 12347.9 |

Thus, more generally put a method according to present invention can comprise a step of selecting at least one entity of text, identifying a starting point in time when a user started articulating the entity of text and identifying an end point in time when a user finished articulating the entity of text and associating the entity of text with a timestamp indicating the starting point in time and / or with a timestamp indicating the end point in time.

Turning back to the present example, the term fusing relates to presenting the information of the three datafiles (in principle the number of datafiles or files is unlimited) in association to each other, preserving the chronological information but omitting the synchronisation information.

For example, if the user requests to see the summary or transcript at t=12347.52, only information up to that moment can be shown. This is, frame number 4 would be displayed and, next to it, the text transcription and heart rate values prior to that moment (e.g. everything since the beginning of the file), sorted chronologically. For instance the following can be displayed that is an example of an enriched transcript:

| Hi. | | I |
|---|---|---|
| 60 | 65 | 64 |

In this example, thus the text transcript "Hi. I..." is aligned with the corresponding heart rate values (60, 65 and 64) to reflect their relationship in time or chronological order. Any synchronisation means, in this example time stamps, are omitted in the step of displaying the at least one entity of text (in this example words) and the at least one extracted feature value (in this example heart rate value)

An "enriched transcript" in this respect preferably means a file comprising speech captured from a user, preferably in text form, that is supplemented with information indicative of the user's state, in particular physiological or emotional state, and / or indicative of the user's surroundings. For example, an enriched transcript including entities of text generated from speech captured from a user (including words and silences) and heart rate recordings (in beats per minute bpm) that are aligned in time (e.g. one column can correspond to a time-frame or period of time) can take the following form:

| | | | | | | | | | |
|---|---|---|---|---|---|---|---|---|---|
| Hi, | I am | thinking | ... | ... | ... | ... | I wish | to stop | ... |
| 65 bpm | 65 bpm | 65 bpm | 65 bpm | 68 bpm | 70 bpm | 80 bpm | 80 bpm | 70 bpm | |

This enriched transcript can also comprise a video stream and / or an audio stream so that one can see and hear the user uttering the words "Hi, I am thinking..... I wish to stop" when accessing the enriched transcript.

Preferably, the enriched transcript contains physiological data or information reflecting a physiological or emotional state of the user.

The feature value(s) preferably correspond(s) to a physiological parameter (also referred to as physiological data) of the user, e.g. the user of the remote device, and preferably is an instantaneous heart rate of the user, an average heart rate of the user, a heart rate variability of heart beats of the user, an average breathing rate of the user, a pupil dilation of the user or any other desirable physiological parameter than can be linked to the emotional state of the user.

According to an embodiment, at least one of the feature value corresponds to an emotional state of the user of the remote device and preferably comprises prosodic information pertaining to speech captured from the user of the remote device, in particular information regarding intonation, pitch, length of sounds, loudness and / or timbre.

The prosodic information can be regarded as an entity of text, as it is a feature generated from speech captured from a user. The prosodic information can also be extracted from acquired data pertaining to the user, e.g. from acquired audio data.

The enriched transcript can thus comprise prosodic information.

The data acquired via the remote device relating to a user, e.g. of the remote device and / or relating to the surroundings of the user e.g. of the remote device can comprise video data, audio data, location data, movement data, gyrometer data, accelerometer data, pressure data, physiological data, data pertaining to the settings of a device used for obtaining physiological data, temperature data, humidity data, data pertaining to the time and / or date, activity data such as a step count, data pertaining to the age and / or ethnicity of the user. The data can be acquired via the local device, the remote device and / or via external devices such as wearables, smartwatches or other sensors.

A method according to the present invention can comprise a step of deriving at least one combination feature, preferably by means of the local device, wherein the combination feature is derived by combining at least two feature values, preferably pertaining to two different features (e.g. noise level and heart rate or temperature and blood pressure), and / or wherein the combination feature is derived by combining at least one feature value with at least a subset of the acquired data (e.g. a high heart rate and an image of the user looking angry).

A method according to the present invention can comprise a step of comparing the at least one extracted feature value to a threshold value and, if the at least one feature value exceeds the threshold value or falls outside of a tolerance range surrounding the feature value, bookmarking the at least one entity of text synchronised and / or co-registered with the at least one feature value, wherein preferably also the acquired data from that the at least one feature value was extracted are bookmarked.

For example, in order to identify passages in a conference (e.g. a deposition of a witness) during that a user is stressed or agitated, the threshold value can be set to e.g. 100 bpm. In the example below, in this case, the time-frame corresponding to the user uttering the word "not" is book-marked, because the heart rate of the user in this case meets the threshold value of 100 bpm.

| | | | | | | |
|---|---|---|---|---|---|---|
| Hi, | I | did | not | have | a | break |
| 65 bpm | 65 bpm | 80 bpm | 100 bpm | 90 bpm | 80 bpm | 70 bpm |

In the corresponding video and / or audio stream capturing the deposition, the audio and video streams can be book marked in the same position. This allows for easy review as a viewer of the enriched transcript can skip from bookmarked section to bookmarked section.

The method according to the invention comprises a step of detecting whether a communication between the remote device and the local device has been interrupted; and if an interruption for a period of time has been detected,
re-sending or re-attempting to send after resumption of the communication between the remote device and the local device
the data relating to the user of the remote device and / or relating to the surroundings of the user of the remote device acquired during the period of time, and / or
at least one entity of text generated from speech captured from the user of the remote device during the period of time, and / or
at least one feature value extracted from the data relating to the user of the remote device and / or relating to the surroundings of the user of the remote device acquired during the period of time, wherein preferably the at least one entity of text is synchronized and / or co-registered with the at least one feature value.

This has the advantage that once communication resumes, the user of the local device does not have to ask the user of the remote device to repeat anything said during the loss of connection. Instead, the user of the local device can be provided with an enriched transcript reflecting e.g. what was said during the loss of connection and how the other user felt during this time.

The remote device and / or the local device each can comprise one or more preferably electronic device(s), such as a smartphone, a laptop, a tablet, a computer, a smartwatch, smart glasses or any other wearable electronic device, a device running on a server and / or a device running a cloud service.

The local and or remote device can be e.g. a conventional electronic device, e.g. a smart phone, tablet or videoconferencing system, comprising a processor that has been specifically configured to perform the steps of a method according to the present invention.

In the following a method according to the invention in that video data are stored together with a physiological parameter of a user is explained in further detail.

According to a method according to the present invention, audio data may or may not be stored and / or video data may or may not be stored. In other words, it is optional whether acquired video data and / or audio data acquired from a user of the remote device are stored.

The video data and audio data can correspond to a video stream and audio stream acquired during a remote videoconference.

If audio data and/or video data are stored, then preferably least one feature value is stored, such as at least one heart rate value or any other feature value pertaining to a physiological state of the user.

The audio data and / or video data are preferably divided into segments that are synchronized or co-registered with the feature values as described above in the context of the at least one entity of text. For example, a video segment corresponding to a first time-frame in this example would be co-registered or synchronized with a feature value corresponding to the first time-frame.

If none of the audio data or video data are stored, at least one feature value (e.g. a heart rate value) and at least one entity of text e.g. at least one word or prosodic information) is stored.

Preferably, the at least one entity of text and the at least one feature value are each allocated a synchronization means, such as a timestamp, preferably by a synchronization unit, and are stored together with their respective synchronization means.

For example, the word "Hi" can be stored with the time stamp 1 and the heart rate value 65 bpm can be stored with the time stamp 1. Thus, the word "Hi" and the heart rate value 65 bpm are temporally linked (i.e. linked in time) through the synchronisation means.

Similarly, the acquired video data and or audio data can be stored with synchronization means. In this example, an image of the user of the remote device opening their mouth to say "Hi" can be stored with the time stamp 1 and an audio data sample encoding the sound of the user saying "Hi" can be stored with the time stamp 1.

In this way, the video data, audio data, entities of text and feature values can be linked in time by synchronization or co-registration.

In principle, the synchronization means could be omitted for storage. It could also be stored without synchronization means.

Synchronization means can be timestamps, or entities of text such as characters from the transcription (e.g. the "H" from "Hi" can be linked to a heart rate value), frame numbers, number of audio samples, etc.

As prosodic information is a feature derived from audio data; if enough prosodic information is stored, the text transcription can be derived from the prosodic information and thus explicitly storing the text becomes redundant.

In other words, it is possible that the at least one entity of text consists of or comprises prosodic information and the at least one feature value pertains to a physiological state of the user or to the surroundings of the user.

In this case, from the prosodic information, the speech captured from the user of the remote device can be reconstructed in text format (e.g. like a transcript).

It is also possible that prosodic information and a transcript of the speech captured from a user (e.g. the user of the remote device or the user of the local device or both), wherein the prosodic information and a transcript of the speech can be regarded as an entity of text generated from speech captured from the user, are both stored.

A method according to the present invention can comprise at least one of the steps:
capturing video data on a remote device at a location of a remote party (or user of the remote device), wherein the video data includes a video segment captured during a time interval, wherein a digital image of the video segment is captured at a first time instant (preferably corresponding to a first time instant) within the time interval, wherein the digital image is timestamped with the first time instant, and wherein the video data depicts the remote party;
determining a value of a physiological parameter of the remote party using the video segment, wherein the value of the physiological parameter is determined remotely at the location of the remote party, and wherein the value of the physiological parameter is timestamped with the first time instant;
receiving the video data onto a local device;
receiving the value of the physiological parameter onto the local device; and
storing the value of the physiological parameter and the video data such that the value of the physiological parameter is associated with the video segment.

Additionally or alternatively to the video data and video segment, audio data and / or a transcript of speech captured from a user (preferably including at least one entity of text) and / or prosodic information can stored. In other words, the reference to video data or a video segment can be regarded as only an example. It can also be the case that the physiological parameter that can be an extracted feature value such as a heart rate is stored together with a transcript of speech (comprising at least one entity of text) captured from a user.

Also, it can be the case that neither video data not audio data is stored but only data (e.g. feature values) extracted from the video data and / or audio data: for example, a transcript of speech captured from user (e.g. a sequence of entities of text generated from speech captured from the user by acquiring audio data) can be stored together with a string of heart rate values that have been extracted from a video of the user of the remote device (e.g. via a photoplethysmogram).

Additionally or alternatively, video data and / or audio data can be stored and also data (e.g. feature values) extracted from the video data and / or audio data are stored. In this case, the video data and / or audio data are preferably stored separately from the data (e.g. feature values) extracted from the video data and / or audio data.

It is possible that prosodic information is stored together with the physiological parameter. In other words, the at least one entity of text can comprise or consist of prosodic information and the at least one feature value can relate to a physiological parameter. In this case, it can be unnecessary to store transcribed speech captured from the user of the remote device, because the transcribed speech (e.g. text) can be derived from the prosodic information.

A method according to the invention can comprise the step:
displaying on a graphical user interface of the local device the digital image of the video segment and an indication of the value of the physiological parameter in association with one another.

The physiological parameter can be selected from the group consisting of: an instantaneous heart rate of the remote party at the first time instant, an average heart rate of the remote party over the time interval, a heart rate variability of heart beats of the remote party during the time interval, an average breathing rate of the remote party over the time interval, and an average pupil dilation amount of the remote party over the time interval.

A method according to the invention can comprise the step:
marking the video segment and other segments of the video data during which the value of the physiological parameter associated with each of the segments of the video data surpasses a threshold for the physiological parameter.

A method according to the invention can comprise at least one of the steps:
receiving onto a remote device digital video data captured during a time interval at a location of a remote party, wherein the digital video data depicts the remote party;
receiving audio data onto the remote device, wherein the audio data captures sounds spoken by the remote party during the time interval, wherein the remote device converts the audio data into words of text, and wherein the remote device captures prosodic information describing the sounds spoken by the remote party during the time interval;
receiving onto a local device the words of text;
receiving onto the local device the prosodic information corresponding to the sounds spoken by the remote party during the time interval that were converted into the words of text; and
storing the words of text and the prosodic information in association with one another.

A prosodic information can include information selected from the group consisting of: lengths of the sounds spoken e.g. by the remote party, a time of occurrence of a pitch point of a word spoken e.g. by the remote party, and an amplitude of a sound spoken e.g. by the remote party.

A method according to the invention can comprise the step:
displaying on a graphical user interface of the local device the words of text and the prosodic information associated with the words of text.

The words of text and the prosodic information are preferably not stored together with the digital video data that was captured during the time interval but are stored separately.

In a case in that the audio data captures background noise at the location of the remote party, a method according to the invention can further comprise at least one of the steps:
determining a value of the background noise based on the audio data;
receiving the value of the background noise onto the local device; and
determining a magnitude of a remote party combination feature locally at the local device, wherein the remote party combination feature is determined based on the prosodic information combined with the value of the background noise.

The words of text and the prosodic information can be displayed to a health professional, and wherein the remote party is a patient.

A method according to the present invention can further comprise at least one of the steps:
retrieving the stored video data and the value of the physiological parameter after the video data that depicts the remote party is no longer being captured; and
displaying the video segment and an indication of the value of the physiological parameter in association with one another.

A method according to the present invention can further comprise at least one of the steps:
receiving onto a remote device video data captured at a location of a remote party, wherein the video data depicts the remote party, wherein the video data includes a video segment captured during a time interval, wherein a digital image of the video segment is captured at a first time instant within the time interval, and wherein the digital image is timestamped with the first time instant;
determining a value of a physiological parameter of the remote party using the video segment, wherein the value of the physiological parameter is determined remotely at the location of the remote party, and wherein the value of the physiological parameter is timestamped with the first time instant;
receiving onto the remote device audio data that captures sounds spoken by the remote party during the time interval, wherein the remote device generates prosodic information from the audio data;
receiving onto a local device the prosodic information corresponding to the sounds spoken by the remote party during the time interval;
receiving the value of the physiological parameter onto the local device; and
storing the prosodic information and the value of the physiological parameter such that the prosodic information is associated with the value of the physiological parameter.

The prosodic information is preferably timestamped with the first time instant, and the prosodic information is preferably associated with the value of the physiological parameter by both being timestamped with the first time instant.

A method according to the present invention can further comprise at least one of the steps:
converting the prosodic information into words of text at the local device, wherein the words of text correspond to the sounds spoken by the remote party during the time interval; and
storing the words of text, the prosodic information and the value of the physiological parameter in association with each other.

Preferably the value of the physiological parameter and the prosodic information are stored separately from the video data or the audio that were captured during the time interval.

More generally speaking, prosodic information and / or physiological parameters or feature values can be stored separately from captured video and audio data.

A method according to the present invention can further comprise at least one of the steps:
capturing video data on a remote device at a location of a remote party, wherein the video data is captured during a time interval, wherein the video data is timestamped, and wherein the video data depicts the remote party;
determining a value of a physiological parameter of the remote party using the video data , wherein the value of the physiological parameter is determined remotely at the location of the remote party, and wherein the value of the physiological parameter is timestamped;
receiving onto the remote device audio data that captures sounds spoken by the remote party during the time interval, wherein the remote device generates prosodic information from the audio data;
receiving onto a local device the prosodic information corresponding to the sounds spoken by the remote party during the time interval;
converting the prosodic information into words of text at the local device, wherein the words of text correspond to the sounds spoken by the remote party during the time interval;
receiving the value of the physiological parameter onto the local device; and
storing the words of text and the value of the physiological parameter such that the words of text are associated with the value of the physiological parameter.

Preferably, the video data records a video conference with the remote party, wherein the words of text are part of a transcript of the video conference, further comprising:
marking the transcript at a location during which the value of the physiological parameter surpasses a threshold for the physiological parameter.

Another aspect of the present invention relates to a system for telecommunication between a local device and a remote device, preferably configured to perform a method according to the present invention, comprising:
a local device, and
a remote device, wherein
the remote device is configured to acquire data relating to a user of the remote device and / or relating to the surroundings of the user of the remote device, wherein the data preferably comprises video and / or audio data, and comprises
an extraction unit configured to extract at least one feature value from the acquired data, wherein the at least one feature value preferably pertains to a physiological state of the user or to the surroundings of the user,
a conversion unit configured to generate from speech captured from the user of the remote device at least one entity of text, and
a communication unit configured to transmit at least a subset of the acquired data, preferably comprising at least a subset of the acquired video and / or audio data, via a first communication channel to the local device and to transmit the at least one entity of text and the at least one feature value via a separate, second communication channel from the remote device to the local device.

A system according to present invention can comprise one or more local devices and one or more remote devices. For the sake of simplicity in the following a case is explained of a system comprising one local device and one remote device.

Preferably, the local device comprises
a communication unit configured to receive at least a subset of the acquired data, preferably comprising at least a subset of the acquired video and / or audio data, via a first communication channel from the remote device and to receive the at least one entity of text and the at least one feature value via a separate, second communication channel from the remote device;
a synchronisation unit configured to synchronize and / or co-register the at least one entity of text with the at least one feature value, such that the at least one entity of text is temporally linked to the at least one feature value, and
a control unit configured to control an output unit of the local device to display the at least one entity of text and the at least one feature value and / or to store the at least one entity of text and the at least one feature value, wherein the at least one entity of text and the at least one feature value are preferably displayed aligned in time.

Alternatively or additionally, the synchronization unit can be implemented in the local device and / or a third device, such as in the cloud or on a central server.

The remote device can comprise
a detection unit configured to detect whether a communication between the remote device and the local device has been interrupted in at least one communication channel; and if an interruption for a period of time has been detected,
the control unit of the remote device is configured to control the communication unit of the remote device to re-send or re-attempt to send after resumption of the communication between the remote device and the local device
the data relating to the user of the remote device and / or relating to the surroundings of the user of the remote device acquired during the period of time, and / or
at least one entity of text generated from speech captured from the user of the remote device during the period of time, and / or
at least one feature value extracted from the data relating to the user of the remote device and / or relating to the surroundings of the user of the remote device acquired during the period of time, wherein preferably the at least one entity of text is synchronized and / or co-registered with the at least one feature value.

The remote device and / or the local device of a system according to the present invention can each comprise one or more preferably electronic device(s), such as a smartphone, a laptop, a tablet, a computer, a smartwatch, smart glasses or any other wearable electronic device, a device running a server and / or a device running a cloud service.

Another aspect of the invention pertains to a machine-readable storage medium comprising instructions which, when executed by a device, cause the device to perform a method according to the present invention and / or cause the device to adopt the functionality of a remote device or local device according to the present invention.

It is to be noted that if all elements features, advantages and effects disclosed in this disclosure in the context of a method according to the present invention equally apply to a system or device according to the present invention. Only for the sake of brevity not all combinations are explicitly disclosed.

Furthermore, it should be noted that the present disclosure is not to be understood to be limited to the combinations of features explicitly disclosed. All features disclosed in this disclosure can also be claimed in isolation or in other desirable combinations not explicitly outlined herein. This also pertains to the part of the disclosure relating to specific embodiments and the drawings.

In other words, the present invention can be described as follows:
A method for telecommunication between a local device and a remote device is disclosed, comprising:
receiving onto a remote device digital video data captured during a time interval at a location of a remote party, wherein a digital image of the digital video data is captured at a first time instant within the time interval, and wherein the digital video data at least partially depicts the remote party;
determining a value of a remote party feature of the remote party using the digital video data, wherein the value of the remote party feature is determined remotely at the location of the remote party;
receiving the value of the remote party feature onto a local device;
receiving audio data onto the remote device, wherein the audio data captures sounds spoken by the remote party, wherein the remote device converts the audio data into words of text, and wherein the audio data that is converted into a particular word of text that was captured starting at the first time instant;
receiving the particular word of text onto the local device; and
displaying on a graphical user interface of the local device the particular word of text and an indication of the value of the remote party feature in association with one another and / or storing the particular word of text and an indication of the value of the remote party feature in association with one another in a memory of the local device.

For example, a method according to the present invention can comprise co-registering or synchronising text generated from speech captured from the remote party by the remote device and / or images, e.g. of a video, captured from the remote party by the remote device with a value of a remote party feature, such as a value of a physiological parameter of the remote party.

The word of text or the text generated from the speech of the remote party, e.g. via a conversion unit of the remote device, can be associated with or can comprise prosodic information that is also sent from the remote device to the local device.

In other words, a method according to the invention can be regarded as comprising a step of generating, preferably by means of the remote device, a contextualized summary of speech captured by the remote device from the remote party, wherein the contextualized summary preferably comprises at least one word of text generated from the speech captured by the remote party and / or at least one value of a remote party feature, preferably corresponding to a physiological parameter of the remote party, and / or a value indicative of a parameter of the surroundings of the remote party, e.g. indicative of a level of background noise at the location of the remote party.

The contextualized summary can be regarded as a contextualized transcript of the speech of the remote party or in other words a transcript of the speech of the remote party that is enriched or enhanced with information regarding a physiological state of the remote party at the time of the speech and / or information regarding the surroundings of the remote party at the time of the speech, in particular a background noise level at the location of the remote party.

Preferably, all information / values comprised in the contextualized summary or contextualized transcript are linked in time, e.g. synchronised or co-registered, preferably on a time-frame by time-frame basis.

This allows the local party or user of the local device to obtain information regarding the physiological state of the remote party synchronized with text generated from speech captured from the remote party and / or synchronized with images of the remote party.

For example, for a given time instant, the local device can display the text converted from speech captured from the remote party in this time instant (e.g. the word "hello") together with an image of the remote party captured in this time instant (e.g. the smiling remote party) and an indication of the value of the remote party feature (e.g. the number of 65 to indicate an instantaneous heart rate of 65 beats per minute of the remote party in this time instant).

In other words, according to an embodiment of the present invention, the local device receives from the remote device a value of a remote party feature as well as text generated from speech captured from the remote party by a speech-to-text conversion unit of the remote device, synchronizes the value of a remote party feature and the text or at least a word of text on a time-frame-by-time-frame basis and displays for each time from or for time-frames selected by a user (e.g. within a given time interval every time-frame in that a word of text starts, so that each word of text can be associated with a value of the remote party feature) the value of the remote party feature as well as the text generated from speech in association to each other.

For example, for a first time instant, the word of text "hello" is displayed together with an image of the remote party captured in this time instant (e.g. the smiling remote party) and the number of 65 to indicate an instantaneous heart rate of 65 beats per minute of the remote party in this time instant. For the first time instant, the word "hello", the image of the smiling remote party and the number 65 are synchronised or co-registered. For example, for a second time instant, the word of text "Doctor" is displayed together with an image of the remote party captured in this time instant (e.g. the still smiling remote party) and the number of 70 to indicate an instantaneous heart rate of 70 beats per minute of the remote party in this time instant. For the second time instant, the word "Doctor", the second image of the smiling remote party and the number 70 are synchronised or co-registered.

Thus, the user of the local device receives an indication of the physiological state and thus the physiological and / or emotional state of the remote party for each time-frame or for only selected time-frames (e.g. a time-frame every 30 seconds, every minute etc., wherein the time interval may be set by the user of the local device or remote device).

A method according to the present invention can comprise a step of selecting within a given time interval, a time-frame or time-frames for that the remote device sends to the local device a text or a particular word of text generated or converted from the speech of the remote party and an indication of the value of the remote party feature in association with one another. In other words, the method can comprise a step of selecting a frequency with that the remote device sends to the local device a text or a particular word of text generated or converted from the speech of the remote party and an indication of the value of the remote party feature in association with one another.

The remote device can comprise an identification unit configured to identify separate words in the text generated from the speech of the remote party captured by the remote device during the time interval and can be configured to send for each word identified in the text generated from the speech of the remote party captured by the remote device during the time interval a transcript of the word and an indication of the value of the remote party feature in association with one another. This has the advantage that if the remote party pronounces a long word spanning e.g. multiple time-frames, only one value of the remote party feature is sent associated with this word.

The time interval can comprise the entire length of a scheduled telecommunication session or a part thereof. For example, the scheduled telecommunication session can be 15 minutes and the time interval can be selected to be 15 minutes or 3 minutes or another value selected, e.g. by a user of the local device.

Within this time interval, it can be selected e.g. by the user of the local device that local device should receive from the remote device a value of the remote party feature at a selected frequency of time-frames, e.g. an each third time-frame or every thirty seconds etc. Thus, the amount of information related to the remote party feature provided to the user of the local device can be customized to the needs of this user and thus overloading the user with superfluous data can be avoided.

The remote party feature can be selected from the group consisting of: an instantaneous heart rate of the remote party at the first time instant, an average heart rate of the remote party over the time interval, a heart rate variability of heart beats of the remote party during the time interval, an average breathing rate of the remote party over the time interval, and an average pupil dilation amount of the remote party over the time interval.

The remote party feature can correspond to a physiological parameter, for example a physiological parameter suitable for indicating a level of arousal of the remote party.

According to any embodiment, the value of the remote party feature is determined by the remote device, for example by using an extraction unit of the remote device that is configured to extract the value of the remote party feature from data acquired by a sensor or sensors of the remote device, such as e.g. at least one camera, at least one microphone, at leats one movement sensor and or at least one acceleration sensor or gyrometer. For example, the heart rate of the remote party can be determined by photoplethsmography (PPG).

Preferably, the data on that the extraction unit draws to determine the value of the remote party feature are acquired passively, preferably without the remote party noticing and without the remote party having to put on designated sensors. This has the advantage that the physiological parameters are captured without being falsified by the remote party knowing that the parameters are measured, such as known as the "white coat effect".

For example, the remote device can be a smartphone and the evaluation unit draws on video data or images acquired from the remote party with the smartphone camera(s) and / or on motion data acquired by the smartphone accelerometer (corresponding e.g. to the breathing rate of the remote party, if the smartphone is held close to the remote party's chest) and / or on audio data acquired by the smartphone microphone(s) including prosodic information.

According to an embodiment of the invention, the value of the remote party feature is determined by the remote device and also the remote device converts the speech captured from the remote party into text or words of text. This processing of data at the source allows for a high accuracy in determining the value of the remote party feature and in converting the speech to text, as the quality is not degraded e.g. due to data loss during the transmission of data from the remote device to the local device.

Alternatively or additionally to displaying the particular word of text and an indication of the value of the remote party feature in association with one another and preferably a corresponding image of the remote party, the particular word of text and an indication of the value of the remote party feature in association with one another and preferably a corresponding image of the remote party can also be stored in a memory of the local device. This allows a user of the local device to document the communication with the remote party and also to review the communication with the remote party.

It is also possible that the text generated from the speech captured by the remote party or at least one word of the text is stored together with the associated value(s) of the remote party feature (e.g. instantaneous heart rate of the remote party) and preferably together with the corresponding prosodic information is stored in the memory of the local device. This saves data storage space in comparison to a case in that the entire telecommunication session including video streams and audio streams is recorded and stored, but still preserves the most relevant information, in particular what was said by the remote party and what was the physiological state of the remote party when speaking.

The method can comprise a step of comparing the value of the remote party feature to a threshold value and if, the value of the remote party feature lies above the threshold value or a tolerance range surrounding the threshold value, bookmark the time-frame co-registered or synchronised with this value of the remote party feature. This allows a person reviewing a stored documentation of a communication with a remote party to selectively review sections of the communication in that the remote party showed e.g. signs of high arousal or stress.

For example, the threshold value may be 90 bpm for a remote party feature corresponding to the instantaneous heart rate of the remote party. Thus, if in a given time instant, an instantaneous heart rate of 95 bpm is detected, this time-frame can be book-marked as a time-frame in that the remote party showed high arousal.

The local device can be configured to allow a user to skip from one book-marked time-frame to another book-marked time-frame when reviewing a stored communication with a remote party.

The method can further comprise the step:
determining a magnitude of a remote party combination feature remotely at the location of the remote party, for example via the remote device, wherein the remote party combination feature is determined based on the remote party feature combined with an additional feature, and wherein the additional feature is based on the digital video data or the audio data; and
receiving the magnitude of the remote party combination feature onto the local device.

For example, the additional feature can be a level of background noise at the location of the remote party determined using the audio data, and the remote party feature can be the heart rate of the remote party.

Taking into account the level of background noise in the surroundings of the remote party can be helpful to better evaluate the significance of the value of the remote party feature, as e.g. in a very busy or stressful and noisy environment the heart rate of the remote party can be generally increased. Also, taking into account the level of background noise in the surroundings of the remote party can be helpful to assess whether the remote party adequately pays attention to the remote communication, as e.g. if loud music is playing in the surrounding of the remote party, the remote party is unlikely to pay close attention to the communication with a user of the local device.

Thus, the method can comprise a step of acquiring audio data at the location of the remote party, preferably using a microphone of the remote device, further comprising:
determining a value of the background noise based on the audio data;
receiving the value of the background noise onto the local device; and
determining a magnitude of a remote party combination feature locally at the local device, wherein the remote party combination feature is determined based on the remote party feature combined with the value of the background noise.

Thus, in addition to extracting from the audio data speech captured from the remote party and converting the speech into text by use of the conversion unit, the remote device can be configured to identify background noise in the audio data and determine determining a value indicative of the level of the background noise, e.g. via an evaluation unit of the remote device. The background noise can also be referred to as ambient noise.

According to an embodiment of the invention, the audio data captures ambient noise surrounding the remote party during the time interval and the remote device generates an ambient noise value indicative of a magnitude of the ambient noise at the first time instant, the method further comprising:
displaying on the graphical user interface of the local device the particular word of text, the indication of the value of the remote party feature and the ambient noise value or a value indicative of the level of the background noise in association with each other.

In other words, for a given time instant of the time interval, the local device can be configured to display the particular word of text, the indication of the value of the remote party feature and the ambient noise value or value indicative of the level of the background noise and / or an image of the remote party in association with each other. Preferably, the particular word of text, the indication of the value of the remote party feature and the ambient noise value or value indicative of the level of the background noise and / or the image of the remote party are synchronised or co-registered with each other, preferably such that the particular word of text, the indication of the value of the remote party feature and the ambient noise value or value indicative of the level of the background noise and / or the image of the remote party are linked to a single common time-frame.

In other words, the local device can comprise a synchronisation unit configured to synchronize the particular word of text, the indication of the value of the remote party feature and /or the ambient noise value or value indicative of the level of the background noise and / or the image of the remote party and / or audio data such that these are linked in time.

In order to preserve the privacy of the remote party, the storing step of a method according to the present invention can be preceded by a step of data anonymisation. For example, the audio data and / or digital video data and / or values of the remote party feature can be stored in the memory of the local device without storing any personal identifiable information of the remote party together with or linked to the audio data and / or digital video data and / or values of the remote party feature.

It sometimes occurs in practice that during remote telecommunication, the connection is lost. In order to allow the user of the local device to catch up on conversation provided by the remote party during the interruption, the method can comprise a step in that if a disconnection has been detected, the remote device continues to capture speech from the remote party and to convert this speech into text as well as to determine values of the remote party feature and, once the connection resumes, sends the converted text alongside the values of the remote party feature to the local device. In this way, as soon as the connection is re-established, the local device receives a summary, e.g. a transcript of the speech of the remote party alongside physiological data of the remote party, of the time interval in that the connection was lost.

This has the advantage that conversation can continue seamlessly after the connection has been re-established without the need for the remote party to repeat words, as these words are sent to the local device converted to text like a written summary.

A method according to the invention can thus comprise the following steps:
detecting that a telecommunications connection over which preferably words of text and / or audio data and / or digital video data and / or a value of the remote party feature were transmitted from the remote device to the local device has been disconnected; and
resending to the local device words of text that were converted from the audio data, and / or audio data, and / or digital video data and / or a value of the remote party feature that the remote device attempted to transmit to the local device while the telecommunications connection between the remote device and the local device was disconnected.

Preferably, the text or words of text generated from the speech captured by the remote device, the value of the remote party feature extracted by the remote device and / or value indicative of the level of the background noise determined by the remote device are sent from the remote device to the local device via a designated and separate communication channel, preferably, a communication channel using a transmission protocol ensuring high security and / or high transmission fidelity. Such a protocol can be transmission control protocol (TCP).

For example, the value of the remote party feature and / or text generated by the conversion unit of the remote device can received by the local device from the remote device over a telecommunications network using a protocol ensuring high security and transmission fidelity, preferably transmission control protocol (TCP). The amount of data transmitted via this channel is comparatively low (transcribed text compared to actual audio data, an instantaneous heart rate compared to a photoplethysmogram etc.).

The digital video data and / or audio data captured by the remote device is preferably sent to the local device via a different, separate communications channel. For example, the digital video data and / or audio data can be received by the local device from the remote device over a telecommunications network using user datagram protocol (UDP).

In order to synchronise words of text with the corresponding values of the remote party feature, e.g. the corresponding instantaneous heart rates, the local device and / or the remote device can be configured to use time stamps.

For example, according to an embodiment of the invention, the particular word of text can be received onto the local device before the value of the remote party feature is received onto the local device, wherein the particular word of text is associated with a first time stamp indicative of the first time instant, e.g. by a synchronisation unit of the local device, and wherein the value of the remote party feature is associated with a second time stamp indicative of the first time instant, e.g. also by the synchronisation unit of the local device.

Alternatively, the synchronization or co-registration as described herein can also be performed by the remote device.

The present invention also relates to a system for telecommunication between a local device and a remote device, preferably configured to perform a method according to the invention as described above, comprising:
- a local device, and
- a remote device, wherein
the remote device is configured to acquire video and / or audio data from a remote party and comprises an extraction unit configured to extract a value of a remote party feature that preferably corresponds to a physiological parameter of the remote party from the acquired video and /or audio data, a conversion unit configured to convert the audio data into text preferably using a speech-to-text-converter and a communications unit configured to send to the local device via a first communication channel the acquired video and / or audio data and via a second, separate communications channel the text and / or the value of the remote party feature.

The local device and / or the remote device can be configured to perform the steps as disclosed above in the context of a method according to the invention. Thus, all features disclosed in the context of the method according to the invention can equally apply to a system according to the invention without being explicitly recited herein, in order to reduce redundancy of the disclosure.

A telecommunication system according to the present invention can comprise a processor programmed to perform at least one or multiple steps of a method according to the present invention.

The local device can comprise a communications unit configured to receive via the first communication channel the acquired video and / or audio data and via the second, separate communications channel the text and / or the value of the remote party feature and / or a value indicative of the level of background noise at the location of the remote party; and a synchronisation unit configured to allocate for each time instant the remote party feature and / or the value indicative of the level of background noise at the location of the remote party to the video and / or audio data acquired in this time instant and / or to the text or a particular word converted from audio data acquired in this time instant.

The local device can further comprise a control unit configured to display on a graphical user interface of the local device at least one particular word of text of the text and an indication of the value of the remote party feature in association with one another and / or to store the at least one particular word of text and an indication of the value of the remote party feature in association with one another in a memory of the local device. time-frames in that the remote party showed signs of high arousal, e.g. as indicated by a value of the remote party feature exceeding a threshold value, can be book-marked allowing for a targetted review as disclosed above.

The remote device can further comprise a detection unit for detecting that a telecommunications connection over the first communications channel and / or the second communications channel has been disconnected; and
the communications unit of the remote device can be configured to resend - after the connection has been re-established- to the local device words of text that were converted from the audio data and / or a value of a remote party feature and / or a value indicative of the level of background noise at the location of the remote party and / or audio data and / or video data that the remote device attempted to transmit to the local device while the telecommunications connection between the remote device and the local device was disconnected.

The remote device can comprise a camera for capturing digital video data and a communications unit for sending digital video data captured during a time interval at a location of a remote party to the local device, wherein a digital image of the digital video data is captured at a first time instant within the time interval, and wherein the digital video data preferably at least partially depicts the remote party.

The remote device can further comprise an extraction unit configured to determine a value of a remote party feature of the remote party preferably using the digital video data, wherein the value of the remote party feature preferably corresponds to a physiological parameter of the remote party and is determined remotely at the location of the remote party.

The local device can comprise a communications unit configured for receiving the value of the remote party feature onto the local device.

The remote device can comprise a microphone for capturing audio data and the communications unit can be configured to send the captured audio data to the local device, wherein the audio data captures sounds spoken by the remote party, wherein the remote device further comprises a conversion unit configured to convert the audio data into words of text, and wherein the audio data that is converted into a particular word of text was captured starting at the first time instant.

The communications unit of the remote device can be configured to send the particular word of text to the local device.

The control unit of the local device can be configured to display on a graphical user interface of the local device the particular word of text and an indication of the value of the remote party feature in association with one another and / or to store the particular word of text and an indication of the value of the remote party feature in association with one another in a memory of the local device.

The invention further relates to a machine-readable storage medium comprising instructions which, when executed by a device, cause the device to perform a method according to the invention and / or cause the device to adopt the functionality of a remote device or local device according to a system of the invention.

In other words, an embodiment of the method involves reliably conveying, separately from interruptible video and / or audio data, from a remote device to a local device transcribed text along with concurrent or synchronized or co-registered physiological data relating to the remote video conference participant. Digital video data that was captured during a time interval at a location of a remote party is preferably received onto a local device. The digital video data preferably at least partially depicts the remote party. A digital image of the digital video data is captured at a first time instant within the time interval. A value of a remote party feature of the remote party is preferably determined using the digital video data. The remote party feature can correspond to a physiological parameter of the remote party. The value of the remote party feature is preferably determined remotely at the location of the remote party. Examples of the remote party feature include the instantaneous heart rate of the remote party at the first time instant, the average heart rate of the remote party over the time interval, the heart rate variability of heart beats of the remote party during the time interval, the average breathing rate of the remote party over the time interval, and the average pupil dilation amount of the remote party over the time interval. The value of the remote party feature is preferably received onto a local device.

Audio data is received onto the remote device, e.g. via a microphone of the remote device. The audio data preferably captures sounds spoken by the remote party. The remote device converts the audio data into words of text. In one implementation, the remote device is the smartphone of the remote party. The audio data that is converted into a particular word of text was captured starting at the first time instant. The particular word of text is received onto the local device. The particular word of text and an indication of the value of the remote party feature are displayed in association with one another on the graphical user interface of the local device. In one implementation, the remote party is a mental health patient, and the particular word of text and the indication of the value of the remote party feature are displayed on the local device to a health professional.

In an adaptation of the method, the audio data, the text generated therefrom and / or the values of the remote party feature is / are stored without storing any personal identifiable information of the remote party together with or linked to the audio data, the text generated therefrom and / or the values of the remote party feature and without storing the digital video data together with or linked to the audio data, the text generated therefrom and / or the values of the remote party feature.

In another embodiment, digital video data captured during a time interval at a location of a remote party is received onto a remote device. The digital video data depicts the remote party. Audio data is also received onto the remote device. The audio data captures sounds spoken by the remote party during the time interval. The remote device converts the audio data into words of text. The remote device also captures prosodic information describing the sounds spoken by the remote party during the time interval. The words of text are received onto a local device. The prosodic information corresponding to the sounds spoken by the remote party during the time interval that were converted into the words of text is also received onto the local device. The words of text and the prosodic information is stored in association with one another.

In other words, according to an embodiment of the invention, the text generated by the conversion unit of the remote device and sent to the local device can comprise prosodic information.

In an additional embodiment, video data containing a set of digital images that were captured remotely at a location of a remote party during a time interval are generated on a remote device. In one implementation, the remote party is a patient taking part in a mental health therapy session through a video conference. An intermediate image of the set of digital images is captured at a first time instant within the time interval. The set of digital images depicts the face of the patient. A heart rate value of the patient is determined using the set of digital images. The heart rate value is determined remotely at the location of the patient, e.g. by an extraction unit of the remote device. For example, the heart rate value indicates the instantaneous heart rate of the patient at the first time instant, the average heart rate of the patient over the time interval, or the heart rate variability of the patient's heart beats during the time interval. In one example, the heart rate value is determined by using photoplethysmography (PPG) to calculate the average heart rate of the patient during the time interval.

The heart rate value is received onto a local device. In one implementation, the local device is a laptop or PC of a health professional. Audio data is generated or acquired on the remote device. The audio data captures sounds spoken by the patient. The remote device converts the audio data into words of text. The audio data that is converted into a particular word of text was captured starting at the first time instant. The particular word of text is received onto the local device. The particular word of text and an indication of the heart rate value are displayed in association with one another on the graphical user interface of the local device.

Further features, effects and advantages of the present invention become apparent from the following description under reference to the accompanying drawings, where like numerals indicate like components and that illustrate embodiments of the invention.

It should be noted that the present disclosure is not limited to the combinations of features that are explicitly recited in the context of specific exemplary embodiments. Instead, features disclosed in a specific combination or embodiment can also be claimed in isolation or in a different combination or embodiment or incorporated in isolation into a more generally worded claim wording. Only for reasons of avoiding redundancy not all possible combinations of features are explicitly recited in the present disclosure, in particular the following section, but only exemplary embodiments are described to illustrate the invention.
FIG. 1 shows a first embodiment of a method for monitoring call quality.
FIG. 2 shows a second embodiment of a method for monitoring call quality.
FIG. 3 shows a third embodiment of a method for monitoring call quality.
FIG. 4 shows an exemplary graphical user interface of a device used to implement a method for monitoring call quality.
FIG. 5 shows a fourth embodiment of a method for monitoring call quality.
FIG. 6 shows a fifth embodiment of a method for monitoring call quality.
FIG. 7 shows a sixth embodiment of a method for monitoring call quality.
FIG. 8 shows a seventh embodiment of a method for monitoring call quality.
FIG. 9 is a schematic diagram of a video conferencing system that reliably conveys, separately from the video data, transcribed text along with concurrent physiological data relating to the remote video conference participant.
FIG. 10 is a flowchart of steps of a method for reliably conveying, separately from video data, transcribed text along with concurrent physiological data relating to a remote video conference participant.
FIG. 11 shows a raw photoplethysmography (PPG) signal and a filtered PPG signal used to determine the instantaneous heart rate of a remote video conference participant.
FIG. 12 shows an exemplary graphical user interface on which a transcribed word of a remote patient and an indication of the patient's heart rate are displayed in association with one another.
FIG. 13 shows another embodiment of how an indication of the patient's heart rate value and a concurrently spoken transcribed word are displayed in association with one another.
FIG. 14 is a flowchart of steps of a method for storing physiological parameter values of a remote party of a video conference together with the corresponding segment of the video tape at which the remote party exhibited the associated physiological characteristic.

Reference will now be made in detail to some embodiments of the invention, examples of which are illustrated in the accompanying drawings. The first device can be a local device and the second device can be a remote device, and vice versa.

A method is disclosed for monitoring the quality of communication between at least two devices, the method comprising:
receiving, by means of a first device, input from a user; converting the input received from the user into a first sequence of information; transmitting the first sequence of information to a second device; generating a second sequence of information based on the received input by extracting from the received input at least one piece of information corresponding to a past time instant, wherein the at least one piece of information is preferably time-stamped; storing the second sequence of information in the first device; generating a third sequence of information by means of the second device, wherein the third sequence of information corresponds to an output to be output by the second device on the basis of the first sequence of information;
generating a fourth sequence of information based on the third sequence of information by extracting from the third sequence of information at least one piece of information corresponding to a past time instant, wherein the at least one piece of information is preferably time-stamped; transmitting the fourth sequence of information to the first device; comparing the second and fourth sequences of information to detect any aberrations there between, wherein each piece of information of the second sequence of information is compared to a corresponding piece of information of the fourth sequence of information; and indicating, preferably displaying, by means of the first device for each piece of information of the first sequence of information an indication of the level of human intelligibility of an output performed by the second device based on this piece of information and/or preferably an indication of the output performed by the second device based on this piece of information.

The level of human intelligibility of an output performed by the second device may be indicated for example, by colour-coded symbols, such as a bar moving with the progression of time that appears in red if human intelligibility at a given time instant is poor (e.g., due to a loss of words or audio signals being distorted, etc.) and in green if human intelligibility at a given time instant is good, e.g., no loss of information has been detected.

Preferably, a method according to the present invention focuses on the level of human intelligibility of transmitted information ("how well could a listening participant understand the content of the speech of a speaking participant during a videoconference") in contrast to focusing on the transmission fidelity at the level of bytes, data packages, or individual frames of a video ("how accurately was the speech transmitted"). For example, the loss of a single frame of a video stream or the loss of some audio data during compression or decompression may not impact the human intelligibility of the audio signal or message conveyed, e.g., another listening participant may still understand the speech of a talking participant of a videoconference. Such a loss of a single frame of a video stream or the loss of some audio data during compression or decompression may even be below the threshold of human perception and thus may not even be noticed by a listening participant of the videoconference.

In one embodiment, the method further includes the step: evaluating whether any detected aberration between the second and fourth sequences of information is above or below a threshold of human perception and/or is relevant to human understanding. For example, it may be the case that only a single package of audio or video data was lost during transmission from the first device to the second device, but this data loss is negligible to a user of the second device because human beings do not understand audio or video output on a data-package or frame basis. For example, a user might not be able to notice that a single frame of a video was lost or that audio data relating to background noise was lost because the listening user still understands what the speaking user has said and also still understands the video transmitted. Thus, there may be data losses during transmission that one of the users of the devices or even both users cannot perceive and that are thus not relevant to human understanding of transmitted content. Preferably, the novel method of call quality monitoring is thus not focused on detecting any, including even minute, aberrations between a message or sequence of information sent from the first device to a message or sequence of information received by the second device, but is focused on detecting and preferably reporting aberrations that are relevant to human understanding of the message. Current videoconferencing solutions do include flow control mechanisms, which allow them to cope with issues like variable communication delays or lost packets/packages of data. In these cases the goal is optimizing the call quality given the available communications channel. Nevertheless, all these flow control mechanisms do not go higher than the transport layer; this means that they focus on small pieces of information (packets or packages) but not on the whole human-understandable message. Based on this mechanism, it is feasible to analyse the link quality, for example by counting the amount of packets with errors, but it is not possible to analyse the human intelligibility of the received message. Furthermore, it is not possible identify whether packets are lost, as protocols such as User Datagram Protocol (UDP) do not provide mechanisms for that. In contrast to existing solutions, the novel method of call quality monitoring introduces new quality-analysis mechanisms at a high level to explicitly provide information to the user about the human intelligibility of the received message. Aberrations that are expected above a threshold of human perception and/or are relevant to human understanding are identified and reported. For example, the message sent from the first device to the second device might be "I eat bread with oil," and the feedback message being sent back from the second device to the first device might be "I eat bread width oil." Thus, there appears to be an aberration in the speech signal recorded at the first device ("with") from the speech signal reproduced at the second device ("width") that is relevant for human understanding of the message (in contrast to, e.g., a packet of background noise being lost). In this case, the aberration may be indicated or reported to the user, preferably the user of the first device. However, judging how severe the aberration is and whether the aberration requires action from one of the users, for example by repeating the sentence, is left to the user. In the example of the first user of the first device saying "I eat bread with oil" and the message being reproduced by the second device of the second user as "I eat bread width oil," the user of the first device may judge that this aberration was not so severe for the other user to understand the message, and thus no repetition of the sentence is required.

In other words, this may offer the advantage that if aberrations between speech signals captured by the first device and audio signals reproduced by the second device are detected, these are only indicated to the user if they are relevant to human understanding of the speech signals. For example, during a video conference, background noise accompanying captured speech signals may not be accurately transmitted. This omission, however, does not compromise the human understanding of another participant of the video conference of the speech signals, so this aberration from absolute transmission fidelity may be regarded as irrelevant to assessing call quality. Similarly, there may be data losses during transmission that are not perceptible to a human participant in a video conference. Such aberrations from absolute transmission fidelity may also be regarded as irrelevant to assessing call quality.

At least one piece of information is extracted from the received input such that the at least one piece of information corresponds to an entity, such as a word, a number, a pause, a frame, an image, or a sound included in the input that is relevant for human intelligibility of the input.

For example, an entity such as a word or a pause that is relevant for human understanding of speech may be extracted from a continuous stream of audio data stemming from speech captured by the first device.

In one embodiment, the input received from the user is acoustic/audio input, preferably input relating to speech, and the input is converted into the first sequence of information by compressing and/or encoding. For example, the acoustic/audio input is first digitized by a microphone, and the digitized audio data is then compressed and/or encoded. Conversely, on the receiving side, the received compressed and/or encoded audio data is preferably digitized audio data that is converted into an analogue signal output by a speaker.

The second and fourth sequences of information are generated by a speech-to-text converter and include text. The second and fourth sequences of information may be regarded as summary messages of the human intelligible content of acoustic or audio signals captured by the first device and reproduced by the second device. The second and fourth sequences of information may each take the form of a file or a continuous stream and may be in text format. Similarly, the sixth and eighth sequences of information may each take the form of a file or a continuous stream and may be in text format.

In one embodiment, a separate communication channel and preferably a communication protocol configured to preserve information integrity to a high degree is used to transmit the fourth sequence of information between the first and second devices. In other words, the summary message of the human intelligible content of acoustic or audio signals captured by the first device may be transmitted in a separate channel from the channel used for transmitting the actual preferably encoded and compressed acoustic or audio signals from the first device to the second device. For example, the separate communication channel for transmitting the fourth and/or sixth sequences of information may use a transmission control protocol (TCP) communication protocol. The first and fifth sequences of information may be sent via a communication channel using a user datagram protocol (UDP) communication protocol.

According to an embodiment, the output performed or reproduced by the second device based on the third sequence of information is indicated to a user of the first device, preferably by displaying subtitles corresponding to acoustic signals, preferably relating to speech, output by the second device, on an output unit, preferably a screen, of the first device.

For example, the user of the first device may receive feedback in the form of subtitles of the content reproduced to the user of the second device ("what is received" or "what the user hears") based on the speech signals captured by the first device ("what is sent" or "what the user actually said"). Additionally or alternatively, the user of the first device may also receive feedback in the form of subtitles of the content sent to the user of the second device based on the speech signals captured by the first device ("what the first device captures from the actual speech of the user").

The indication of the level of human intelligibility of an output performed by the second device based on this piece of information of the first sequence of information can relate to a symbol, a font or a colour code. For example, words that were omitted may be displayed in red, italics or strike-though or be indicated in brackets or with an asterisk. Words that were transmitted with a satisfactory degree of human intelligibility may be indicated in green or in a specific font, etc. Words that were added may be displayed, e.g., in blue, underlined or shown in square brackets, etc. Of course, not only the addition or omission of words can impact human intelligibility of the output, but also the speed at which, e.g., a word is reproduced or the delay with which the word is reproduced. Thus, the addition and omission or words, the scrambling of words, distortions in sounds, the reproduction speed of words etc. are all merely examples of factors that impact human intelligibility of the output performed by the second device. The novel method of call quality monitoring is thus in no way limited to these examples, but is applicable to any factor likely to impact human intelligibility of the output performed by the second device.

In an embodiment, the indication of the level of human intelligibility of an output performed by the second device based on this piece of information of the first sequence is directed to a different sensory modality of the user than the input received from the user. For example, if acoustic or audio data, such as speech signals, are captured from the user of the first device, the indication of the level of human intelligibility may be visual, e.g., by displaying subtitles.

In another embodiment, the second sequence of information may be generated directly out of the audio data acquired by the microphone without an intermediate step of processing the audio data, for example, by compressing and/or encoding. Of course, the second sequence of information may also be generated out of the audio data acquired by the microphone after the audio data has been processed, e.g., by encoding and compressing.

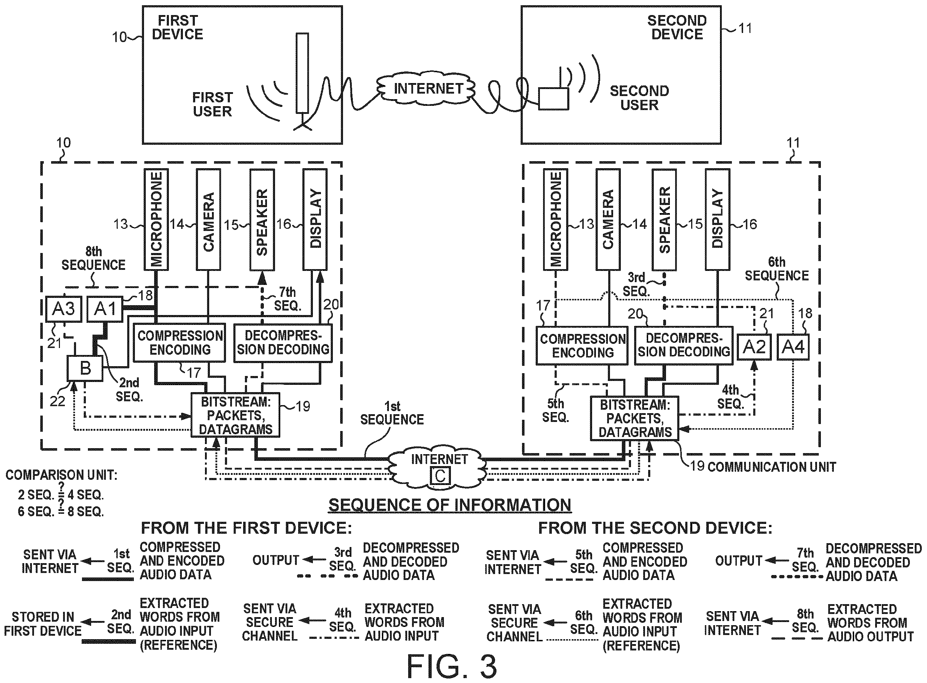

In another embodiment, the first device captures speech and provides digital audio. This digital audio is compressed and encoded and sent to the second device. The very same compressed and encoded digital audio signal is also uncompressed and decoded at the source side, thus generating a new digital audio signal. This new digital audio signal is then converted to text and stored (thus forming the second sequence of information) and compared later on, e.g., with the fourth sequence of information. Although so far mainly the transmission of audio data has been discussed to illustrate the invention, the invention is not limited to audio data and is equally applicable to other data such as video data. It should be apparent for the person skilled in the art that if in an example, audio data has been described that is captured by a microphone and reproduced by a speaker, if the novel method is to be applied to video data, the video data is captured by a camera and reproduced by a display. Thus, in the example in FIG. 3, the first and second devices both include a microphone, a camera, a speaker and a display and thus can be used for applying the invention to both audio and video data although the example of audio data is described in more detail.

An identifier is added to each piece of information of the first sequence of information (that in this example corresponds to a stream of frames of a video acquired by a camera, e.g., of the first device). For example, consecutive numbers may be added to consecutive frames of the video. A second sequence of information is generated from the first sequence of information, wherein each of the pieces of information of the second sequence of information is linked to an identifier. For example, a pattern A extracted from the first frame is linked to the number 1 and a pattern B extracted from the second frame is linked to the number 2 of the second frame. At the level of the second device, a video is displayed based on the first sequence of information. From the displayed video, a fourth sequence of information is generated, wherein each of the pieces of information of the fourth sequence of information is also linked to an identifier. For example, a pattern A extracted from the first frame is linked to the number 1, and a pattern C extracted from second frame is linked to the number 2. If the sequences are compared on a frame-by-frame basis, it is apparent in this example that the first frame was transmitted correctly, because the first frame captured by the first device contained pattern A, and the first frame displayed by the second device also contained pattern A. Pattern A can be, e.g., a face. The second frame captured by the first device contained pattern B (e.g., a close-up of the face) and the second frame displayed by the second device contained pattern C (e.g., a hand). Thus, there is an aberration between the video recorded at the first device and the video displayed/reproduced by the second device. In other words, at the first device a pattern detector is run on each frame, and a list of extracted patterns is obtained. The same operation is performed by the second device for each of the received frames, and then the patterns extracted in both sides must coincide if the transmission was without any data loss.

In another embodiment, an identifier is added to each piece of information of the second sequence of information (e.g., a number is added to each frame extracted from a video stream). Thus, the second sequence of information may be regarded as a reference message of the video captured at the first device and may for example contain the sequence: frame 1, frame 2, frame 3, frame 4 indicating that four frames with identifiers in the form of consecutive numbers were contained in the video message sent from the first device to the second device. At the second device, the corresponding identifier is extracted from each piece of information of the fourth sequence of information. Thus, the fourth sequence of information may be regarded as a summary message of the video received by the second device and may contain the sequence: frame 1, frame 2, frame 4 indicating that only three frames (frames 1, 2 and 4) were contained in the video message reproduced by the second device. In other words, the identifiers of the pieces of the second and fourth sequences of information are compared to detect any aberrations of the first and second sequences of information corresponding in this example to the content contained in the video captured at the first device and the video reproduced at the second device. In other words, the camera of the first device may be regarded as providing the first sequence of information (in this case, a sequence of frames). An identifier is added to each of the frames (e.g., a frame number), and the sequence of frames with each frame bearing an identifier is sent to the second device. Thus, in this example, the sequence of frames with the identifiers can be regarded as the second sequence,

In another embodiment, the first device may send a stream of video frames to the second device wherein each frame contains an identifier, and the identifier is a stream of consecutive numbers. The second device may be configured to perform a plausibility check on the incoming video stream, for example, by evaluating whether the number of the identifier of each consecutive frame increases by 1. If the plausibility check indicates an error in the transmission, for example, if a frame with the identifier 4 follows on the frame with the identifier 2, this aberration is indicated to the user of the first and/or second device.

If, via a conference, video is also transmitted, it is possible that packets of video data or even whole frames may be lost. This can cause interruptions in the video stream and mismatches or synchronization issues between the audio and video channels. Adding an identifier to each piece of information, e.g., each frame of a video, allows such losses to be detected.

In one embodiment, a specific pattern may be added as an identifier to each of the frames or images. For example, a small number at a corner of the image, or at the area overlapped by the self-video, or the frame may be extended and the identifier may be added outside the part of the frame that is shown to the user. This identifier can change from frame to frame or image to image, for example, like a loop counter of three digits. At the receiver side, the reconstructed image can be analysed and the value of this number can be extracted, verifying that the counter is following the expected pattern (for instance, increment by 1 at each frame or image) to verify that no frames were lost. The information regarding lost frames or received frames on the side of the second device can be sent, preferably time-stamped, to the first device and any aberrations or losses of frames relevant to human understanding or above a threshold of human perception may be indicated. For example, to display a set of multiple consecutive lost frames, a marker such as an asterisk can be added next to the subtitles indicating concurrent audio signals to denote the video disruption. For easy evaluation, the marker may be colour-coded according to the number of frames lost (severity of the disruption).

Another aspect of the novel method of call quality monitoring is implemented on a device comprising:
at least one input unit, such as a microphone;
at least one output unit, such as a speaker;
at least one conversion unit configured to convert input received from a user via the input unit into a first sequence of information;
at least one extraction unit configured to generate a second sequence of information from the received input by extracting from the received input at least one piece of information corresponding to a past time instant, wherein the at least one piece of information is preferably time-stamped;
a memory for storing the second sequence of information;
at least one communication unit configured to transmit the first sequence of information to a second device and receive from the second device a fourth sequence of information, wherein the fourth sequence of information corresponds to at least one piece of information corresponding to a past time instant, wherein the at least one piece of information is preferably time-stamped and extracted from a third sequence of information corresponding to an output to be output by the second device on the basis of the first sequence of information;
at least one comparison unit configured to compare the second and fourth sequences of information to detect any aberrations there between, wherein each piece of information of the second sequence of information is compared to a corresponding piece of information of the fourth sequence of information; and
at least one evaluation unit configured to indicate for each piece of information of the first sequence of information an indication of the level of human intelligibility of an output performed by the second device based on this piece of information and preferably to indicate the output performed by the second device based on this piece of information.

In one embodiment, the evaluation unit is further configured to evaluate whether any detected aberration between the second and fourth sequences of information is above or below a threshold of human perception.

Preferably, the communication unit comprises a separate communication channel that preferably uses a communication protocol that preserves information integrity to transmit the fourth sequence of information.

According to an embodiment, the device comprises a screen, a communication detection unit configured to detect whether the device is communicating with at least one other device, preferably in an audio and/or video call, and a control unit configured to control, if the communication detection unit has detected that the device is communicating with at least one other device, the device to display on the screen an indication of acoustic signals, preferably vocal signal, captured by the device via the input unit, wherein the indication preferably comprises subtitles and/or an indication of acoustic signals output by the at least one other device, wherein the indication preferably comprises subtitles and/or at least one statistical indicator of communication quality, such as an indication of a background noise, a signal-to-noise ratio, a connectivity strength, a transmission delay or a synchronization delay.

Another aspect of the invention relates to a system comprising at least two devices configured to perform the novel, preferably at least one device according to the novel method of call quality monitoring. The system includes a first device and a second device, which includes at least one input unit, such as a microphone; at least one output unit, such as a speaker; at least one conversion unit configured to convert input received from a user via the input unit into a fifth sequence of information; at least one extraction unit configured to generate a sixth sequence of information from the received input by extracting from the received input at least one piece of information corresponding to a past time instant, wherein the at least one piece of information is preferably time-stamped; and at least one communication unit configured to transmit the fifth and sixth sequences of information to the first device, wherein the first device comprises a conversion unit configured to generate a seventh sequence of information based on the fifth sequence of information received from the second device, wherein the seventh sequence of information corresponds to an output to be output by the first device on the basis of the fifth sequence of information, and the first device further comprises an extraction unit configured to generate an eighth sequence of information from the seventh sequence of information by extracting from the seventh sequence of information at least one piece of information corresponding to a past time instant, wherein the at least one piece of information is preferably time-stamped, and the at least one comparison unit of the first device is configured to compare the sixth and eighth sequences of information to detect any aberrations there between, wherein each piece of information of the sixth sequence of information is compared to a corresponding piece of information of the eighth sequence of information.

In the system, the first and/or the second device include a comparison unit and/or an evaluation unit.

Preferably, the at least one communication unit of the first device and the at least one communication unit of the second device are configured to provide a separate communication channel that preferably uses a communication protocol that preserves information integrity and transmits the fourth sequence of information and/or the sixth sequence of information between the first and second devices. For example, such a communication channel may use the TCP communication protocol. Other data may be transmitted in another channel using the UDP communications protocol.

Another aspect of the invention relates to a memory device containing machine-readable instructions that when read by a device enable the device to perform a novel method for monitoring communication quality. The method involves receiving raw audio data onto a first audio and text analyser 27, wherein the raw audio data includes a first timestamp indicating a first time and receiving decoded audio data onto a remote audio and text analyser 29, wherein the decoded audio data was generated by decoding encoded audio data, wherein the encoded audio data was generated by encoding the raw audio data, and wherein the decoded audio data includes the first timestamp indicating the first time. The raw audio data is converted into a first fragment of text by the first audio and text analyser 27. The decoded audio data is converted into a second fragment of text by the remote audio and text analyser 29. The second fragment of text is received by the first audio and text analyser 27. The first fragment of text is compared to the second fragment of text. An indication is displayed on a graphical user interface as to whether the first fragment of text exactly matches the second fragment of text.

Another method for monitoring communication quality involves receiving decoded audio data onto a first audio and text analyser 27, wherein the decoded audio data was generated by decoding encoded audio data, wherein the encoded audio data was generated by encoding raw audio data, and wherein the decoded audio data includes a first timestamp indicating a first time. The decoded audio data is converted into a first fragment of text. A second fragment of text is received from a remote audio and text analyser 29, wherein the raw audio data was converted by the remote audio and text analyser 29 into the second fragment of text, and wherein the second fragment of text also includes the first timestamp indicating the first time. The first fragment of text is compared to the second fragment of text. It is indicated on a graphical user interface whether the first fragment of text exactly matches the second fragment of text.

Yet another method for monitoring communication quality involves receiving video data onto a first image recognition system, wherein the video data includes a first timestamp indicating a first time, wherein the decoded video data is received onto a remote image recognition system. The decoded video data was generated by decoding encoded video data, and the encoded video data was generated by encoding the video data. The decoded video data received onto the remote image recognition system also includes the first timestamp indicating the first time. The method involves recognizing, by the first image recognition system, a first pattern in the video data and recognizing, by the remote image recognition system, a second pattern in the decoded video data. The recognized second pattern is received by the first image recognition system. The recognized first pattern is compared to the recognized second pattern. It is indicated on a graphical user interface whether the recognized first pattern exactly matches the recognized second pattern.

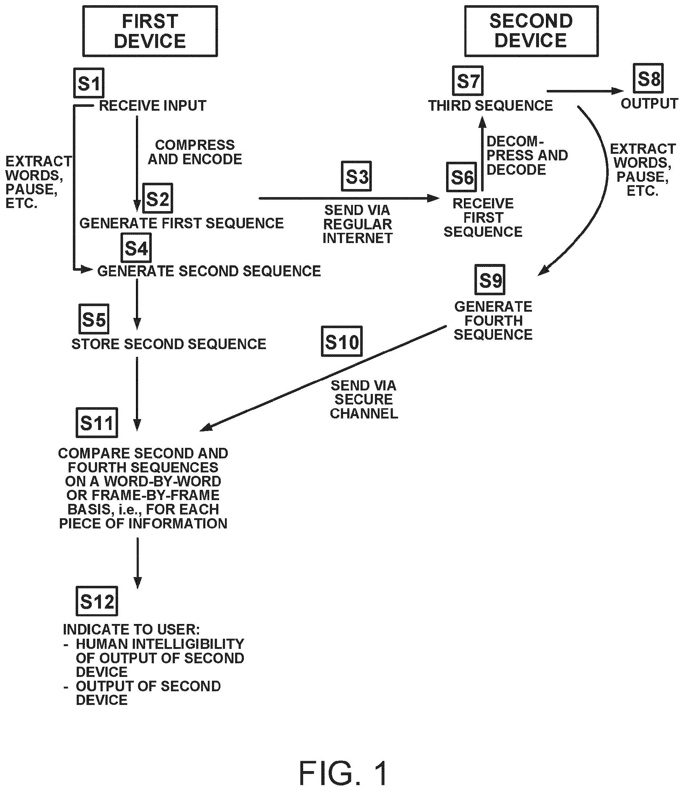

FIG. 1 illustrates the steps of a method in which a video conference user speaks into a first device, and a corresponding audio signal is received by a second device and reproduced to another user listening to the second device. The following description focuses on audio signals for ease of description, but the novel method of call quality monitoring is similarly applicable to video signals.

In step S1, by means of a first device such as a smartphone or tablet, an audio signal is received from a user. In step S2, the audio signal is compressed and encoded to generate the first sequence of information. The compressed and encoded audio signal is then sent in step S3 to a second device, such as a smartphone or tablet, via the internet.

Based on the audio signal received from the user, the first device also generates in step S4 a second sequence of information by extracting from the received input at least one piece of information, for example a word or a pause contained in the audio signal or speech signal received from the user. This at least one piece of information is associated with a past time instant. For example, the second sequence of information can contain the information that, 5 ms ago, the user uttered the word "You". In this case, the past time instant is "-5ms". The at least one piece of information is timestamped. For example, the word "You" may be linked to an absolute time value, such as the Universal Coordinated Time (UTC), to indicate when the user uttered this word.

Alternatively, the word "You" may be linked to a relative time value, for example "30 sec after starting the videoconference".

The second sequence of information may be regarded as the extracted content of the audio signal received from the user of the first device. In other words, the second sequence of information may be regarded as a reference message indicating the content, preferably the content as is intelligible to a human being, of the audio signal received from the user of the first device. For example, the second sequence of information can be generated through speech-to-text conversion in order to capture the meaning of the speech of the user of the first device. In step S5, the second sequence of information is stored in the first device. The second sequence of information may thus be regarded as a sender-side reference message.

In step S6, at the second device corresponding to the receiver-side, such as a smartphone or tablet, the first sequence of information is received. In step S7, a third sequence of information is generated at the second device, for example by decompressing and decoding the audio signal of the first sequence of information. In step S8, the decompressed and decoded audio signal of the third sequence of information corresponds to an output that is output by the second device on the basis of the first sequence of information. In other words, the third sequence of information may be regarded as reflecting the actual output, e.g., speech output via speakers of the second device, to the user of the second device. Whereas the first sequence of information may be regarded as what is actually said by the user of the first device, the third sequence of information may be regarded as what is actually reproduced by the second device.

In step S9, based on the third sequence of information, the second device generates a fourth sequence of information by extracting from the third sequence of information to be output to the user at least one piece of information, such as a word or a pause contained in the audio signal or speech signal. This at least one piece of information preferably corresponds to a past time instant, wherein the at least one piece of information is preferably time-stamped. The fourth sequence of information is generated in the same way as the second sequence of information. The fourth sequence of information is generated through speech-to-text conversion to capture the meaning of the speech reproduced by the second device to the user of the second device. The fourth sequence of information may thus be regarded as a receiver-side reference message. The fourth sequence of information is the extracted content of the audio signal that is reproduced and presented to the user of second first device. In other words, the fourth sequence of information is a reference message indicating the content, preferably the content as is intelligible to a human being, of the audio signal received by the user of the second device.

The second and fourth sequences use the same reference framework for linking the at least one piece of information to a past time instant and/or for time stamping, so that the second and fourth sequences of information can be compared on a piece of information-by-piece of information basis for each past time instant.

The pieces of information of the second and fourth sequences of information are coregistered in time in order to allow, for each point in time, a comparison of the pieces of information of the second and fourth sequences for this point in time. The same point of time is used as a reference for linking the at least one piece of information of the second and fourth sequences to a past time instant and/or for time stamping. If absolute timestamps are used, both the second and fourth sequences may rely on UTC. As using the same reference framework can be important for any comparison, the same applies to the sixth and eighth sequences. The term "co-registered" means that the second and fourth sequences are referenced to the same reference.

In step S10, the fourth sequence of information is then transmitted from the second device to the first device.

The fourth sequence of information is transmitted from the second device to the first device via the internet in a separate channel that is separate from the channel used to transmit the first sequence of information. There is a separation of the communication channels between the first and second devices for transmitting audio signals, such as the compressed and encoded audio data of the first sequence of information, and for transmitting extracted content of the audio signals, such as the fourth sequence of information. The channel of communication for transmitting the fourth sequence of information is configured to offer a higher level of cyber security and/or transmission fidelity than the channel of communication for transmitting the first sequence of information.

Generally, the amount of data transmitted in the channel of communication for transmitting the extracted content is significantly lower than the amount of data transmitted in the channel of communication for transmitting the actual compressed and encoded audio signal. Thus, transmitting the extracted content, e.g., the fourth sequence of information, in addition to the actual audio signal, e.g., the first sequence of information, will require only a negligible increase in processing power.

For example, the first sequence of information may include pieces of information relating to speech signals such as words, but may also include background noise as well information regarding volume, pitch and speed of the audio signal. The fourth sequence of information may be a file in text format generated through speech-to-text conversion and comprising only the human intelligible content "You should not do it." In step S11, after the fourth sequence of information has been transmitted to the first device, the first device compares the second and fourth sequences of information to detect any aberrations there between. The comparison is preferably performed on a piece of information-by-piece of information basis for each past time instant. Each piece of information of the second sequence of information is compared to a corresponding piece of information of the fourth sequence of information. Preferably, timestamped pieces of information of the second and fourth sequences of information are co-registered in relation to time.

For example, the piece of information of the second sequence of information corresponding to the past time instant of -5 ms is the word "You" because the user uttered the word "You" at that time point. The piece of information of the fourth sequence of information corresponding to the past time instant of -5 ms is the word "You" because the audio output to be reproduced to the user of the second device for that time point is the word "You". In this case, for the past time instant and/or piece of information there are no aberrations between the audio signal captured by the first device from the user (sender) and the audio signal reproduced from second device to the other user (receiver).

The past time instances and/or the pieces of information included in the sequences of information relate to entities relevant to the human understanding of the information contained in data from which the sequence of information was generated. For example, a piece of information may relate to a word or a pause identified in a continuous stream of audio data captured from a speaking user. Similarly, the continuous stream of audio data captured from a speaking user may be separated into discrete time instants corresponding to a word or a pause or another entity relevant to human understanding of the audio data. Thus, the term "past time instant" may also be understood as "past time interval."

For example, from the continuous stream of audio data captured from a user saying "You should not do this", the pieces of information "You", "pause", "should", "pause", "not", "pause", "do" ,"pause", " this", "long pause" may be extracted. Each piece of information relates to an entity contained in the audio data that is relevant to and captures a human understanding of the audio data.

Each piece of information may be time-stamped so that each piece of information is allocated to a past time instant. For example, the word "You" is allocated to -5ms, the entity "pause" is allocated to -3 ms, and the word "should" is allocated to -2 ms. Thus, when comparing two sequences of information of this format, it is possible to compare the sequences of information on an information-by-piece of information basis and/or a past time instant-by-past time instant basis.

In principle, it is also possible to compare the second and fourth sequences of information without the use of timestamps. For example, the second and fourth sequences of information may be aligned to detect any aberrations there between. A correlation algorithm may be used to align the pieces of information of the second and fourth sequences to detect aberrations there between. As the comparison between the sixth and eighth sequences is similar to or the same as the comparison between the second and fourth sequences of information, any explanation made in this disclosure relating to the comparison of the second and fourth sequences of information may equally be applied to the comparison of the sixth and eighth sequences of information.

In step S12, the first device then indicates to the user (sender) for each piece of information of the first sequence of information an indication of the level of human intelligibility of an output performed by the second device based on this piece of information. This indication can take the form of subtitles of the audio output being generated by the second device to the user (receiver) based on the audio input captured by the first device. The first device may be used to provide feedback to the user (sender) regarding what was received by the user (receiver) of the second device.

For example, the user of the first device said, "You should not do this," but during the videoconference the word "not" was lost. So the user of the second device actually received the message, "You should do this." The user of the first device may in this case receive the indication that the word "not" was lost during the transmission. On the first device the subtitle "You should not do this" is displayed to indicate to the user of the first device that the word "not" has been lost. Alternatively or additionally, an indication of the output performed by the second device based on this piece of information may be provided to the user of the first device, in this example a subtitle reading "You should do this".

Subtitles are only one option for providing an indication for each piece of information of the first sequence of information of the level of human intelligibility of an output performed by the second device based on this piece of information, and any other suitable indication is also within the scope of the novel method of call quality monitoring.

The severity of any aberrations and/or the level of human intelligibility of each piece of information may also be indicated to the user, e.g., by using a colour code that displays words transmitted with satisfactory transmission fidelity in green and indicates a word transmitted in a form that is not intelligible to a human being or that has been omitted completely in red or strike-through.

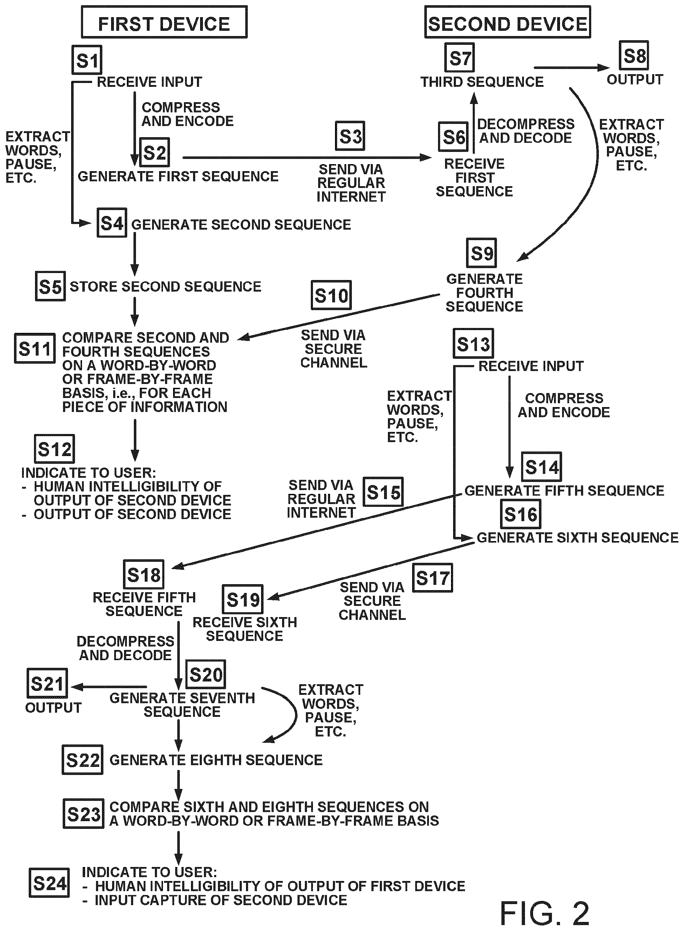

FIG. 2 shows another embodiment of the novel method of call quality monitoring. Steps S1-S12 of FIG. 2 correspond to steps S1-S12 of FIG. 1, and thus a redundant description of these steps is omitted.

In step S13, input from a user, e.g., an audio signal such as a speech signal, is received by the second device. This audio signal is then compressed and encoded to generate a fifth sequence of information in step S14. The compressed and encoded audio signal is then sent in step S15 to the first device, such as a smartphone or tablet, via the internet.

Based on the audio signal received from the user, in step S16 the second device also generates a sixth sequence of information by extracting from the received input at least one piece of information, such as a word or a pause contained in the audio signal or speech signal received from the user. This is the same or similar to the generating of the second sequence in step S4 by the first device.

In step S17, the sixth sequence of information is then transmitted via a separate secure communication channel to the first device.

In step S18 at the first device (corresponding to the receiver-side in this example), e.g., a smart-phone or tablet, the fifth sequence of information is received. In step S19, the sixth sequence of information is received.

In step S20, a seventh sequence of information is generated by means of the first device, for example, by decompressing and decoding the audio signal of the fifth sequence of information. In step S21, the decompressed and decoded audio signal of the third sequence of information corresponds to an output that is output by the second device on the basis of the first sequence of information.

In step S22, based on the seventh sequence of information, the first device generates an eighth sequence of information by extracting from the seventh sequence of information at least one piece of information, such as a word or a pause contained in the audio signal or speech signal to be output to the user.

Then in step S23, the first device compares the sixth and eighth sequences of information to detect any aberrations there between. The comparison is preferably performed on a piece of information-by-piece of information basis for each past time instant. The comparison is performed in the same or a similar way to the comparison described in step S11.

In this example, the first device in step S24 then indicates to the user (in this instance acting as the receiver) for each piece of information of the first sequence of information an indication of the level of human intelligibility of an output performed by the first device based on this piece of information, as well as an indication of the content of the audio signal captured by the second device, e.g., what the user of the second device said. The indication is performed in the same or a similar way to the indication described in step S12.

FIG. 3 shows a system for monitoring call quality that includes a first device 10 and a second device 11 that are used by a first and second user, respectively, to carry out a videoconference and preferably to perform the methods of FIGS. 1-2.

The first device 10 includes a microphone 13 and a camera 14 for receiving input from the first user and a speaker 15 and a display 16 for outputting or reproducing output to the first user. The first device 10 includes a conversion unit 17 configured to compress and encode audio signals, e.g., the input received from the first user. The first device 10 also includes an extraction unit 18 configured to extract entities relevant to human understanding from the received audio input, e.g., speech of the first user. The extraction unit 18 in this example is a speech-to-text converter that generates a text file from the captured speech. The first device 10 further includes a memory in which the text file is stored.

The first device 10 also includes a communication unit 19 configured to transmit data to the second device 11 and receive data from the second device 11. The communication unit 19 is configured to communicate with the second device 11 via two separate channels that exist simultaneously. In this example, one channel is used for sending the compressed and encoded audio signal received from the first user from the microphone 13, and the second channel is used to send the text file generated by the extraction unit 18.

The second device 11 receives the compressed and encoded audio signal via the communication unit 19 and decompresses and decodes the audio signal via a conversion unit 20 configured to decompress and decode audio signals. Based on the decompressed and decoded audio signal, the second device 11 outputs an audio signal via the speaker 15.

From decompressed and decoded audio signals representing the audio signal sent to the speaker 15 of the second device 11, entities relevant to human understanding from the audio output are extracted using an extraction unit 21. The extraction unit 21 in this example is a speech-to-text converter that generates a text file from the audio signal indicating the acoustic output to be reproduced to the user. The text file generated by the extraction unit 21 of the second device 11 is sent via the communication unit 19 of the second device 11 to the communication unit 19 of the first device 10. The first device 10 also includes a comparison unit (B) 22 configured to compare the text file generated by the extraction unit (A1) 18 of the first device 10 with the corresponding text file generated by the extraction unit (A4) 18 of the second device 11 received from the second device 11.

Referring to the methods of FIGS. 1-2, the comparison unit 22 of the first device 10 in FIG. 3 compares the second sequence of information to the fourth sequence of information and/or compares the sixth sequence of information to the eight sequence of information. In order to avoid redundant description, FIG. 3 indicates which line in the diagram corresponds to which sequence of information. In addition, the first device 10 includes an evaluation unit configured to evaluate the level of human intelligibility of the output generated by the second device 11 based on encoded and compressed audio data sent to the second device 11 by the first device 10 and to indicate the output generated by the second device 11 on the display 16 of the first device 10.

The system of two devices as shown in FIG. 3 is only one embodiment. A system that implements the novel method of call quality monitoring may also include at least two devices each configured like the first device 10 in FIG. 3 or at least two devices each configured like the second device 11 in FIG. 3. In other words, FIG. 3 may be described as follows: The underlying idea of this exemplary embodiment is to convert the speech captured by the microphone 13 at the first device 10 into text and store it. Then, at the second device 11, the audio signal that is to be reproduced at the speakers (which, in principle, should correspond to the speech recorded at the first device 10) is also converted into text, such as a string of text. This string is then sent to the first device 10, where it is compared to the stored text and then displayed on the screen 16. Note that this process involves analysing the human-understandable message at the application level. This process also identifies past time instants and indicates quality (message intelligibility).

For example, the user of the first device 10 speaks a sentence. These words are captured by the microphone 13 and digitized; these digital audio samples preferably form a raw audio signal. The raw audio signal is encoded, compressed and transmitted to the second device 11. The raw audio signal is also delivered to software module A1, the extraction unit 18. Software module A1 performs speech-to-text conversion. The output of software module A1 is a string with timestamps, preferably a sequence of characters forming words that form sentences. Therefore software module A1 is configured to receive a continuous digital input stream corresponding to the analogue audio signal captured by the microphone. Sometimes some processing is performed on the input audio signal, such as to reduce background noise. Alternatively, the input signal provided at the input of software module A1 may be a processed signal coming from the videoconference system (e.g., a filtered signal). The input signal could also be the compressed signal, or the compressed, encoded and decoded signal (all done at the first device 10), which could be used to evaluate whether there is too much signal compression which compromises the intelligibility of the content. The software module A1 can also be configured to split the continuous input data stream into segments to process each of them simultaneously. This requires a memory to store segments of the incoming signal. Each of the segments is analysed, possibly using a trained model or based on machine learning techniques, to translate the sequence of raw audio samples into words.

The incoming audio signal can be time-stamped based on a synchronization device such as an internal clock. The term "time-stamped" preferably means that each sample in the raw signal has a value that identifies the moment in time when it was acquired; for instance, the time elapsed since a reference event or a value in UTC format (e.g., January 28th 2022, 17:03:01.23). The reference event can be an absolute time instant (e.g., 1st of January of 1970 at 00:00:00 UTC) or a relative time instant (e.g., the moment when the device was turned on). The timestamp may not be explicit for all timestamp samples; only a few values or parameters may be stored, and the rest can be calculated or inferred.

Because the novel method involves communicating through the internet, it is assumed that the internal clock is synchronized with an external reference such as the Network Time Protocol, NTP. Such synchronization typically can be performed with low error, in the range of milliseconds (i.e., small enough to be neglected in speech applications). After the speech-to-text conversion, the identified words can be time-stamped as well, indicating e.g., the moment when the pronunciation of the word started and the moment when the pronunciation of the word ended. Likewise the pause between words can be calculated as well. Alternatively, instead of relying on network time, even though it is very accurate, it is often simpler to rely on time periods elapsed from a welldefined starting point in time.

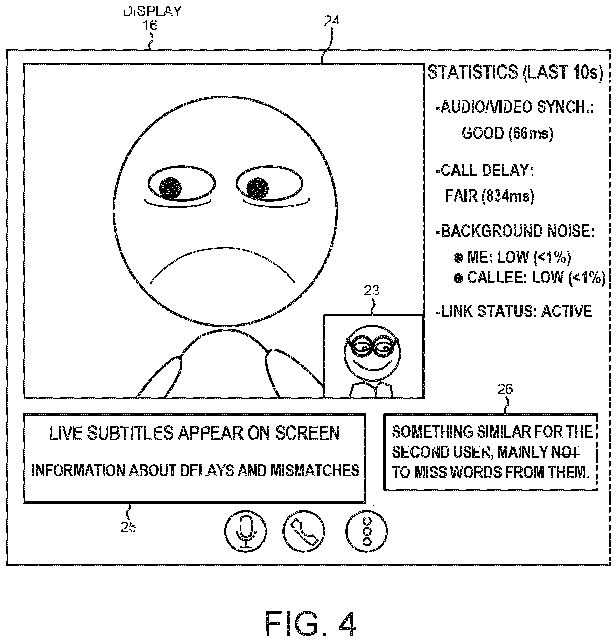

The output of software module A1 (extraction unit 18) is delivered to software module B (comparison unit 22), which first displays the text on the screen 16 of the user of the first device 10, e.g., as shown in FIG. 4. The text displayed on screen 16 corresponds to the analysis or speech-to-text conversion carried out at the first device 10. For instance, the text may appear in white colour. Besides the text itself, some information regarding the time length of the words, sentences or pauses may be displayed as well. While this is only an intermediate step, this information may already be valuable to the user of the first device 10.

Software module B causes the text to be displayed on the display 16 as soon as the text is available, in white colour to indicate that this corresponds to the data directly captured by the microphone 13. Information about the time length can be displayed as well. This text corresponding to automatic subtitles of the speech of the first user can be used by the first user as an indication of whether the user is speaking clearly, too fast or too slow. For instance, if the speech-to-text system fails to identify the words, it may mean that the first user is not vocalizing clearly enough or that too much background noise is being captured by the microphone 13.

At this moment in time, software module B (comparison unit 22) waits for the information coming from the second device 11. If the first user keeps on talking, multiple text lines may be displayed at the first device 10 in the same way and with the same information as described above. If too many lines appear without feedback from the second device 11, this is already an indication that the communication is not working properly and an indication of an aberration may be displayed because the information coming back from the second device 11 is preferably automatic (no manual action).

In general, the novel method is fully automated for the user, as no explicit user input is required to send summary messages, such as the fourth and sixth sequences of information between the first and second devices.

In parallel with the process described so far, the digital audio signal that was delivered to software module A1 (extraction unit 18) is also encoded, compressed and transmitted via the internet to the second device 11. The second device 11 receives the data from the internet and reconstructs the message. This whole process from microphone capture at the transmitter through encoder, network transmission, receiver decoder, jitter buffer and finally playback naturally adds a delay. Ultimately an audio signal is reconstructed and, as soon as it is available, is played at the speaker 15 of the second device 11.

At the moment that the digital audio signal has been reconstructed and is ready to be converted back to analogue to be reproduced at the speaker 15, it is also sent to software module A2 (extraction unit 21) of the second device 11. This module performs essentially the same operation as does software module A1 by converting the speech (reconstructed digital audio samples in this case) into text and timestamping it. The output (e.g., a text string with timestamps) is then sent back via the internet to the first device 10 and may be regarded as a summary of the message received by the first device 10. A text string (with timestamps) is much smaller than digital audio or video signals. The amount of information that is sent back from second device 11 to first device 10 is thus almost negligible compared to the amount of information that is sent when transmitting actual audio or video data. Because of the smaller size, this information can be sent via a protocol that guarantees information integrity, such as TCP, so that if a packet is lost, it is retransmitted until its reception is acknowledged at the other side. This eliminates the possibility of the original message being properly delivered but not properly notifying the sender (the message is lost on the way back). Preferably the timestamps are absolute. If the clock synchronization is not accurate enough, a relative timestamp may be used. In both cases, the time length of each word, sentence and pause can be evaluated with high precision. If absolute timestamps are available, then it is also possible to evaluate the communication delay between the data captured by the microphone at the first device 10 and the audio reproduced at the second device 11. If using RTCP protocol (RTP control protocol), which is normally used for both audio and video communication, this delay can be straight-forwardly monitored.

Software module A2 analyses the speech of the user of the first device 10. When receiving the message at the first device 10, it is delivered to software module B. The received message is compared to the message that had been stored. This comparison is very simple because both messages include text strings (messages) and numbers (timestamps). The timestamps are compared to determine whether the audio signal was reproduced at the same speed and whether the pauses between words were properly respected. Note that the information loss can also involve losing the pauses, and then the words would be pronounced together one right after the other. With absolute timestamps, the communication delay can also be determined.

Alternatively, when only relative timestamps are available, the total delay can be estimated from the moment when the message was sent until the text corresponding to that message returns. While this leads to an overestimation of the delay (compared to the actual delay, it involves an additional speech-to-text conversion and must travel back), it also defines an upper bound for the delay. If this upper bound is already small enough, then so is the actual delay.

After having received the information and having compared it, the only task that remains to be performed is to display the information in a simple way for the user of the first device 10. For the speech part, the simplest way is to display text, such as subtitles. To acknowledge the reception and highlight the mismatches, a different colour can be used. For instance, green may indicate matching text and time lengths; yellow may indicate time lengths differing more than e.g., 5%; red may indicate that either a word was not reproduced at the other side (red with strike-through) or that an unexpected word arrived (red).

No action is automatically taken based on the differences. The differences are simply reported to the user of the first device 10 as a means for the user to evaluate the necessity of repeating part of the speech, for example.

The information may be displayed in different ways. For instance, regarding the delays and time lengths of the words and pauses, lines or numbers can be used instead of colours. The length of the line may indicate the time length of the word or pause. Two different lines can be used, one for the first device 10 and one for the second device 11, to compare the lengths of both lines and determine whether they are similar.

In one embodiment, the software modules A1-A4 shown in FIG. 3 are all identical to extraction unit 18. In another embodiment, the software modules A2-A3, which extract information from signals that travel across the internet, are slightly modified and denoted as extraction unit 21. The software module B is the comparison unit 22.

FIG. 4 shows an exemplary graphical user interface (GUI) of the novel system for monitoring call quality. For example, the graphical user interface may be on the first device 10 or second device 11. A video of two users or participants in a video conference is displayed on the graphical user interface. For example, if the GUI is the display 16 of the first device 10, a small video panel 23 shows the user of the first device 10, the first user which could be a physician. If viewed by the first user, the panel 23 shows the "self-video", i.e., the video captured of the first user during the video conference. The large panel 24 shows the second user, which could be a patient to whom a mental health treatment is being administered.

A panel 25 indicates to the first user the acoustic output that the second user received based on the captured speech signals from the first user. In this example, during the video conference, live subtitles appear in panel 25 while the first user is talking to indicate what the second user has received based on the captured speech signals from the first user. The information contained in the subtitles in panel 25 is an indication of delays, mismatches or omitted words. For example, if the first user said, "You should not do this," and the second user heard "You should do this" because the word "not" was lost during transmission, a subtitle in panel 25 appears that reads "You should do this".

Similarly, in panel 26, live subtitles appear while the second user is talking to indicate what the first user has received based on the captured speech signals from the second user. Panel 26 thus assists the first user in recognizing whether any words from the second user were missed or omitted.

For example, the second user may reply to the message "You should do this" received by the second user with "I do want to". In this case, in panel 26 the subtitle "I do want to" appears. This allows the first user to distinguish the situation in which the second user says "I do want to" without any loss in transmission from the situation in which the second user says "I do not want to" with the word "not" being lost in transmission because in the latter case the subtitle in panel 26 would read "I do not want to". In addition, general call quality statistics, such as the level of background noise, the audio and video synchronization, and call delay, are indicated to the first user on the GUI. In the example shown in FIG. 4, the general call quality statistics are displayed next to the panel 24.

Relating to audio and video synchronization, it is important to remember that the audio signal and the video signal are independent signals that can fall out of synchronization, especially when the communication channel is unreliable and multiple packets of data may be lost at once. In an embodiment that monitors both audio and video signals, an extracted frame number for the video signal can be sent together with the timestamped text from the second device 11 to the first device 10. The comparison unit 22 (software module B) then analyses whether the extracted number associated with a certain text matches the number that was added to the same text at the first device 10. Mismatches in this check reveal desynchronization at the second device 11. Automatic corrective actions may be taken (e.g., sending to the second device 11 a message indicating to duplicate a few frames to restore the synchronization) or the aberration can simply be reported to the user of the first device 10.

The call delay can be precisely evaluated based on the extracted frame number or the text generated by the speech-to-text conversion, in combination with absolute timestamps. Each extracted frame number or text from audio data may be timestamped in order to define a pair of characteristic events with its corresponding time instant of reproduction at the second device 11. If relating to audio data, the speech-to-text conversion can be used to identify characteristic instants in the speech, like the beginning of a word. The pair of characteristic events are sent via the secure channel to the comparison unit 22, where the counterpart audio segment (or reference audio signal) can be found. Any delay is then evaluated as the difference between timestamps.

When absolute timestamps are not available, an upper bound for the delay can be determined. Instead of comparing, for a certain text element, the timestamp at the first device 10 with a timestamp at the second device 11, the timestamp at the first device 10 is now compared to the time instant when this particular text element was received again by the first device 10 via the secure channel.

In case of a video conference with multiple participants, for each of the participants the GUI as shown in FIG. 4 is displayed. In other words, the video conference with multiple participants is represented as multiple simultaneous video conferences with two participants. Alternatively, multiple panels 26 may be presented in one GUI as shown in FIG. 4, reflecting the messages received from different participants of the video conference.

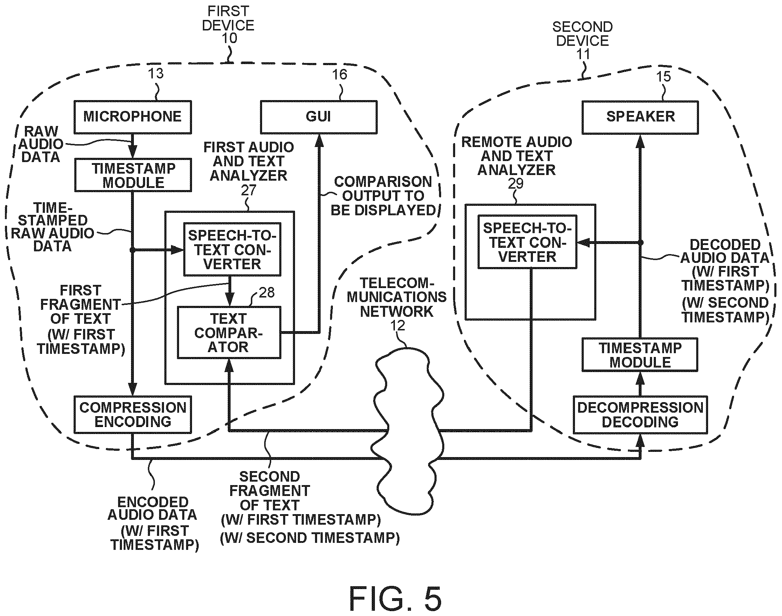

FIGS. 5-7 illustrate yet other embodiments of the novel system in which a first device 10 communicates with a second device 11 via a telecommunications network 12.

FIG. 5 illustrates a system that monitors the quality by which the speech of a user of the first device 10 is conveyed to a user of the second device 11. In one application, the user of the first device 10 is a physician or mental health profession who is remotely providing a mental health treatment to a patient who is the user of the second device 11. The physician can better deliver the mental health therapy if the physician is made aware of instances in which the physician's speech is not being accurately reproduced for the patient, such as due to poor transmission quality over the telecommunications network. Thus, the system of FIG. 5 is used to improve the delivery of telehealth and remote mental health therapies.

FIG. 5 illustrates that raw audio data representing the speech of the physician is acquired by a microphone 13 of a first device 10. The raw audio data is sent to a timestamp module to generate time-stamped raw audio data. The timestamp of the time-stamped raw audio data is just one of many timestamps that indicates, for example, the time instant at which the user began to speak a word. The time-stamped raw audio data is compressed and encoded to generate encoded audio data with a first timestamp.

The encoded audio data with the first timestamp is sent via the telecommunications network 12 to a second device 11. For example, the telecommunications network 12 uses the internet. At the second device 11, the encoded audio data is decompressed and decoded and input into a timestamp module to generate decoded audio data with a first timestamp and a second timestamp. Based on the decoded audio data with the first timestamp and the second timestamp, the second device 11 outputs an audio signal via speaker 15. The audio signal output by speaker 15 is the speech of the mental health professional that is presented to the patient, who is the user of the second device 11. The first timestamp indicates when the raw audio data was acquired (spoken by the physician), and the second timestamp indicates when the encoded audio data is received by the second device 11.

The time-stamped raw audio data is also input into a first audio and text analyzer 27 of the first device 10. The first audio and text analyzer 27 includes a speech-to-text converter and a text comparator 28. In the first audio and text analyzer 27, the timestamped raw audio data is converted into a first fragment of text with a first timestamp by the speech-to-text converter. Then the first fragment of text with the first timestamp is input into the text comparator.

In the second device 11, the decoded audio data with the first timestamp and the second timestamp is input into a remote audio and text analyzer 29 of the second device 11. The remote audio and text analyzer 29 includes a speech-to-text converter that converts the decoded audio data with the first timestamp and the second timestamp into a second fragment of text with the first timestamp and the second timestamp. The second fragment of text with the first timestamp and the second timestamp is sent to the text comparator 28 of the first audio and text analyzer 27 of the first device 10. The text comparator 28 compares the first fragment of text with the first timestamp to the second fragment of text with the first timestamp and the second timestamp to determine whether the first and second fragments of text are exactly the same or the same to a degree that a human being would not detect any difference. The result of the comparison of the text comparator 28 is then displayed on the GUI of the display 16.

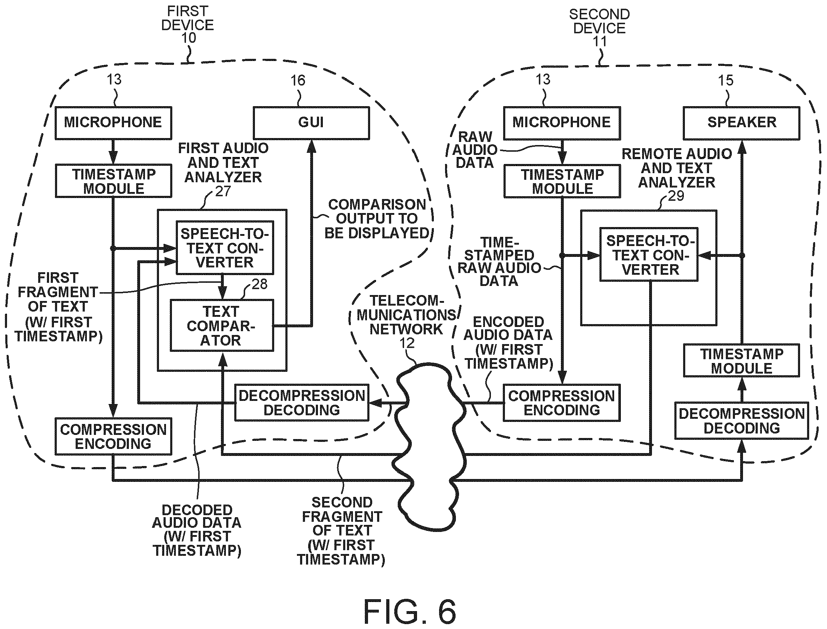

FIG. 6 shows the embodiment of FIG. 5 with some additional features used to indicate to the physician whether the speech of the patient has been accurately conveyed to the physician. In the system of FIG. 6, raw audio data in the form of the patient's speech is captured by the microphone 13 of the second device 11. The raw audio data is sent to a timestamp module to generate time-stamped raw audio data. The timestamped raw audio data is compressed and encoded to generate encoded audio data with a first timestamp.

The encoded audio data with the first timestamp is transmitted via the telecommunications network 12 to the first device 10, where it is decompressed and decoded to generate decoded audio data with the first timestamp. The speech-to-text converter of the first audio and text analyzer 27 receives the decoded audio data representing the speech of the patient. The speech-to-text converter of the first audio and text analyzer 27 generates a first fragment of text with the first time stamp that is input into the text comparator 28.

At the second device 11, the time-stamped raw audio data representing the speech of the patient is also input into the speech-to-text converter of the remote audio and text analyzer 29, which generates a second fragment of text with the first timestamp. The second fragment of text with the first timestamp is transmitted to the first device 10 via the telecommunications network 12 and is input into the text comparator 28. The text comparator 28 then compares the first fragment of text, which was generated by speech-to-text conversion at the first device 10, to the second fragment of text, which was generated by speech-to-text conversion at the second device 11, the source of the speech by the patient. The result of the comparison of the text comparator 28 is then displayed to the physician on the GUI of the display 16 of the first device 10.

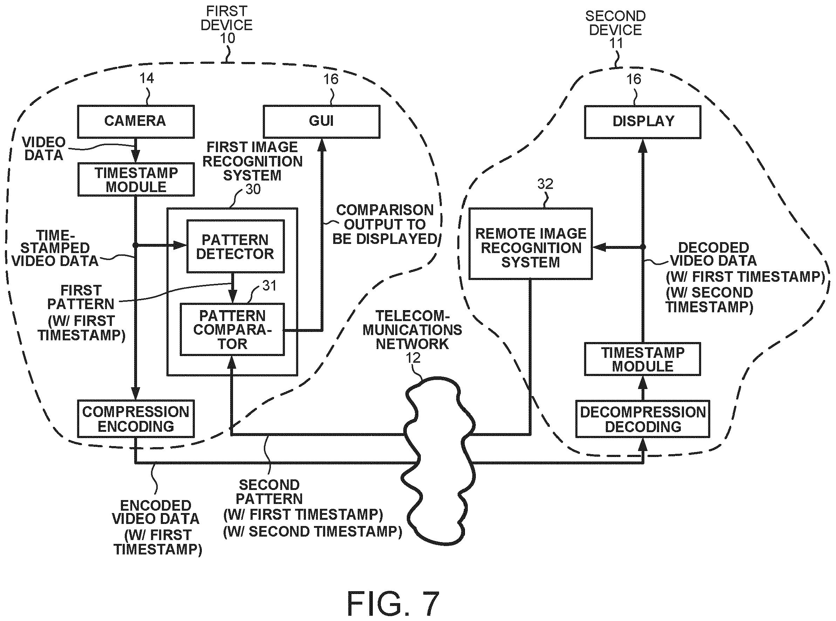

FIG. 7 shows an embodiment of the system for monitoring transmission quality where video data is being transmitted from the first device 10 to the second device 11. Video data is acquired by a video camera 14 of the first device 10. The video data is sent to a timestamp module to generate time-stamped video data. The time-stamped video data is compressed and encoded to generate encoded video data with a first timestamp.

The encoded video data with the first timestamp is transmitted via the telecommunications network 12 to the second device 11, where the video data is decompressed and decoded and input into a timestamp module to generate decoded video data with the first time-stamp and the second time stamp. Based on the decoded video data with the first timestamp and the second time stamp, the second device 11 displays an image and/or video on the display 16.

The time-stamped video data is also received by a first image recognition system 30 of the first device 10. The first image recognition system 30 includes a pattern detector and a pattern comparator 31. The pattern detector detects a pattern with the first timestamp in the time-stamped video data and sends the first pattern with the first timestamp to the pattern comparator 31.

The decoded video data with the first timestamp and the second timestamp is input into a remote image recognition system 32 of the second device 11. The remote image recognition system 32 includes a pattern detector. The pattern detector detects a second pattern with the first timestamp and the second timestamp in the decoded video data and sends the second pattern with the first timestamp and the second timestamp to the pattern comparator 31 in the first device 10. The pattern comparator 31 compares the first fragment of video data, which was generated by pattern recognition at the first device 10, to the second pattern of video data, which was generated by pattern recognition at the second device 11, which received the video data after it was transmitted across the telecommunications network. The result of the comparison of the pattern comparator 31 is then displayed on the GUI of the display 16 of the first device 10. The information shown to the user of the first device 10, such as a physician, indicates whether the video data displayed to the user of the second device 11, such as a patient, is an accurate reproduction of the video data generated by the camera 14 of the first device 10. For example, the comparison might indicate to the physician that some video frames were not transmitted to the patient but rather were missing from the video content displayed to the patient.

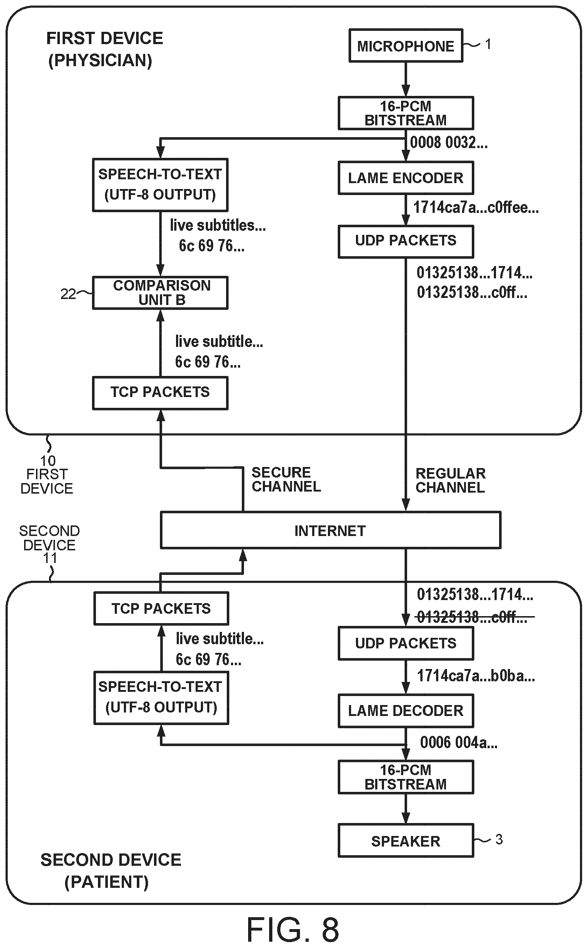

FIG. 8 is a diagram that provides more detail about how audio data is transmitted between the first device 10 and the second device 11 of the novel system. First, speech by the first user is captured by the microphone 13 of the first device 10. The acquired audio data, for example, takes the form of a pulse code modulation (PCM) bitstream showing the value of each 16-bit sample in hexadecimal. Two exemplary samples are displayed: 0008 and 0032.

The PCM bitstream is then converted, for example, by a LAME encoder that converts the input bitstream into another bitstream, for example into MP3-format. The encoded bitstream is split into segments. Two such segments are shown: 1714ca7a and cOffee. Each of the segments is sent in a user datagram protocol (UDP) packet to the second device 11. Two such packets are shown: 01325138...1714ca7a and 01325138...c0ffee. The first numbers indicate the header, which does not contain audio data. After the header comes the body with audio data (the message). When transmitting the packages via the internet, some packets may be lost, as is indicated by the strikethrough in FIG. 8. In this example, the package 01325138....c0ffee is lost during transmission.

The received UDP packets are unpacked by the second device 11, and a bitstream is created. Ideally, the unpacked content should be the same as the packaged content, but due to lost packets and errors, it may differ. The incoming bitstream is decoded by a LAME decoder, and an audio signal is recovered. Due to compression losses, even if no packages would have been lost, the exact original message may not be recovered.

In the first and second devices, the PCM bitstreams are sent to a speech-to-text conversion module, which converts the audio data or samples (e.g., a waveform) into a sequence of characters (in this example, encoded in UTF-8). For example, each group of 2 bytes corresponds to a character (6c -> l, 69 -> i, 76 -> v, ...). The character "20" can be used to designate a split in the characters between words.

In contrast to the audio data that is being transmitted in UDP packets or packages, the output of the speech-to-text conversion module is sent as transmission control protocol packets or packages. Thus, there are two separate communication channels employing different communication protocols. A first channel using a UDP communication protocol and a separate second channel using a TCP communication protocol. The TCP protocol may be regarded as having a higher transmission fidelity and cyber security than the UDP communication protocol.

Simply comparing the words of the text fragments character-by-character or word-by word, or in a more general wording entity-by-entity, can reveal differences:
For example, the output of the speech-to-text conversion module of the first device 10 may be as follows:
   6c 69 76 65 20 73 75 62 74 69 74 6c 65 73 20 61 70 70 65 61 72
And the output of the speech-to-text conversion module of the second device 11 may be as follows:
   6c 69 76 65 20 73 75 62 74 69 74 6c 65 20 61 70 70 65 61 72

The output of the speech-to-text conversion module in this example is in 8-Bit UCS Transformation Format (UTF-8). The comparison unit 22 of the first device 10 compares these two output sequences. The output of the speech-to-text conversion module of the first device 10 includes an additional 73 between 65 and 20. This implies that the character corresponding to 73 was not received by the user of the second device 11.

Because of the timestamps, it is possible automatically to synchronize the output of the speech-to-text conversion module of the second device 11 with the output of the speech-to-text conversion module of the first device 10, without having to correlate signals.

The amount of data in bytes sent via the TCP channel is significantly lower than the amount of data sent via the UDP channel. For example, a person uttering the phrase "live subtitles appear on screen" leads to 2.8s of audio signal corresponding to 22400 bytes of data to be packaged and transmitted. In contrast, the corresponding UTF-8 output of a speech-to-text conversion module converting the phrase "live subtitles appear on screen" into text corresponds to only 31 bytes. The amount of data required to transmit the same amount of human intelligible information is thus 1000 times smaller.

At the receiver side, the message "live subtitles appear on screen" may be reproduced as "life subtitles appear on screen". The difference in sound between the words "live" and "life", however, is small enough for the content/meaning of the message to be properly received.

In yet other embodiments of the novel method for monitoring the quality of video conferences, the system generates an enhanced or enriched video conference summary that includes information obtained from both the audio and video inputs. The summary incorporates additional data from the remote video conference participant, such as personal information and physiological data, alongside the transcribed text to contextualize the summary. The contextualized summary can be used for diagnosing the mental state of a remote patient in a mental health therapy session even when the video is interrupted or has low quality. The contextualized summary is thereby used to administer the mental health therapy. The contextualized summary can also be used to reduce the amount of stored data from a telehealth session when a contextualized summary of transcribed text is stored and is sufficient for later review, and the video file of the session can be deleted. The contextualized summary of transcribed text occupies much less memory space than does the video file.

The contextualized summary alleviates some of the disadvantages of performing telehealth sessions through video calls instead of in person. In conventional in-person mental health sessions, the health professional and the patient are usually sitting in the same room, facing each other and with a direct view of each other. The patient should be comfortably seated. During the session, various emotions are triggered in the patient, and those emotions may be externalized in various ways, such as through tone of voice, body language, facial expression or even crying. Some patients may not acknowledge such emotions or may even try to hide them. The objective of the health professional is not only to identify the patient's emotions, but also to determine what triggered those emotions. These tasks must be performed in order to diagnose and treat the patient. These tasks are complex, and thus health professionals rely on both verbal and non-verbal expressions from their patients. Not only is the patient's speech relevant, but also the context and manner in which the patient's responses are expressed and conveyed. It is therefore crucial for the health professional to be able to look at and listen to the patient during the entire time of the mental health session. During a video therapy session, however, the video quality may randomly degrade. After a short interruption, the video session often resumes at a lower quality. The video quality may eventually recover after several seconds or a few minutes. Until that time, however, the video image may freeze, become pixelated or lose synchronicity with the audio. When this happens, it is no longer possible for the health professional to gather insights from non-verbal communication indicators, such as the patient's facial expression. Compared to in-person sessions, this is the equivalent of putting a sheet between the patient and the health professional, which substantially constrains the observed information that the health professional obtains during the in-person session. Consequently, when the video quality drops during a remote session, the health professional must either interrupt the session to restore the video quality (e.g., ask the patient to wait until the quality recovers or restart the video call) or carry on with the session and accept the information loss, which may ultimately compromise the therapy session. Likewise, if the image momentarily freezes, the health professional may not be able to distinguish a frozen image caused by communication interruption from a patient who remains very still reflecting on a question with the video working properly. This is especially critical for sessions with patients with catatonic depression, whose motor functions are impaired and they may move very slowly.

Sometimes the disruption in the communication channel is too large, and the video call drops. In general, after a few seconds, both participants are able to reconnect, and the video session can resume. Two problems can arise in this situation. First, the health professional may have been talking when the call dropped and then must either ask the patient to indicate the last words the patient heard before the interruption, or the health professional must repeat a larger portion of speech that the patient already heard. Second, the patient may have said something during the interruption (such as asking the health professional whether they are still connected) or may have moved or changed a physiological state (such as increased heart rate due to anxiety when the call dropped). During the interruption, the health professional misses these relevant insights that could have been used in the therapy session.

When the video quality of a mental health therapy session drops, it may no longer be possible for the health professional to gather insights from the video stream. The health professional may not be looking at the patient on the screen when the session drops, as the health professional might be taking notes. The novel contextualized summary of the video session is displayed as an on-screen summary of the recent call moments. Even if the video becomes unreliable or drops, the health professional receives the contextualized transcript and can proceed with the session. A summary of the last few sentences is displayed on the screen of the health professional with a scroll bar to browse through earlier call moments.

Health professionals often save the video data of remote therapy sessions for future reference. However, if the quality of the received video is low, it might not be possible to contextualize the speech in a future analysis from the low-quality video data. The novel method allows patient features to be extracted from the raw data at the remote location of the patient, which is unaffected by the quality of data transmission. The contextualized summary together with the patient features are transmitted to the health professional separately from the video data. When the health professional reviews the video file of a session at a later date, it is tedious and time consuming to locate the most relevant moments (e.g., to identify the highest patient arousal) manually by listening to the entire file. Moreover, this manual annotation is subjective because different professionals may provide different annotations to the same recording. The novel method can indentify the moments in the therapy session at which the patient's measured physiological features passed defined thresholds. These moments can be bookmarked.

The novel method of contextualizing a summary of a video conference can also be used to save storage space in computers and servers. Although remote therapy sessions can be saved as a video file to keep as much information as possible, this requires a very large amount of storage space. Storing only the transcribed text is not advisable because, while that requires only a fraction of the storage space, it involves losing a substantial amount of information, such as the tape locations of the patient's arousal. However, storing the transcribed text together with patient features allows or the conversation to be contextualized with information related to the patient's mental state, while requiring only a fraction of the storage space compared to storing the entire video. Thus, according to a method according to the invention, the text generated from the speech opf the remote party can be stored in a memory of the first device alongside the corresponding values of the remote party feature.

In other embodiments, the contextualized summary is based on information from both the audio and the video signals. A number of patient features are extracted from the audio and video streams and can be used by the health professional during the therapy session. These features are preferably acquired and extracted passively and / or unobtrusively from the audio and video streams. The unobtrusiveness is advantageous because the measurement process does not influence the measured value from the patient. For example, heart rate is extracted via a photoplethysmogram (PPG), breathing rate is extracted from the patient's movement, pupil dilation is extracted from close-up images of the eyes, intonation and prosodic information is extracted from the audio data, and background noise is extracted from the audio data. In addition, combination features can be generated by combining multiple patient features, such as by combining the heart rate and background noise features. A combination feature can be generated by combining multiple features at the remote device. For example, a combination feature can be generated by combining values of at least two distinct remote party features, e.g. the heart rate and the pupil dilation of the remote party. Alternatively, a combination feature can be generated by combining multiple features at the local device that are received from the remote device.

The health professional uses prosodic information when interpreting the inputs provided by the patient during a remote therapy session. When reviewing the transcript of a therapy session, simply reading the words of the transcript may not be enough to properly diagnose a patient. Prosody preferably describes characteristics of speech that concern phonetic units, such as syllables, words and sentences, and it preferably describes aspects such as the rhythm, stress and intonation of speech. Prosody conveys meaning beyond the literal meaning, for example, by expressing viewpoint and attitude.

Prosodic information can be described in a phonetic file. The phonetic file can consist of a sequence of lines, each of them describing one sound or phoneme. An example of a phonetic file for the word "bonjour" is listed below:
; bonjour

| |
|---|
| _51 25 114 |
| b 62 |
| 0 127 48 170 |
| Z 110 53 116 |
| u 211 |
| R 150 50 91 |
| _9 |

Each line begins with a character indicating the phoneme followed by a sequence of numbers. The first number expresses the length in milliseconds of the phoneme or sound. In the example above, the length of the sound "Z" (for the "j" in bonjour) is 110 milliseconds. The optional subsequent numbers that follow the first number define the pitch points of the sound. For example, the highest pitch point of the sound "Z" occurs at 53% of the 110-millisecond sound. The pitch at the highest pitch point has a frequency that is 16% higher than that of the starting pitch (at 100%). The underscore "_" indicates a silence. As the word "bonjour" was used in a sentence in the example above, there was a silence of 51 milliseconds between the beginning of the sound "b" and the end of the preceding sound. The prosodic information can be used to create a piecewise linear intonation curve of the input speech. In one embodiment, the contextualized summary of the video session includes prosodic information as well as other patient features.

In another embodiment of the contextualized video conference summary, transcribed text of a remote party's speech preferably comprising prosodic information is reliably conveyed, separately from the video data, along with concurrent physiological data of the remote party. In one particular application, the remote party is a patient who is taking part in a mental health therapy session with a health professional.

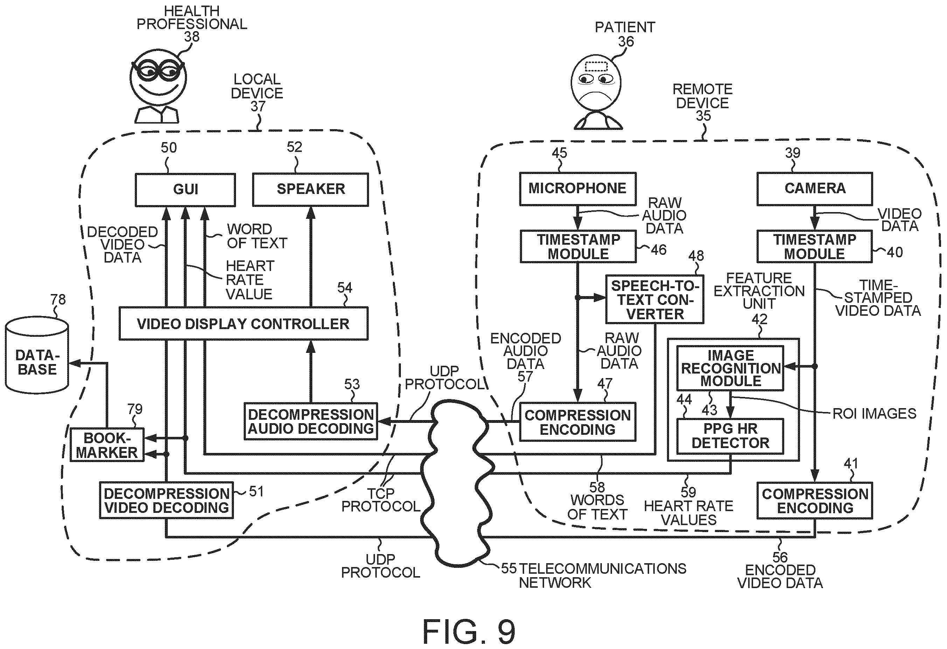

FIG. 9 shows an exemplary system that a health professional uses to administer a mental health therapy remotely to a patient. The remote patient takes part in a telehealth session using a video conferencing system that generates a contextualized summary of the video session. Transcribed text of the patient's speech along with an indication of the patient's concurrent heart rate is reliably conveying to the health professional separately from the video data, which is prone to periods of video signal interruption. The system for conveying the transcribed text of the patient's speech and concurrent physiological parameters of the remote patient includes a remote device 35 used by the patient 36 and a local device 37 used by the health professional 38.

Remote device 35 includes a video camera 39, an associated timestamp module 40, an associated compression encoding module 41, and a feature extraction unit 42. The feature extraction unit 42 includes a image recognition module 43 and a photoplethysmography (PPG) heart rate detector 44. Remote device 35 also includes a microphone 45, an associated timestamp module 46, an associated compression encoding module 47, and a speech-to-text converter 48. In one embodiment, remote device 35 is a smartphone and includes many more components than just those listed above, such as wireless communication modules. Moreover, the functionality of the components listed above can be implemented by mobile application programs, also known as mobile "apps". In one example, the image recognition module 43, the heart rate detector 44, and the speech-to-text converter 48 are implemented as software modules of a mobile app. In another example, the feature extraction unit 42 and the speech-to-text converter 48 are add-ons to commercially available video conferencing programs that typically run on personal computers and laptops. Alternatively, at least some of the functionality can be implemented as part of the operating system of the smartphone, such as an iOS mobile operating system or an Android mobile operating system. In other embodiments, remote device 35 is a tablet, a laptop or a personal computer. Local device 37 includes a graphical user interface 50 (such as a screen, display or monitor) and an associated decompression and video decoding module 51, as well as a speaker 52 and an associated decompression and audio decoding module 53. Local device 37 also includes a video display controller 54 that synchronizes the various pieces of data received from remote device 35 based on the timestamps associated with the data. For example, video display controller 54 synchronizes the audio data and the corresponding video images. Video display controller 54 also displays on graphical user interface 50 words of text and the corresponding heart rate values that were generated from data that was timestamped at the same time instants. The system for remotely administering a mental health therapy also includes a telecommunications network 55 over which audio data, video data, the words of text and the heart rate values are transmitted between the remote device 35 and the local device 37.

In one embodiment, encoded and compressed video data 56 is transmitted with the user datagram protocol (UDP) communication protocol from the compression encoding module 41 on remote device 35 over the telecommunications network 55 to the decompression and video decoding module 51 on local device 37. In addition, encoded and compressed audio data 57 is transmitted with the UDP communication protocol from the compression encoding module 47 on remote device 35 over the telecommunications network 55 to the decompression and video decoding module 53 on local device 37. Words of text 58 that are generated by speech-to-text converter 48 are transmitted with the transmission control protocol (TCP) communication protocol from remote device 35 over the telecommunications network 55 to local device 37. The heart rate values 59 that are generated by feature extraction unit 42 are also transmitted with the TCP communication protocol from remote device 35 over the telecommunications network 55 to local device 37.

The TCP communication protocol preserves information integrity and ensures that data is reliably received by requiring the receiving device to return acknowledgements ("ACKs") confirming that each sequenced data packet has been received. Even though there is a delay from the TCP receipt confirmation and the buffering and postprocessing of the heart rate calculation, the words of text 58 and heart rate values 59 usually do not arrive at local device 37 significantly later than does the corresponding video data 56 transmitted using the UDP communication protocol, which has no receipt confirmation, because the amount of data in the words of text 58 and heart rate values 59 is so much smaller than the amount of data in the video data 56. As soon as the words of text 58 and heart rate values 59 are received at local device 37, they are displayed on graphical user interface 50 regardless of which digital image of the video data is being displayed at that time.

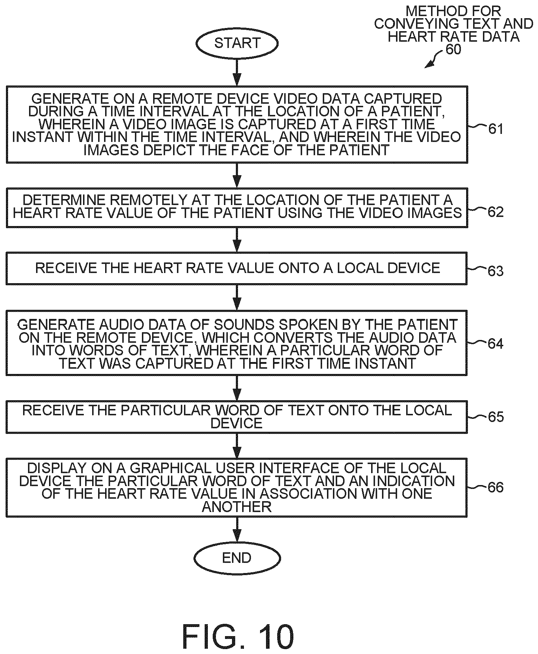

FIG. 10 is a flowchart of steps 61-66 of a method 60 for conveying physiological parameters of remote patient 36 and concurrent transcribed text of the patient's speech from remote device 35 to local device 37 used by health professional 38. The steps of FIG. 10 are described in relation to the system of FIG. 9.

In a first step 61, video data containing a set of digital images captured during a time interval is generated on remote device 35 remotely at the location of patient 36. The video data is captured by video camera 39, which in this embodiment is the camera of the patient's smartphone. In one example, the video data is an uncompressed video stream of 1024x768-pixel, 8-bit color images transmitted at 30fps, which corresponds to about 70 MB/s. The set of digital images depicts the face of patient 36. An intermediate image of the set of digital images is captured at a first time instant within the time interval. In a first implementation, the time interval is about three seconds, and an instantaneous heart beat is calculated in the time domain by determining the peakto-peak length of a single heart beat. In a second implementation, the time interval is about ten seconds, and the average heart beat is calculated in the frequency domain by determining the average length of the heart beats during the time interval.

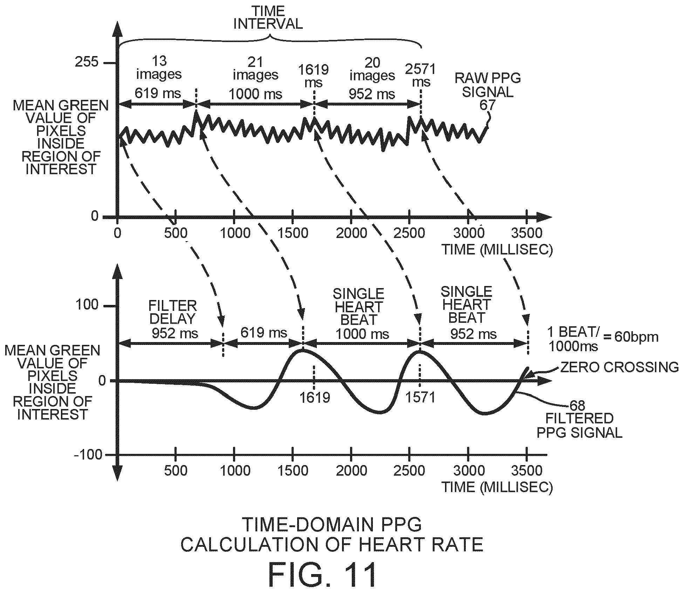

FIG. 11 illustrates an example of the first implementation in which digital images are captured during a time interval of at least 2571 milliseconds. The intermediate image is captured at the first time instant, which occurs 1619 milliseconds after the beginning of the time interval. The novel method determines the instantaneous heart rate of patient 36 as of the first time instant. However, there is some delay in calculating the heart rate value, which is available to be transmitted to local device 37 about three seconds after the set of digital images begins to be captured and about 1.5 seconds after the first time instant. In this example, the digital images are captured every 47.62 milliseconds. Thus, there are 21 images captured every 1000 milliseconds, and a set of 54 digital images are captured during the time interval of 2571 milliseconds.

In second step 62, a heart rate value of patient 36 is determined using the set of digital images. In other embodiments, features other than heart rate are extracted from sensor data from the smartphone of the patient 36. Examples of such other features include: movement amplitude of the patient obtained from accelerometer data of the smartphone, background noise obtained by analyzing the audio stream from the smartphone's microphone, amount of ambient light determined from the video stream, speech mismatches between the health professional and audio data received by the patient by analyzing audio streams from the health professional's and patient's microphones, and prosodic information obtained by analyzing the audio stream from the patient's microphone. Complex features can be derived by combining various of the features listed above. Complex features can also be generated by directly using the data provided by multiple sensors on the patient's smartphone. The complex features can be generated by combining multiple features at the remote device. Alternatively, multiple features can be transmitted to the local device, where they are combined to generate a complex feature.

In step 62, the heart rate value is determined remotely at the location of patient 36. In the first implementation, the instantaneous heart rate value is determined using photoplethysmography (PPG) analysis on the digital images that are captured by video camera 39 and then timestamped by timestamp module 40 before being received by feature extraction unit 42. The time-stamped video data is also compressed and encoded by compression encoding module 41 to generate encoded video data 56 with timestamps, which is transmitted to local device 37.

In the feature extraction unit 42, the face of patient 36 is first recognized by image recognition module 43. Then a region of interest on the patient's face is defined that is used for the PPG calculations. In this example, the region of interest is a rectangular area on the forehead of patient 36, such as the dashed rectangle shown on the patient's forehead in FIG. 9. Typically, the video data consists of red, green and blue components of the color of each pixel in a digital image. In this example, the signal used for PPG calculations is made up of the mean green value of the pixels inside the region of interest of each digital image in the set of digital images. Thus, there is one PPG sample for each digital image. Consequently, in this example, one PPG sample is generated every 47.62 milliseconds.

The upper curve in FIG. 11 is the raw PPG signal 67, which is generated by the PPG heart rate detector 44. Each point on the raw PPG signal 67 is the mean green value of the pixels inside the region of interest of a particular digital image. The raw PPG signal 67 has a large "DC" component from the color of the patient's skin plus a smaller "AC" amplitude resulting from the variable amounts of green light absorbed by varying amounts of blood in the blood vessels close to the skin of the forehead. The green channel is used because hemoglobin in the blood absorbs green light more than red light. Hemoglobin appears red, which means that much of the color red is reflected as opposed to being absorbed. A larger mean green value signifies that less green light was absorbed, which corresponds to a smaller volume of blood flowing through the blood vessels. A smaller mean green value corresponds to a higher volume of blood flowing through the arteries immediately after the heart pumps. A camera with an 8-bit detector for each color captures the green values on a scale of 0-255. The typical "DC" component of the green value is between 80 and 230, and the typical "AC" component is less than 1. The amplitude of the "AC" component is typically smaller than the camera resolution because it is less than 1 bit. Therefore, the green values of all of the pixels in the region of interest are averaged in order to enhance the resolution. The amplitude of the "AC" component of the raw PPG signal 67 and of the filtered PPG signal 68 shown in FIG. 11 is greatly exaggerated for illustration purposes.

In the time-based approach of the first implementation, each new sample of the raw PPG signal 67 is filtered by a bandpass filter, which rejects the signal components that are outside the frequency range of a human heart beat, such as the low-frequency disturbances caused by breathing. The bandpass filter inherently introduces a delay because the inband content that is supplied at the filter's input appears at the output only after a number of samples, which depends on the filter. The computational delay, which is usually very small, is in addition to the delay caused by the filter itself. The lower curve in FIG. 11 is the filtered PPG signal 68. FIG. 11 illustrates that the "DC" component has been removed from the filtered PPG signal 68. FIG. 11 illustrates that the filter delay in this example is 952 milliseconds. This means that the peaks of the filtered PPG signal 68 correspond to peaks of the raw PPG signal 67 that occurred 952ms earlier. A peak detector within PPG heart rate detector 44 then identifies the peaks of the filtered PPG signal 68. The peak detector also introduces an algorithmic delay of a number of samples because a peak can be identified only after it has occurred, and subsequent samples are determined to have lower values. Despite the filter delay and the peak detection delay, the heart rate value can be determined faster using the time-based approach of the first implementation than the frequency-based approach of the second implementation, which can determine the average heart rate for the 10-second time interval only after all of the samples in the time interval have been analyzed. For example, if the time interval used in the second implementation were to be shortened to the 3-second output time of the first implementation, then the accuracy of the average heart rate over the shortened time interval would be significantly reduced.

FIG. 11 illustrates that the filter delay is about 952ms, which corresponds to a delay of about 20 samples. Then the peak detector in PPG heart rate detector 44 must wait until there is a zero crossing with positive slope to confirm that any subsequent negative slope signifies that a peak has passed. In the example of FIG. 11, this peak detection delay is 619ms. The time between the first and second detected peaks is the length of time of a heart beat, in this example 1000ms. An instantaneous heart rate value of one beat per 1000ms corresponds to a heart rate of 60 beats per minute.

In another embodiment, the video data used to determine the heart rate is supplemented with PPG data from a wearable device, such as a ring or a wristband. Light is emitted from a light-emitting diode on the ring or wristband onto the finger or wrist of the patient, and a sensor measures the amount of light that was absorbed by the blood in the finger or wrist. This PPG data is transmitted using a short-distance protocol (such as Bluetooth) from the ring or wristband to the smartphone, where the heart rate detector 44 determines a second heart rate at the finger or wrist in addition to the heart rate at the forehead. This alternative remote party feature, which is based on two measured heart rates, indicates a change in the patient's blood pressure by comparing the heart beats at the patient's forehead with the heart beats at the patient's hand. Preferably, each heart rate value obtained from the video data and each heart rate value obtained from the wearable device are accompanied by timestamp values so that heart rates that were measured at the same time can be compared. Simultaneous timestamps on different devices, such as a smartphone and a wearable device, can be synchronized using network time protocol (NTP).

In step 63, the heart rate value 59 is transmitted from remote device 35 using the TCP communication protocol and is received onto local device 37. Compared to the encoded video data 56, the heart rate values 59 consist of less data and can be transmitted using a communication protocol such as TCP that guarantees information integrity. If a packet comprising the heart rate values is lost, that packet is retransmitted until its reception at local device 37 is acknowledged. So the heart rate values 59 will be reliably received at local device 37 even if some of the digital images of the video data 56 that were captured during the time interval are lost in transmission and are not resent under the UDP protocol.

In step 64, audio data is generated on remote device 35. The audio input is captured by microphone 45, which in this embodiment is the microphone of the patient's smartphone. In one example, the audio data is a stereo 2-channel (16 bit/channel) uncompressed data stream transmitted at 48kHz, which corresponds to about 192kBytes/sec. The audio data captures sounds spoken by patient 36. The raw audio data is then timestamped by timestamp module 46 before being received by speech-to-text converter 48. The time-stamped audio data is also compressed and encoded by compression encoding module 47 to generate encoded audio data 57 with timestamps, which is transmitted to local device 37. The speech-to-text converter 48 converts the audio data into words of text. The raw audio data that is converted into a particular word of text was captured starting at the first time instant, which corresponds to the time at which the intermediate image was captured. The intermediate image is the last image used to determine the heart beat length and thereby the instantaneous heart rate. For example, if the particular word spoken by patient 36 at the first time instant was "stressed", then the instantaneous heart rate of patient 36 at the moment the word "stressed" was spoken was 60bpm.

In step 65, the particular word of text 58 is transmitted from remote device 35 using the TCP communication protocol and is received onto local device 37. As with the heart rate value 59, the particular word of text 58 is also reliably received at local device 37 even if some of the digital images of the video data 56 that were captured during the time interval (such as the intermediate image) are lost in transmission and are not resent under the UDP protocol.

In step 66, the particular word of text is displayed on the graphical user interface 50 of the local device 37 in association with an indication of the heart rate value. In one embodiment, the heart rate value is displayed below the word that was spoken at the time that patient 36 exhibited the displayed instantaneous heart rate, which was at the first time instant.

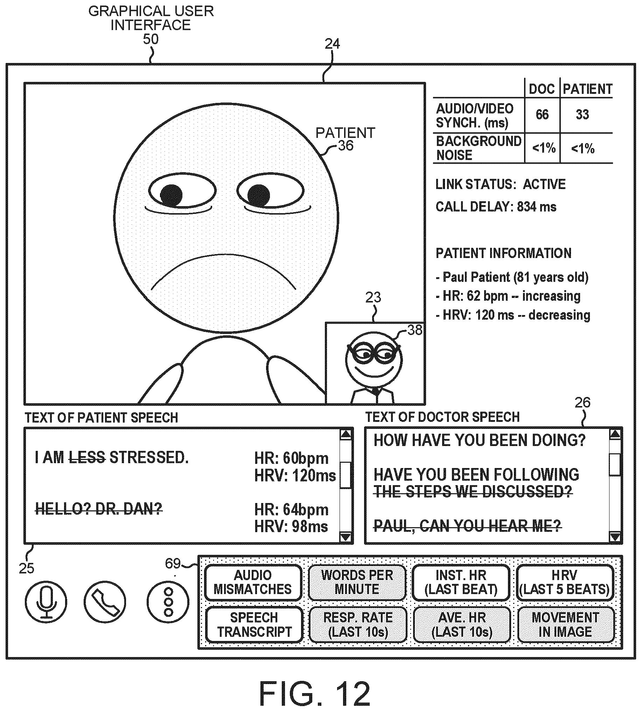

FIG. 12 shows an exemplary graphical user interface 50 of local device 37 on which the particular word of text (in this example "stressed") and an indication of the heart rate value (in this example 60bpm) are displayed in association with one another. In the embodiment of FIG. 12, the instantaneous heart rate (60bpm) of patient 36 is displayed to the right of the phrase containing the word "stressed" in the panel 25, which indicates the acoustic output that health professional 38 (Dr. Dan) has actually received based on the speech signals from patient 36 (Paul Patient). From panel 25, it is apparent that the patient's instantaneous heart rate increases from 60bpm to 64bpm when the patient notices that the video conference has been interrupted, and the patient does not hear the conclusion of Dr. Dan's question "Have you been following ...?" Panel 25 indicates that patient 36 has an instantaneous heart rate of 64bpm and a heart rate variability of 98ms at the time that patient 36 spoke the words "Hello? Dr. Dan?" (which were never received by health professional 38).

The transcribed text shown in panel 26 provides a comparison of the speech of health professional 38 at the local device 37 and the speech that is output to patient 36 at remote device 35. Words of text presented with a strikethrough are words that were spoken by health professional 38 but that were not output to patient 36. In this example, health professional 38 (Dr. Dan) is able to determine whether the words he has spoken were accurately output to patient Paul by remote device 35. In the example of FIG. 12, panel 26 indicates that health professional 38 stated, "Have you been following the steps we discussed?", but only the phrase "Have you been following" was output to patient Paul. The words "the steps we discussed" were lost during transmission and were not played to patient 36. Thus, the words "the steps we discussed" are displayed with a strikethrough.

Panel 69 at the bottom of graphical user interface 50 includes various feature buttons that can be selected to display the corresponding feature to health professional 38. In this example, Dr. Dan has selected to be shown (1) audio mismatches, (2) a speech transcript, (3) the instantaneous heart rate, and (4) the heart rate variability. The instantaneous heart rate is displayed to the right of the phrase that includes the word spoken at the time that patient 36 exhibited the indicated instantaneous heart rate. Although there is some delay in determining the heart rate value, and the transcribed text can be transmitted to local device 37 sooner than can the heart rate value, the heart rate value is inserted to the right of the associated word in panel 25 as soon as the heart rate value is received onto local device 37. The video display controller 54 inserts the feature value to the right of the word that was spoken by patient 36 at the time the feature was determined based on the timestamps of the audio data and video data. Panel 69 indicates that the heart rate variability is calculated based on the variability of the length in milliseconds of the last five heart beats. For each feature determined by the feature extraction unit 42, there is a separate software module to perform the required calculations. The module for determining the heart rate variability is not shown in FIG. 9.

Panel 69 in FIG. 12 also shows that the system can determine and display for health professional 38 the words minute spoken by patient 36, the respiration (breathing) rate of patient 36 over the prior ten seconds, the average heart rate of patient 36 over the prior ten seconds, and the degree of movement in the video images of patient 36.

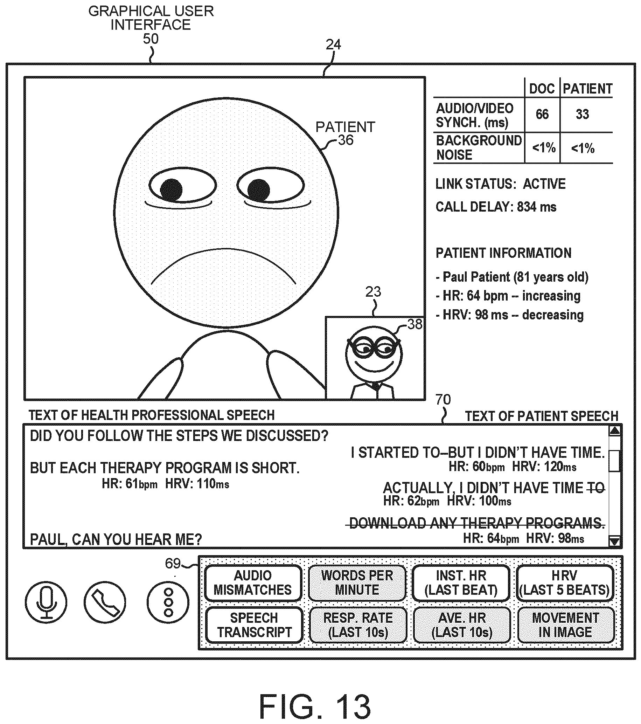

FIG. 13 shows another embodiment of how an indication of the patient's heart rate value and a concurrently spoken particular word of text are displayed in association with one another. In the embodiment of FIG. 13, the transcription of both the patient's and the health professional's speech is displayed in one larger panel 70. The particular word of text and the indication of the value of the patient's physiological feature are displayed in association with one another by displaying the value of the feature below the word that was spoken at the time instant when all of the data used to determine the value was acquired. The indications of the instantaneous heart rate and heart rate variability are displayed below the phrase that includes the word spoken at the time that patient 36 exhibited the indicated instantaneous heart rate and heart rate variability. For example, at the time instant that patient Paul 36 said the word "BUT", he had an instantaneous heart rate of 60bpm and a heart rate variability of 120ms. In addition, at the time instant that health professional 38 (Dr. Dan) said the word "THERAPY", patient Paul 36 had an instantaneous heart rate of 61bpm and a heart rate variability of 110ms.

In another aspect of the method 60 for conveying physiological parameters of remote patient 36 from remote device 35 to local device 37, a remote party combination feature is generated remotely by combining the remote party feature with an additional feature based on video data or audio data. The magnitude of the remote party combination feature is determined remotely at the location of the remote party. The remote party combination feature is determined based on the remote party feature combined with an additional feature that is based on the digital video data or on the audio data. The magnitude of the remote party combination feature is then received onto the local device. In one example, the additional feature is the level of background noise at the location of the remote party, which is determined using the audio data. The remote party feature is the heart rate of the remote party. This remote party combination feature can be used by health professional 38 to determine whether patient 36 is influenced by a stressful environment during the mental health therapy session.

In yet another embodiment of the novel method for monitoring aspects of a video conference, each video segment of a video tape is stored together with the associated value of a physiological parameter or feature characterizing the remote video participant at the time the video segment was captured. In one particular application, the remote party is a patient who is taking part in a mental health therapy session with a health professional. A distinct value of the physiological parameter is associated with each video segment of the overall video tape of the video conference. The method permits a large video tape of a mental health therapy session to be bookmarked at the locations during which the patient experienced higher levels of anxiety or arousal. The bookmarked video tape of the therapy session can later be retrieved from a database and more quickly reviewed by navigating directly to the most relevant video segments of the video tape.

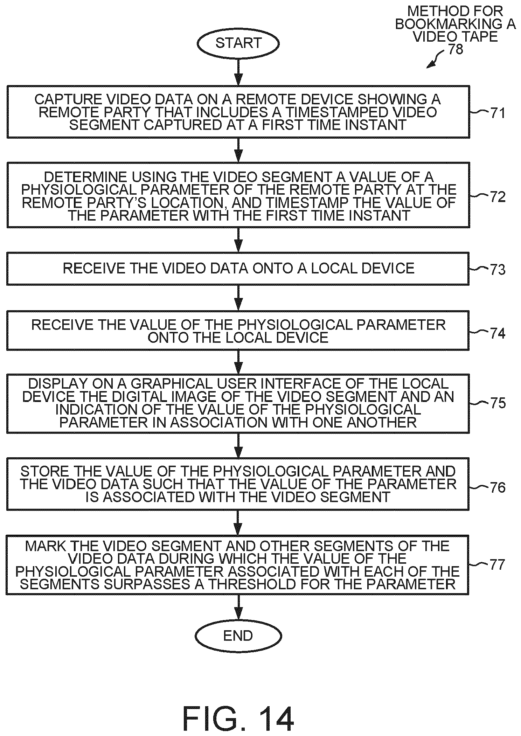

FIG. 14 is a flowchart of steps 71-77 of an exemplary method 78 for storing physiological parameter values of a remote party of a video conference together with the corresponding segment of the video at which the remote party exhibited the associated physiological characteristic. For example, in one implementation the method stores the heart rate value of a remote patient in a mental health therapy session together with the video segment during which the patient exhibited the indicated heart rate. One application of the method is for bookmarking locations of a video during which a remote participant exhibited higher arousal or anxiety as indicated by the values of the physiological parameter at those locations in the video.

In a first step 71, video data showing a remote party is captured on a remote device. For example, the remote device 35 is the smartphone of patient 36, who is taking part in a mental health therapy session. The video data includes a video segment captured during a time interval. The video segment includes a digital image that was captured at a first time instant within the time interval. The digital image is timestamped with the first time instant. For example, the video data depicts patient 36 and shows a region of interest on the patient's forehead. A video segment of the video data has a length of about three seconds and includes about sixty-three digital images. One of the sixty-three digital images was captured at the first time instant, which coincides with the end of a single heart beat of the patient.

In step 72, the value of a physiological parameter of the remote party is determined using the video segment. The value of the physiological parameter is determined remotely at the location of the remote party. The value of the physiological parameter is timestamped with the first time instant. For example, the instantaneous heart rate value of patient 36 is determined remotely on remote device 35 and is timestamped with the time at which the digital image was captured, which coincides with the end of the heart beat from which the heart rate value was determined.

In step 73, the video data is received onto local device 37. The video data includes the video segment. For example, local device 37 is the laptop of health professional 38, who is administering a mental health therapy session to patient 36.

In step 74, the value of the physiological parameter is received onto local device 37. For example, the value of the physiological parameter is 64bpm. The video segment and the value of the physiological parameter are not necessarily received onto local device 37 at the same time.

In step 75, the digital image of the video segment and an indication of the value of the physiological parameter are displayed in association with one another on the graphical user interface 50 of local device 37. Each timestamped value of the physiological parameter is associated with the video segment that includes the timestamped digital image that was timestamped with the same time instant. For example, the video segment (including the digital image) showing patient 36 as well as the heart rate value (64bpm) are displayed in association with one another on the screen of the laptop of health professional 38. For example, the video segment showing patient 36 is displayed in panel 24, and the heart rate value 64bpm is displayed in panel 25. The heart rate value 64bpm is associated with a heart rate exhibited by patient 36 while the patient was being depicted by the video segment. Both the heart rate value and the digital image are timestamped with the first time instant.

In step 76, the value of the physiological parameter and the video data are stored such that the value of the physiological parameter is associated with the video segment. For example, the video data is forwarded by the local device 37 of health professional 38 to be stored in a database 78. In addition to viewing the video tape in real-time on the screen of his laptop, health professional 38 can also retrieve the video tape at a later time from database 78 to review the mental health therapy session with patient 36. The video data is stored such that each video segment of the video tape is associated with the value of the heart rate exhibited by patient 36 during that video segment. Because of how the video data and heart rate values are stored, health professional 38 can identify those video segments of the video tape during which patient 36 had a particular heart rate.

In step 77, a bookmarker module 79 in the local device 37 marks the video segment and other segments of the video data during which the value of the physiological parameter associated with each of the segments of the video data surpasses a threshold for the physiological parameter. For example, the video tape is bookmarked at locations at which the heart rate value of patient 36 exceeds a heart rate threshold, such as 90bpm. This bookmarking allows health professional 38 to skip to those video segments of the video tape during which patient 36 exhibited high levels of anxiety or arousal. Health professional 38 can review the video of the therapy session in less time by skipping to the sections of the video that are most revealing about the patient's mental state.

In another embodiment, instead of a physiological parameter being stored in association with a video segment of a video, prosodic information is stored with the associated video segment from which the prosodic information was determined. The video can then be bookmarked at locations at which the patient 36 exhibits a particular emotion as indicated by the prosodic information. This type of bookmarking allows health professional 38 to skip to those video segments of the video tape during which patient 36 was, for example, angry, ironic or defensive.

In another application of the method, the heart rate values of a remote deponent in a litigation deposition are stored together with the video segment of the deposition during which the deponent exhibited the indicated heart rate. The locations in a deposition video tape are bookmarked during which the deponent exhibited higher arousal or anxiety as indicated by the deponent's heart rate values at those locations in the deposition. Alternatively, the video tape can be bookmarked based on prosodic information to indicate the locations in the deposition at which the deponent was, for example, defensive. An attorney reviewing a long deposition video tape can easily skip to the bookmarked segments during which the deponent was uncomfortable or defensive providing testimony on the questioned topic. The attorney can thereby review the video of the deposition in less time by skipping to the sections of the video that cover the testimony most likely to be contrary to the deponent's interests.

## Claims

1. Method for telecommunication between a local device and a remote device, comprising the steps
- acquiring via a remote device data relating to a user of the remote device and / or relating to the surroundings of the user of the remote device, wherein the data preferably comprises video and / or audio data,
- generating from speech captured from the user of the remote device at least one entity of text, preferably by means of a conversion unit,
- extracting, by means of an extraction unit, at least one feature value from the acquired data, wherein the at least one feature value preferably pertains to a physiological state of the user or to the surroundings of the user;
- synchronizing and / or co-registering, by means of a snychronisation unit preferably of a local device, the at least one entity of text with the at least one feature value, such that the at least one entity of text is temporally linked to the at least one feature value, and
- displaying by means of an output unit of the local device the at least one entity of text and the at least one feature value, wherein the at least one entity of text and the at least one feature value are preferably displayed aligned in time, and / or
- storing, preferably in a memory of the local device, the synchronized and / or co-registered at least one entity of text and the at least one feature value and / or the acquired data, **characterized by** comprising
- a step of detecting whether a communication between the remote device and the local device has been interrupted; and if an interruption for a period of time has been detected,
- re-sending or re-attempting to send after resumption of the communication between the remote device and the local device one or more of:
- the data relating to the user of the remote device and / or relating to the surroundings of the user of the remote device acquired during the period of time, and / or
- at least one entity of text generated from speech captured from the user of the remote device during the period of time, and / or
- at least one feature value extracted from the data relating to the user of the remote device and / or relating to the surroundings of the user of the remote device acquired during the period of time, wherein preferably the at least one entity of text is synchronized and / or co-registered with the at least one feature value.

2. Method according to claim 1, wherein the step of extracting at least one feature value is performed by an extraction unit of the remote device and / or the step of generating from speech captured from the user of the remote device at least one entity of text is performed by means of a conversion unit of the remote device.

3. Method according to claim 1 or 2, wherein at least a subset of the acquired data, preferably comprising at least a subset of the acquired video and / or audio data, is transmitted via a first communication channel between the remote device and the local device and the at least one entity of text and the at least one feature value are transmitted via a separate, second communication channel between the remote device and the local device.

4. Method according to one of the preceding claims, wherein the synchronization and / or co-registration step includes synchronising and / or co-registering at least two continuous or intermittent data streams, preferably a first data stream corresponding to the speech captured from the user of the remote device and comprising the at least one entity of text and a second data stream comprising the at least one feature value extracted from the acquired data on a time-frame-by-time-frame-basis, such that for each timeframe the speech captured from the user of the remote device in this timeframe and the feature value extracted from data acquired in this time-frame are associated with each other and / or linked in time to each other.

5. Method according to one of the preceding claims, further comprising a step of generating an enriched transcript of the speech captured from the user of the remote device by fusing a first file corresponding to the speech captured from the user of the remote device in a time interval comprising at least one time-frame and comprising at least one entity of text with a second file corresponding to a set of feature values extracted from data acquired in the time interval comprising at least one time-frame and comprising at least one feature value and / or with data relating to the user of the remote device and / or relating to the surroundings of the user of the remote device acquired in the time interval.

6. Method according to one of the preceding claims, wherein the feature value corresponds to a physiological parameter of the user of the remote device and preferably is an instantaneous heart rate of the user, an average heart rate of the user, a heart rate variability of heart beats of the user, an average breathing rate of the user, a pupil dilation of the user.

7. Method according to one of the preceding claims, wherein the at least one the feature value corresponds to an emotional state of the user of the remote device and preferably comprises prosodic information pertaining to speech captured from the user of the remote device, in particular information regarding intonation, pitch, length of sounds, loudness and / or timbre.

8. Method according to one of the preceding claims, wherein the data acquired via the remote device relating to the user of the remote device and / or relating to the surroundings of the user of the remote device can comprise video data, audio data, location data, movement data, gyrometer data, accelerometer data, pressure data, physiological data, data pertaining to the settings of a device used for obtaining physiological data, temperature data, humidity data, data pertaining to the time and / or date, activity data such as a step count, data pertaining to the age and / or ethnicity and / or medical history of the user.

9. Method according to one of the preceding claims, further comprising the step of deriving at least one combination feature, preferably by means of the local device, wherein the combination feature is derived by combining at least two feature values, preferably pertaining to two different features, and / or wherein the combination feature is derived by combining at least one feature value with at least a subset of the acquired data.

10. Method according to one of the preceding claims, further comprising the step of comparing the at least one extracted feature value to a threshold value and, if the at least one feature value exceeds the threshold value or falls outside of a tolerance range surrounding the feature value, bookmarking the at least one entity of text snychronized and / or coregistered with the at least one feature value, wherein preferably also the acquired data from that the at least one feature value was extracted are bookmarked.

11. Method according to one of the preceding claims, wherein the remote device and / or the local device each comprises one or more preferably electronic device(s), such as a smartphone, a laptop, a tablet, a computer, a smartwatch, smart glasses or any other wearable electronic device, a device running a server and / or a device running a cloud service.

12. System for telecommunication between a local device and a remote device, configured to perform a method according to one of claims 1 to 11, comprising:
- a local device, and
- a remote device, wherein
the remote device is configured to acquire data relating to a user of the remote device and / or relating to the surroundings of the user of the remote device, wherein the data preferably comprises video and / or audio data, and comprises
- an extraction unit configured to extract at least one feature value from the acquired data, wherein the at least one feature value preferably pertains to a physiological state of the user or to the surroundings of the user,
- a conversion unit configured to generate from speech captured from the user of the remote device at least one entity of text, and
- a communication unit configured to transmit at least a subset of the acquired data, preferably comprising at least a subset of the acquired video and / or audio data, via a first communication channel to the local device and to transmit the at least one entity of text and the at least one feature value via a separate, second communication channel from the remote device to the local device.

13. System according to claim 12, wherein
the local device comprises
- a communication unit configured to receive at least a subset of the acquired data, preferably comprising at least a subset of the acquired video and / or audio data, via a first communication channel from the remote device and to receive the at least one entity of text and the at least one feature value via a separate, second communication channel from the remote device;
- a synchronsation unit configured to synchronize and / or co-register the at least one entity of text with the at least one feature value, such that the at least one entity of text is temporally linked to the at least one feature value, and a
- control unit configured to control an output unit of the local device to display the at least one entity of text and the at least one feature value and / or to store the at least one entity of text and the at least one feature value, wherein the at least one entity of text and the at least one feature value are preferably displayed aligned in time.

14. System according to one of claims 12 to 14, wherein
the remote device further comprises
- a detection unit configured to detect whether a communication between the remote device and the local device has been interrupted; and if an interruption for a period of time has been detected,
- the control unit of the remote device is configured to control the communication unit of the remote device to re-send or re-attempt to send after resumption of the communication between the remote device and the local device the data relating to the user of the remote device and / or relating to the surroundings of the user of the remote device acquired during the period of time, and / or
at least one entity of text generated from speech captured from the user of the remote device during the period of time, and / or
at least one feature value extracted from the data relating to the user of the remote device and / or relating to the surroundings of the user of the remote device acquired during the period of time, wherein preferably the at least one entity of text is synchronized and / or co-registered with the at least one feature value.

15. System according to one of claims 12 to 15, wherein the remote device and / or the local device each comprises one or more preferably electronic device(s), such as a smartphone, a laptop, a tablet, a computer, a smartwatch, smart glasses or any other wearable electronic device, a device running a server and / or a device running a cloud service.

16. A machine-readable storage medium comprising instructions which, when executed by a device, cause the device to perform a method according to one of claims 1 to 11 and / or cause the device to adopt the functionality of a remote device or local device according to one of claims 12 to 15.

## Patentansprüche

1. Verfahren zur Telekommunikation zwischen einer lokalen Vorrichtung und einer Remote-Vorrichtung, umfassend die Schritte:
- Erfassen, über eine Remote-Vorrichtung, von Daten über einen Benutzer der Remote-Vorrichtung und/oder über die Umgebung des Benutzers der Remote-Vorrichtung, wobei die Daten bevorzugt Video- und/oder Audiodaten umfassen,
- Erzeugen von zumindest einer Texteinheit aus der von dem Benutzer der Remote-Vorrichtung erfassten Sprache, bevorzugt mittels einer Konvertierungseinheit,
- Extrahieren, mittels einer Extraktionseinheit, von zumindest einem Merkmalswert aus den erfassten Daten, wobei der zumindest eine Merkmalswert sich bevorzugt auf einen physiologischen Zustand des Benutzers oder auf die Umgebung des Benutzers bezieht;
- Synchronisieren und/oder aneinander Ausrichten, mittels einer Synchronisationseinheit, bevorzugt einer lokalen Vorrichtung, der zumindest einen Texteinheit und des zumindest einen Merkmalswerts, sodass die zumindest eine Texteinheit zeitlich mit dem zumindest einen Merkmalswert verknüpft ist, und
- Anzeigen, mittels einer Ausgabeeinheit der lokalen Vorrichtung, der zumindest einen Texteinheit und des zumindest einen Merkmalswerts, wobei die zumindest eine Texteinheit und der zumindest eine Merkmalswert bevorzugt zeitlich ausgerichtet angezeigt werden, und/oder
- Speichern, bevorzugt in einem Speicher der lokalen Vorrichtung, der synchronisierten und/oder aneinander ausgerichteten zumindest einen Texteinheit und des zumindest einen Merkmalswerts und/oder der erfassten Daten,
**dadurch gekennzeichnet, dass** das Verfahren umfasst:
- einen Schritt des Erkennens, ob eine Kommunikation zwischen der Remote-Vorrichtung und der lokalen Vorrichtung unterbrochen wurde; und, falls eine Unterbrechung für einen bestimmten Zeitraum erkannt wurde,
- erneutes Senden oder erneutes versuchtes Senden nach Wiederaufnahme der Kommunikation zwischen der Remote-Vorrichtung und der lokalen Vorrichtung, eines oder mehrerer von:
- den während des Zeitraums erfassten Daten in Bezug auf den Benutzer der Remote-Vorrichtung und/oder in Bezug auf die Umgebung des Benutzers der Remote-Vorrichtung, und/oder
- zumindest einer Texteinheit, die aus der während des Zeitraums von dem Benutzer der Remote-Vorrichtung erfassten Sprache erzeugt wurde, und/oder
- zumindest einem Merkmalswert, extrahiert aus den während des Zeitraums erfassten Daten in Bezug auf den Benutzer der Remote-Vorrichtung und/oder in Bezug auf die Umgebung des Benutzers der Remote-Vorrichtung, wobei bevorzugt die zumindest eine Texteinheit und der zumindest eine Merkmalswert synchronisiert und/oder aneinander ausgerichtet sind.

2. Verfahren nach Anspruch 1, wobei der Schritt des Extrahierens von zumindest einem Merkmalswert durch eine Extraktionseinheit der Remote-Vorrichtung durchgeführt wird und/oder der Schritt des Erzeugens von zumindest einer Texteinheit aus der von dem Benutzer der Remote-Vorrichtung erfassten Sprache mittels einer Konvertierungseinheit der Remote-Vorrichtung durchgeführt wird.

3. Verfahren nach Anspruch 1 oder 2, wobei zumindest eine Teilmenge der erfassten Daten, bevorzugt umfassend zumindest eine Teilmenge der erfassten Video- und/oder Audiodaten, über einen ersten Kommunikationskanal zwischen der Remote-Vorrichtung und der lokalen Vorrichtung übertragen wird und die zumindest eine Texteinheit und der zumindest eine Merkmalswert über einen separaten, zweiten Kommunikationskanal zwischen der Remote-Vorrichtung und der lokalen Vorrichtung übertragen werden.

4. Verfahren nach einem der vorhergehenden Ansprüche, wobei der Schritt des Synchronisierens und/oder des Ausrichtens aneinander das Synchronisieren und/oder das Ausrichten aneinander von zumindest zwei kontinuierlichen oder intermittierenden Datenströmen umfasst, bevorzugt einem ersten Datenstrom, der der von dem Benutzer der Remote-Vorrichtung erfassten Sprache entspricht und die zumindest eine Texteinheit umfasst, und einem zweiten Datenstrom, der den zumindest einen Merkmalswert umfasst, der auf einer Zeitrahmen-für-Zeitrahmen-Basis aus den erfassten Daten extrahiert wird, sodass für jeden Zeitrahmen die in diesem Zeitrahmen von dem Benutzer der Remote-Vorrichtung erfasste Sprache und der aus den in diesem Zeitrahmen erfassten Daten extrahierte Merkmalswert einander zugeordnet und/oder zeitlich miteinander verknüpft sind.

5. Verfahren nach einem der vorhergehenden Ansprüche, ferner umfassend einen Schritt zum Erzeugen eines angereicherten Transkripts der von dem Benutzer der Remote-Vorrichtung erfassten Sprache, indem eine erste Datei, die der von dem Benutzer der Remote-Vorrichtung in einem Zeitintervall erfassten Sprache entspricht, umfassend zumindest einen Zeitrahmen und umfassend zumindest eine Texteinheit, zusammengeführt wird mit einer zweiten Datei, die einem Satz von Merkmalswerten entspricht, die aus Daten extrahiert wurden, die in dem Zeitintervall erfasst wurden, und umfassend zumindest einen Zeitrahmen und umfassend zumindest einen Merkmalswert, und/oder mit Daten, die sich auf den Benutzer der Remote-Vorrichtung beziehen und/oder die sich auf die Umgebung des Benutzers der Remote-Vorrichtung beziehen, die in dem Zeitintervall erfasst wurden.

6. Verfahren nach einem der vorhergehenden Ansprüche, wobei der Merkmalswert einem physiologischen Parameter des Benutzers der Remote-Vorrichtung entspricht und bevorzugt eine momentane Herzfrequenz des Benutzers, eine durchschnittliche Herzfrequenz des Benutzers, eine Herzfrequenzvariabilität von Herzschlägen des Benutzers, eine durchschnittliche Atemfrequenz des Benutzers, eine Pupillenerweiterung des Benutzers ist.

7. Verfahren nach einem der vorhergehenden Ansprüche, wobei der zumindest eine Merkmalswert einem emotionalen Zustand des Benutzers der Remote-Vorrichtung entspricht und bevorzugt prosodische Informationen bezüglich der von dem Benutzer der Remote-Vorrichtung erfassten Sprache umfasst, insbesondere Informationen bezüglich Betonung, Tonhöhe, Länge von Tönen, Lautstärke und/oder Klangfarbe.

8. Verfahren nach einem der vorhergehenden Ansprüche, wobei die über die Remote-Vorrichtung erfassten Daten bezüglich des Benutzers der Remote-Vorrichtung und/oder bezüglich der Umgebung des Benutzers der Remote-Vorrichtung Videodaten, Audiodaten, Standortdaten, Bewegungsdaten, Gyrometerdaten, Beschleunigungsmesserdaten, Druckdaten, physiologische Daten, Daten bezüglich der Einstellungen einer zum Erfassen physiologischer Daten verwendeten Vorrichtung, Temperaturdaten, Feuchtigkeitsdaten, Daten bezüglich der Uhrzeit und/oder des Datums, Aktivitätsdaten wie beispielsweise eine Schrittzahl, Daten bezüglich des Alters und/oder der ethnischen Zugehörigkeit und/oder der Krankengeschichte des Benutzers umfassen können.

9. Verfahren nach einem der vorhergehenden Ansprüche, ferner umfassend den Schritt des Ableitens zumindest eines Kombinationsmerkmals, bevorzugt mittels der lokalen Vorrichtung, wobei das Kombinationsmerkmal durch Kombinieren zumindest zweier Merkmalswerte, bevorzugt zweier verschiedener Merkmale, abgeleitet wird und/oder wobei das Kombinationsmerkmal durch Kombinieren zumindest eines Merkmalswerts mit zumindest einer Teilmenge der erfassten Daten abgeleitet wird.

10. Verfahren nach einem der vorhergehenden Ansprüche, ferner umfassend den Schritt des Vergleichens des zumindest einen extrahierten Merkmalswerts mit einem Schwellenwert und, falls der zumindest eine Merkmalswert den Schwellenwert überschreitet oder außerhalb eines den Merkmalswert umgebenden Toleranzbereichs liegt, des Markierens der zumindest einen mit dem zumindest einen Merkmalswert synchronisierten und/oder daran ausgerichteten Texteinheit, wobei bevorzugt auch die erfassten Daten, aus denen der zumindest eine Merkmalswert extrahiert wurde, markiert werden.

11. Verfahren nach einem der vorhergehenden Ansprüche, wobei die Remote-Vorrichtung und/oder die lokale Vorrichtung jeweils eine oder mehrere bevorzugt elektronische Vorrichtungen umfassen, wie etwa ein Smartphone, einen Laptop, ein Tablet, einen Computer, eine Smartwatch, eine Datenbrille oder eine andere tragbare elektronische Vorrichtung, eine Vorrichtung, auf der ein Server ausgeführt wird, und/oder eine Vorrichtung, auf der ein Cloud-Dienst ausgeführt wird.

12. System zur Telekommunikation zwischen einer lokalen Vorrichtung und einer Remote-Vorrichtung, konfiguriert zum Ausführen eines Verfahrens nach einem der Ansprüche 1 bis 11, umfassend:
- eine lokale Vorrichtung, und
- eine Remote-Vorrichtung, wobei
die Remote-Vorrichtung dazu konfiguriert ist, Daten über einen Benutzer der Remote-Vorrichtung und/oder über die Umgebung des Benutzers der Remote-Vorrichtung zu erfassen, wobei die Daten bevorzugt Video- und/oder Audiodaten umfassen, und umfasst:
- eine Extraktionseinheit, konfiguriert zum Extrahieren von zumindest einem Merkmalswert aus den erfassten Daten, wobei der zumindest eine Merkmalswert sich bevorzugt auf einen physiologischen Zustand des Benutzers oder auf die Umgebung des Benutzers bezieht,
- eine Konvertierungseinheit, konfiguriert zum Erzeugen von zumindest einer Texteinheit aus der von dem Benutzer der Remote-Vorrichtung erfassten Sprache, und
- eine Kommunikationseinheit, konfiguriert zum Übertragen von zumindest einer Teilmenge der erfassten Daten, bevorzugt umfassend zumindest eine Teilmenge der erfassten Video- und/oder Audiodaten, über einen ersten Kommunikationskanal an die lokale Vorrichtung und zum Übertragen der zumindest einen Texteinheit und des zumindest einen Merkmalswerts über einen separaten, zweiten Kommunikationskanal von der Remote-Vorrichtung an die lokale Vorrichtung.

13. System nach Anspruch 12, wobei die lokale Vorrichtung umfasst
- eine Kommunikationseinheit, konfiguriert zum Empfangen von zumindest einer Teilmenge der erfassten Daten, bevorzugt umfassend zumindest eine Teilmenge der erfassten Video- und/oder Audiodaten, über einen ersten Kommunikationskanal von der Remote-Vorrichtung und zum Empfangen der zumindest einen Texteinheit und des zumindest einen Merkmalswerts über einen separaten, zweiten Kommunikationskanal von der Remote-Vorrichtung;
- eine Synchronisierungseinheit, konfiguriert zum Synchronisieren und/oder zum Ausrichten aneinander der zumindest einen Texteinheit und des zumindest einen Merkmalswerts, sodass die zumindest eine Texteinheit zeitlich mit dem zumindest einen Merkmalswert verknüpft ist, und eine
- Steuereinheit, dazu konfiguriert, eine Ausgabeeinheit der lokalen Vorrichtung zu steuern, um die zumindest eine Texteinheit und den zumindest einen Merkmalswert anzuzeigen und/oder die zumindest eine Texteinheit und den zumindest eine Merkmalswert zu speichern, wobei die zumindest eine Texteinheit und der zumindest eine Merkmalswert bevorzugt zeitlich ausgerichtet angezeigt werden.

14. System nach einem der Ansprüche 12 bis 14, wobei die Remote-Vorrichtung ferner umfasst:
- eine Erkennungseinheit, konfiguriert zum Erkennen, ob eine Kommunikation zwischen der Remote-Vorrichtung und der lokalen Vorrichtung unterbrochen wurde; und, falls eine Unterbrechung für einen bestimmten Zeitraum erkannt wurde,
- die Steuereinheit der Remote-Vorrichtung dazu konfiguriert ist, die Kommunikationseinheit der Remote-Vorrichtung zu steuern, um nach Wiederaufnahme der Kommunikation zwischen der Remote-Vorrichtung und der lokalen Vorrichtung die während des Zeitraums erfassten Daten in Bezug auf den Benutzer der Remote-Vorrichtung und/oder in Bezug auf die Umgebung des Benutzers der Remote-Vorrichtung erneut zu senden oder einen erneuten Sendeversuch zu unternehmen, und/oder
zumindest eine Texteinheit, die aus der während des Zeitraums von dem Benutzer der Remote-Vorrichtung erfassten Sprache erzeugt wurde, und/oder
zumindest einen Merkmalswert, extrahiert aus den während des Zeitraums erfassten Daten in Bezug auf den Benutzer der Remote-Vorrichtung und/oder in Bezug auf die Umgebung des Benutzers der Remote-Vorrichtung, wobei bevorzugt die zumindest eine Texteinheit und der zumindest eine Merkmalswert synchronisiert und/oder aneinander ausgerichtet sind.

15. System nach einem der Ansprüche 12 bis 15, wobei die Remote-Vorrichtung und/oder die lokale Vorrichtung jeweils eine oder mehrere bevorzugt elektronische Vorrichtungen umfassen, wie etwa ein Smartphone, einen Laptop, ein Tablet, einen Computer, eine Smartwatch, eine Datenbrille oder eine andere tragbare elektronische Vorrichtung, eine Vorrichtung, auf der ein Server ausgeführt wird, und/oder eine Vorrichtung, auf der ein Cloud-Dienst ausgeführt wird.

16. Maschinenlesbares Speichermedium, umfassend Anweisungen, die, wenn sie von einer Vorrichtung ausgeführt werden, die Vorrichtung dazu veranlassen, ein Verfahren nach einem der Ansprüche 1 bis 11 auszuführen und/oder die Vorrichtung dazu veranlassen, die Funktionalität einer Remote-Vorrichtung oder einer lokalen Vorrichtung nach einem der Ansprüche 12 bis 15 zu übernehmen.

## Revendications

1. Procédé de télécommunication entre un dispositif local et un dispositif à distance, comprenant les étapes
- l'acquisition par l'intermédiaire d'un dispositif à distance de données relatives à un utilisateur du dispositif à distance et/ou relatives à l'environnement de l'utilisateur du dispositif à distance, dans lequel les données comprennent de préférence des données vidéo et/ou audio,
- la génération à partir de la parole capturée chez l'utilisateur du dispositif à distance d'au moins une entité de texte, de préférence au moyen d'une unité de conversion,
- l'extraction, au moyen d'une unité d'extraction, d'au moins une valeur de caractéristique des données acquises, dans lequel l'au moins une valeur de caractéristique concerne de préférence un état physiologique de l'utilisateur ou de l'environnement de l'utilisateur ;
- la synchronisation et/ou le co-enregistrement, au moyen d'une unité de synchronisation de préférence d'un dispositif local, de l'au moins une entité de texte avec l'au moins une valeur de caractéristique, de sorte que l'au moins une entité de texte est temporellement liée à l'au moins une valeur de caractéristique, et
- l'affichage au moyen d'une unité de sortie du dispositif local de l'au moins une entité de texte et de l'au moins une valeur de caractéristique, dans lequel l'au moins une entité de texte et l'au moins une valeur de caractéristique sont de préférence affichées de manière alignée dans le temps, et/ou
- le stockage, de préférence dans une mémoire du dispositif local, de l'au moins une entité de texte synchronisée et/ou co-enregistrée et de l'au moins une valeur de caractéristique et/ou des données acquises,
**caractérisé en ce que** le procédé comprend :
- une étape de détection pour savoir si une communication entre le dispositif à distance et le dispositif local a été interrompue ou non ; et si une interruption pour une période de temps a été détectée ou non,
- le renvoi ou la tentative de renvoi après reprise de la communication entre le dispositif à distance et le dispositif local, d'un ou de plusieurs des éléments :
- les données relatives à l'utilisateur du dispositif à distance et/ou relatives à l'environnement de l'utilisateur du dispositif à distance acquises pendant la période de temps, et/ou
- au moins une entité de texte générée à partir de la parole capturée chez l'utilisateur du dispositif à distance pendant la période de temps, et/ou
- au moins une valeur de caractéristique extraite des données relatives à l'utilisateur du dispositif à distance et/ou relatives à l'environnement de l'utilisateur du dispositif à distance acquises pendant la période de temps, dans lequel de préférence l'au moins une entité de texte est synchronisée et/ou co-enregistrée avec l'au moins une valeur de caractéristique.

2. Procédé selon la revendication 1, dans lequel l'étape d'extraction d'au moins une valeur de caractéristique est réalisée par une unité d'extraction du dispositif à distance et/ou l'étape de génération, à partir de la parole capturée chez l'utilisateur du dispositif à distance, d'au moins une entité de texte est réalisée au moyen d'une unité de conversion du dispositif à distance.

3. Procédé selon la revendication 1 ou 2, dans lequel au moins un sous-ensemble des données acquises, comprenant de préférence au moins un sous-ensemble des données vidéo et/ou audio acquises, est transmis par l'intermédiaire d'un premier canal de communication entre le dispositif à distance et le dispositif local et l'au moins une entité de texte et l'au moins une valeur de caractéristique sont transmises par l'intermédiaire d'un deuxième canal de communication séparé entre le dispositif à distance et le dispositif local.

4. Procédé selon l'une quelconque des revendications précédentes, dans lequel l'étape de synchronisation et/ou de co-enregistrement comporte la synchronisation et/ou le co-enregistrement d'au moins deux flux de données continus ou intermittents, de préférence d'un premier flux de données correspondant à la parole capturée chez l'utilisateur du dispositif à distance et comprenant l'au moins une entité de texte et d'un deuxième flux de données comprenant l'au moins une valeur de caractéristique extraite des données acquises sur une base de trame temporelle par trame temporelle, de sorte que pour chaque trame temporelle, la parole capturée chez l'utilisateur du dispositif à distance dans cette trame temporelle et la valeur de caractéristique extraite des données acquises dans cette trame temporelle sont associées l'une à l'autre et/ou liées temporellement l'une à l'autre.

5. Procédé selon l'une quelconque des revendications précédentes, comprenant en outre une étape de génération d'une transcription enrichie de la parole capturée chez l'utilisateur du dispositif à distance en fusionnant un premier fichier correspondant à la parole capturée chez l'utilisateur du dispositif à distance dans un intervalle de temps comprenant au moins une trame temporelle et comprenant au moins une entité de texte avec un deuxième fichier correspondant à un ensemble de valeurs de caractéristique extraites de données acquises dans l'intervalle de temps comprenant au moins une trame temporelle et comprenant au moins une valeur de caractéristique et/ou avec des données relatives à l'utilisateur du dispositif à distance et/ou relatives à l'environnement de l'utilisateur du dispositif à distance acquises dans l'intervalle de temps.

6. Procédé selon l'une quelconque des revendications précédentes, dans lequel la valeur de caractéristique correspond à un paramètre physiologique de l'utilisateur du dispositif à distance et est de préférence une fréquence cardiaque instantanée de l'utilisateur, une fréquence cardiaque moyenne de l'utilisateur, une variabilité de fréquence cardiaque des battements du coeur de l'utilisateur, une fréquence respiratoire moyenne de l'utilisateur, une dilatation des pupilles de l'utilisateur.

7. Procédé selon l'une quelconque des revendications précédentes, dans lequel l'au moins une valeur de caractéristique correspond à un état émotionnel de l'utilisateur du dispositif à distance et comprend de préférence des traits prosodiques concernant la parole capturée chez l'utilisateur du dispositif à distance, en particulier des informations concernant l'intonation, la hauteur tonale, la longueur des sons, l'intensité sonore et/ou le timbre.

8. Procédé selon l'une quelconque des revendications précédentes, dans lequel les données acquises par l'intermédiaire du dispositif à distance relatives à l'utilisateur du dispositif à distance et/ou relatives à l'environnement de l'utilisateur du dispositif à distance peuvent comprendre des données vidéo, des données audio, des données de localisation, des données de mouvement, des données de gyromètre, des données d'accéléromètre, des données de pression, des données physiologiques, des données relatives aux réglages d'un dispositif utilisé pour obtenir des données physiologiques, des données de température, des données d'humidité, des données relatives à l'heure et/ou à la date, des données d'activité telles qu'un décompte de pas, des données relatives à l'âge et/ou à l'ethnicité et/ou aux antécédents médicaux de l'utilisateur.

9. Procédé selon l'une quelconque des revendications précédentes, comprenant en outre l'étape de déduction d'au moins une caractéristique de combinaison, de préférence au moyen du dispositif local, dans lequel la caractéristique de combinaison est déduite en combinant au moins deux valeurs de caractéristique, appartenant de préférence à deux caractéristiques différentes, et/ou dans lequel la caractéristique de combinaison est déduite en combinant au moins une valeur de caractéristique avec au moins un sous-ensemble des données acquises.

10. Procédé selon l'une quelconque des revendications précédentes, comprenant en outre l'étape de comparaison de l'au moins une valeur de caractéristique extraite à une valeur de seuil et, si l'au moins une valeur de caractéristique dépasse la valeur de seuil ou tombe en dehors d'une plage de tolérance entourant la valeur de caractéristique, la mise en signet de l'au moins une entité de texte synchronisée et/ou co-enregistrée avec l'au moins une valeur de caractéristique, dans lequel de préférence également les données acquises à partir desquelles l'au moins une valeur de caractéristique a été extraite sont mises en signet.

11. Procédé selon l'une quelconque des revendications précédentes, dans lequel le dispositif à distance et/ou le dispositif local comprennent chacun un ou plusieurs dispositif(s) de préférence électroniques, tels qu'un smartphone, un ordinateur portable, une tablette, un ordinateur, une montre intelligente, des lunettes intelligentes ou tout autre dispositif électronique portable, un dispositif exécutant un serveur et/ou un dispositif exécutant un service cloud.

12. Système de télécommunication entre un dispositif local et un dispositif à distance, configuré pour réaliser un procédé selon l'une quelconque des revendications 1 à 11, comprenant :
- un dispositif local, et
- un dispositif à distance, dans lequel
le dispositif à distance est configuré pour acquérir des données concernant un utilisateur du dispositif à distance et/ou concernant l'environnement de l'utilisateur du dispositif à distance, dans lequel les données comprennent de préférence des données vidéo et/ou audio, et comprenant
- une unité d'extraction configurée pour extraire au moins une valeur de caractéristique des données acquises, dans lequel l'au moins une valeur de caractéristique concerne de préférence un état physiologique de l'utilisateur ou l'environnement de l'utilisateur,
- une unité de conversion configurée pour générer à partir de la parole capturée chez l'utilisateur du dispositif à distance au moins une entité de texte, et
- une unité de communication configurée pour transmettre au moins un sous-ensemble des données acquises, comprenant de préférence au moins un sous-ensemble des données vidéo et/ou audio acquises, par l'intermédiaire d'un premier canal de communication au dispositif local et pour transmettre l'au moins une entité de texte et l'au moins une valeur de caractéristique par l'intermédiaire d'un deuxième canal de communication séparé du dispositif à distance au dispositif local.

13. Système selon la revendication 12, dans lequel
le dispositif local comprend
- une unité de communication configurée pour recevoir au moins un sous-ensemble des données acquises, comprenant de préférence au moins un sous-ensemble des données vidéo et/ou audio acquises, par l'intermédiaire d'un premier canal de communication en provenance du dispositif à distance et pour recevoir l'au moins une entité de texte et l'au moins une valeur de caractéristique par l'intermédiaire d'un deuxième canal de communication séparé en provenance du dispositif à distance ;
- une unité de synchronisation configurée pour synchroniser et/ou co-enregistrer l'au moins une entité de texte avec l'au moins une valeur de caractéristique, de sorte que l'au moins une entité de texte est temporellement liée à l'au moins une valeur de caractéristique, et
- une unité de commande configurée pour commander une unité de sortie du dispositif local pour afficher l'au moins une entité de texte et l'au moins une valeur de caractéristique et/ou pour stocker l'au moins une entité de texte et l'au moins une valeur de caractéristique, dans lequel l'au moins une entité de texte et l'au moins une valeur de caractéristique sont de préférence affichées de manière alignée dans le temps.

14. Système selon l'une quelconque des revendications 12 à 14, dans lequel le dispositif à distance comprend en outre
- une unité de détection configurée pour détecter si une communication entre le dispositif à distance et le dispositif local a été interrompue ou non ; et si une interruption pendant une période de temps a été détectée ou non,
- l'unité de commande du dispositif à distance est configurée pour commander à l'unité de communication du dispositif à distance pour renvoyer ou tenter de renvoyer après reprise de la communication entre le dispositif à distance et le dispositif local les données relatives à l'utilisateur du dispositif à distance et/ou relatives à l'environnement de l'utilisateur du dispositif à distance acquises pendant la période de temps, et/ou
au moins une entité de texte générée à partir de la parole capturée chez l'utilisateur du dispositif à distance pendant la période de temps, et/ou
au moins une valeur de caractéristique extraite des données relatives à l'utilisateur du dispositif à distance et/ou relatives à l'environnement de l'utilisateur du dispositif à distance acquises pendant la période de temps, dans lequel de préférence l'au moins une entité de texte est synchronisée et/ou co-enregistrée avec l'au moins une valeur de caractéristique.

15. Système selon l'une quelconque des revendications 12 à 15, dans lequel le dispositif à distance et/ou le dispositif local comprennent chacun un ou plusieurs dispositif(s) de préférence électroniques, tels qu'un smartphone, un ordinateur portable, une tablette, un ordinateur, une montre intelligente, des lunettes intelligentes ou tout autre dispositif électronique portable, un dispositif exécutant un serveur et/ou un dispositif exécutant un service cloud.

16. Support de stockage lisible par machine comprenant des instructions qui, lorsqu'elles sont exécutées par un dispositif, amènent le dispositif à réaliser un procédé selon l'une quelconque des revendications 1 à 11 et/ou amènent le dispositif à adopter la fonctionnalité d'un dispositif à distance ou d'un dispositif local selon l'une quelconque des revendications 12 à 15.
